(19) Europäisches Patentamt
European Patent Office
Office européen des brevets

(11) Publication number: **0 234 954 A2**

(12) **EUROPEAN PATENT APPLICATION**

(21) Application number: 87301773.5

(22) Date of filing: 27.02.87

(51) Int.Cl.$^3$: G 07 F 7/10

(30) Priority: 28.02.86 US 834637

(43) Date of publication of application: 02.09.87 Bulletin 87/36

(84) Designated Contracting States: ES

(71) Applicant: INTELLICARD INTERNATIONAL, INC.
120 Plaza Del Sol, Suite 135
Colorado Springs, CO 80907(US)

(72) Inventor: Pavlov, Leonidas Pierre
5332 Cambria Drive
Colorado Springs Colorado 80912(US)

(72) Inventor: Abu-Jbara, Nabil M.
6566 Charter Drive
Colorado Springs Colorado 80918(US)

(74) Representative: Taylor, Derek George et al,
Mathisen, Macara & Co. The Coach House 6-8 Swakeleys Road
Ickenham Uxbridge UB10 8BZ(GB)

(54) **Magnetic card with identification code.**

(57) A unitary, self-contained card (10) and method which does not require interaction with a fixed terminal device to prevent monitoring of confidential information contained within the card (10). The unitary, self-contained card (10) has the ability to verify a personal identification number (PIN) which is entered directly into the card by way of a keyboard (12) without the use of an outside terminal and produce a transaction identification code (TIC) which varies for each transactional use of the card (10) and which can later be verified to determine the validity of the transaction. The card (10) is capable of storing issue and expiration dates, credit limit balances and other card transactional data. The card (10) can be used in conjunction with a validation system (102) with provisions for verifying information recorded on the magnetic indicia (22) of the card (10). The card (10) can also be used with peripheral devices (96) which function to verify the validity of the transaction from the transaction identification code (TIC). The card also allows use of multiple accounts, allows the user to select the PIN, allows credit and debit mode of operation, allows update of credit or debit limit, calculates exchange rates, calculates tips, operates as a clock, operates as a calculator, operates as a broker transaction card to purchase securities and provides codes to access to peripheral devices such as computers or access to security areas.

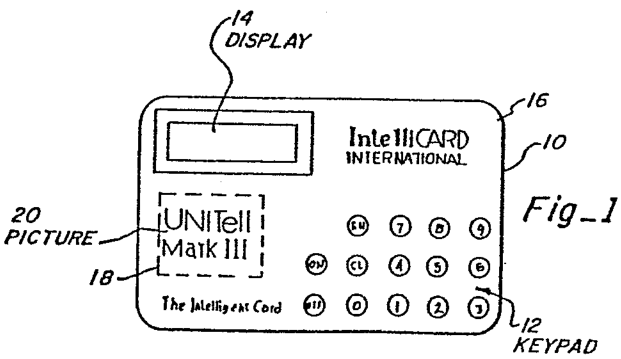

Fig_1

EP 0 234 954 A2

# MAGNETIC CARD WITH IDENTIFICATION CODE

## 1. Field of the Invention

The present invention pertains generally to data processing devices and methods and more particularly to a transaction and identification systems employing a unitary self-contained electronic card.

## 2. Discussion of the Background

The use of transaction cards has increased greatly in the past few years. Transaction cards have been employed as credit cards, debit cards, access control cards to control security by limiting access to designated areas, identification cards, automatic teller machine cards for obtaining money from currency dispensing machines., etc.

Various card systems have been disclosed in the prior art for performing financial transactions, security identification and other related functions. However, the prior art has failed to show an electronic card which is capable of generating a code which is self-verifying to identify the user of the card and verify the authenticity of the transaction.

In accordance with such a system, the verifying number would be transmitted to verify the transaction rather than the personal identification number (PIN). This would allow the user of the card to maintain the PIN in confidence and consequently provide added security to the system.

Additionally, such a verifying number could be used to grant access to a security system such as a computer system or a security access device for obtaining entry to a secure area. By providing a device for generating a verifier number which is self-contained and need not be specially adapted to connection with any particular device and which is sufficiently small to make it easily carried by an individual, would allow great flexibility in the use of such a device.

Such a device could also be employed for performing various financial transactions which have heretofore not been suggested by the prior art. For example, such a device could be used for purchasing securities and could contain a multiplicity of different accounts including both debit and credit accounts for a number of different card companies. By maintaining a running balance in these accounts, such a device could provide the means for instituting a paperless debit account wherein the user of the system would instantaneously be able to obtain a current running balance of the account. Special authorization codes could be provided upon deposit of money in these accounts to update the balance in the account. Additionally, all of these functions could be performed directly through an automatic teller machine (ATM) including transmission of an update limit code to the user of the card upon making a deposit in the ATM machine. Not only would such a system result in a paperless account, but such a system would also minimize human interaction.

Additionally, other functions could be provided by such card. Such a card can function as a calculator, a clock, a device for computing foreign exchange rates and many other desired functions.

None of these functions have been disclosed, or suggested in any manner, by the prior art.

## SUMMARY OF THE INVENTION

The present invention overcomes the disadvantages and limitations of the prior art by providing a unitary self-contained card which is easily portable and is essentially the same size as a standard credit card. The unitary card system of the present invention can be used as a credit card, a debit card, a check verification card, a computer access card for generating a computer access number, an identification card, a currency exchange card for calculating currency exchange amounts, a clock, a calculator, a broker transaction card for calculating transaction amounts and can be programmed for updating credit limits and debit limits, and for calculating tips. The card of the present invention is operated by entering a personal identification number (PIN) for identifying the proper use of the card. The desired mode of operation is then selected by the user through the keyboard on the card.

## BRIEF DESCRIPTION OF THE DRAWINGS

An illustrative and presently preferred embodiment of the invention is shown in the accompanying drawings, wherein:

Figure 1 is a front view of the unitary self-contained card of the present invention.

Figure 2 is a back view of the unitary self-contained card illustrated in Figure 1.

Figure 3 is a schematic block diagram of the components disposed in the unitary self-contained card of the present invention.

Figure 4 is a schematic diagram illustrating the layout of the components of the unitary self-contained card of the present invention.

Figure 5 is an end view assembly drawing of the device illustrated in Figure 4.

Figure 6 is a schematic diagram of the electronic components of the unitary self-contained card of the present invention.

Figures 7, 8, 9, 11 and 12 are flow diagrams illustrating the operation of the unitary self-contained card of the present invention.

Figure 10 is a schematic diagram illustrating the manner in which the unitary self-contained card of the present invention is manufactured.

Figure 13 is a schematic diagram illustrating use of the unitary self-contained card of the present invention with a peripheral device.

Figure 14 is a schematic diagram illustrating use of the unitary self-contained card of the present invention with a card verification device.

Figure 15 is a schematic drawing illustrating an alternative manner in which the card of the present invention may be implemented.

Figure 16 is a schematic drawing illustrating another alternative manner in which the card of the present invention may be implemented.

Figure 17 is still another alternative manner in which the card of the present invention may be implemented.

Figure 18 is schematic drawing illustrating the general manner in which a printed circuit board for use in the present invention may be implemented.

Figure 19 is a rear view of the printed circuit board of Figure 18.

Figure 20 is a schematic illustration of one alternative method of assembling the card of the present invention.

Figure 21 is a plan view of the frame and web portion of the card support structure illustrated in Figure 20.

Figure 22 is a cross-sectional view of the frame and web portion illustrated in Figure 21.

Figure 23 is a schematic circuit diagram illustrating one alternative method of implementing the present invention.

Figure 24 is a schematic flow diagram of the PIN verification program of the present invention.

Figure 25 is a schematic flow diagram of the PIN selection program of the present invention which allows the user of the card to select and enter a PIN.

Figures 26, 27 and 28 disclose the mode selection program of the present invention wherein the user of the card selects the mode of operation.

Figures 29 and 30 comprise a schematic flow diagram of the credit authorization program.

Figures 31 and 32 comprise a schematic flow diagram of a debit authorization program.

Figures 33, 34 and 35 comprise a schematic flow diagram of the limit update program which allows the user of the card to update a credit or debit balance to insertion of a code.

Figures 36 and 37 disclose a schematic flow diagram of the currency exchange program.

Figure 38 discloses a schematic flow diagram of the TIP program.

Figure 39 discloses a schematic flow diagram of the clock program.

Figures 40 and 41 disclose a schematic flow diagram of the calculator program.

Figure 42 discloses a schematic flow diagram of the broker program.

Figure 43 comprises a schematic diagram of one alternative method of programming the card of the present invention to produce one or more transaction identification codes for entry into an external device for the purpose of identification and/or access to the external device which can comprise a computer.

Figure 44 is a schematic flow diagram illustrating one method in which an external device can be programmed to read the transaction identification codes provided by a card programmed in the manner illustrated in Figure 43 to grant access to the external device.

Figure 45 is an alternative method of granting access to the external device which can be used in conjunction with the methods illustrated in Figures 44, 47, 49 and 50.

Figure 46 is a schematic flow diagram of an alternative method in which the card may be programmed to generate a transaction identification code.

Figure 47 comprises an alternative method in which an external device such as a computer can be programmed to verify a transaction identification code generated by a card programmed in a manner illustrated in 46.

Figure 48 comprises a schematic flow diagram illustrating an alternative manner in which the card may be programmed to generate one or more transaction identification codes for entry into an external device.

Figure 49 comprises a schematic flow diagram illustrating the manner in which an external device such as a computer or access control device, is programmed to read transaction identification codes produced by a card programmed in a manner set forth in Figure 48.

Figure 50 comprises a schematic flow diagram of an alternative method of programming an external device, such as a computer or access control device, for verifying transaction identification codes produced by a card programmed in the manner set forth in Figure 48.

Figure 51 comprises a schematic flow diagram of an alternative method of programming a card to generate a transaction identification code to grant access to an external device such as a computer of access control device.

Figure 52 comprises a schematic flow diagram of a method of programming an external device for verifying transaction identification codes produced by a card programmed in the manner set forth in Figure 51.

## DETAILED DESCRIPTION OF THE INVENTION

Figure 1 illustrates the unitary self-contained card 10 of the present invention. Card 10 can take the form of standard size transaction card such as a credit or debit card having a length in the horizontal direction of 3.375 inches, a height in the vertical direction, as illustrated in Figure 1 of 2.125 inches, and a thickness, without including the embossing height of 0.030 inches. The card also has rounded corners with a 0.125 inch radius. Other implementations of card 10 have a thickness of 0.042 inches and 0.060 inches not including embossing. The thickness of the card depends upon the components utilized. Card 20 includes a keyboard 12 for entering data and a display 14 for displaying data and prompting additional entries. Identification legends 16, 18 identify the card manufacturer and issuing agency. Alternatively, a picture 20 of the card carrier can be placed in the position of legend 18.

Figure 2 is a back view of the unitary self-contained card illustrated in Figure 1. As illustrated in Figure 2, card 10 includes machine readable indicia such as magnetic stripe 22 which is commonly used on standard credit and debit cards. Such machine readable indicia can take the form of optical, magnetic, or any other machine readable data, but for purposes of simplicity will be referred to herein as a magnetic stripe. A signature line 24 is additionally included on the reverse side below magnetic stripe 22. Embossing also appears on the card 10 in the standardized embossing format. The embossing appears as embossed account number 26, embossed expiration date 28 and embossed name 30. Magnetic stripe 22 and embossing 26, 28, 30 all appear in accordance with the ANSI financial transaction card embossing and magnetic stripe specifications so that the card can be used in conventional consumer transactions.

Figure 3 is a schematic block diagram of the electrical components of the present invention disposed on card 10. As illustrated in Figure 3, keypad 12 and display 14 comprise two of the electrical components illustrated in Figure 1. Additionally, power source 32 is disposed within the structure of card 10 as well as microprocessor 34 and input/output port 36. Each of these components is constructed to be sufficiently thin to provide a card with a thickness of 0.030 inches not including the embossing. This corresponds to the standard thickness for a credit card.

Figure 4 illustrates an example of a layout of the components illustrated in Figure 3 on the unitary self-contained card 10. Power source 32 is connected to printed circuit board 38 by way of connectors 42, 44. Printed circuit board 38 has a series of connectors for connecting the pins of microprocessor 34, liquid display crystal 14, connectors of keyboard 12 and discrete components 46. Printed circuit board 38 also connects microprocessor 34 to input/output port 36. Card backing 40 provides a surface for supporting printed circuit board 38. A card top 48, as illustrated in Figure, is laminated over printed circuit board 38 and card backing 40 to provide a single card structure. Keypad 12 includes the 10 digits required for numerical entries as well as an enter button 50, a clear button 52 and on-button 54 and an off-button 56. Discrete components 46 comprise resistors and capacitors necessary to operate the circuitry illustrated in Figure 4.

Figure 5 is a schematic end view assembly drawing of card 10. Card 10 comprises a card backing 40, printed circuit board 38 and a card top 48. These pieces are laminated together using an adhesive which is sufficiently strong to cause physical alteration and destruction of the card upon disassembly. Additionally, power source 32 can comprise a wafer-type battery which becomes destroyed upon attempted disassembly of the laminated layers illustrated in Figure 5, resulting in inoperability of the circuitry of card 10 and destruction of memory content of microprocessor 34.

Card backing 40 comprises a structural layer on which the embossing 26, 28, 30 is placed. Card backing 40 has sufficient strength and thickness to protect the electronic components on printed circuit board 38 during use of the card 10 in an imprinting machine. Card backing 40 also provides sufficient vertical displacement of the electronics from the embossing to provide protection during imprinting. Alternatively, the circuitry of printed circuit board 38 can be laterally displaced from the location of the embossing on card backing 40. Microprocessor 34 has arithmetic and logical computation capabilities, program memory wherein a device control program is stored and data memory used by the control program as a scratch pad to store both confidential and non-confidential information pertaining to card 10. Microprocessor 34 can be implemented to perform the functions disclosed herein and can additionally operate as a clock and/or a calculator in combination with the functions programmed to be performed herein. The semiconductor chip utilized in accordance with the present invention has sufficient storage capacity to also operate as a calculator and/or clock. Alternatively, a separate integrated circuit chip 37 could be disposed in the card to perform clock and/or calculator functions, such as illustrated in Figure 3. Any commercially available chip used for performing both calculator and clock functions can be used.

As stated above, the data memory can be of the volatile type which is erased whenever power is removed from the circuit or the non-volatile types such as an electronically erasable programmable read only memory (EEPROM). The microprocessor contains circuitry for generating the proper voltage levels to drive the liquid crystal display 14. Power source 32 can comprise a three volt lithium cell for use with volatile and non-volatile type memories in microprocessor 34, or a photovoltaic cell (solar cell) if a non-volatile type of memory is used.

Figure 6 is a schematic diagram of circuitry which can be used in the unitary self-contained card 10 of the present invention. As illustrated in Figure 6, a microcomputer is utilized such as NEC 7502 available from NEC Electronics Inc., 10080 North Wolfe Road, SW3, Suite 290, Cupertine, California 95014. The NEC 7502 has dimensions of 0.97 inches by 0.74 inches by 0.09 inches thick. Other microprocessing devices are available which have a smaller thickness and which are suitable for producing a card having a total thickness of 0.030 inches not including the embossing.

Similarly, liquid crystal display 14 can comprise an Epson B 615 LCD having a thickness of 0.064 inches. The Epson B 615 comprises an eight digit triple multiplexed seven segment liquid crystal display having low power consumption characteristics. Alternatively, eight digit, seven segment liquid crystal displays are available which have a thickness of 0.020 of an inch to allow construction of a card having a thickness of 0.030. Liquid crystal display 14 is connected to a microprocessor 34. The ground connection of microprocessor 34 is connected to input $V_{SS}$. Ground is also supplied to input/output port 36 by way of connector 52. Input/output port 36 has three port connection which provide a means for programming microprocessor 34 with both program data and user data. Alternatively, program data can be supplied in read-only memory during construction. The positive output of three-volt lithium battery 32 is connected to a series of one hundred kohm and two hundred kohm resistors and 0.01 microfarad capacitors which are coupled to microprocessor 34. These discrete components provide for proper biasing and operation of microprocessor 34.

The positive output of three-volt lithium battery 32 is also applied to on-switch 54 and off-switch 56. Off-switch 56 is shunted to ground through 10 kohm resistor 68 so that a signal is applied to input 70 of microprocessor 34 to power down microprocessor 34. Similarly, on-switch 54 is shunted to ground by 10 input 74 of microprocessor 34 to power-up and reset microprocessor 34 for operation. A series of inputs 76 are applied to microprocessor 34 from keypad 12 which function as the data entry inputs as well as the enter and clear signals. Resistors 78 are connected to keypad 12 to provide proper operation of keypad 12. Capacitor 80 and resistor 82 provide the proper rc time constant for clock inputs 84, 86 of microprocessor 34.

Figure 7 is a flow diagram illustrating the function of the circuitry of Figure 6. As shown in Figure 7, when the device is reset by pressing on-key 54, the control program checks to see if the card has been programmed for a specific user; if not, a check is made to determine if the card is connected to a program device. If such a device is connected to the card, then the programming of the card proceeds as illustrated in Figure 8. If the card has already been programmed, then a check is made by the program to determine if the card has been invalidated because the number of allowed attempts to enter the personal identification code (PIN) was exceeded in a previous transaction. If it is determined that the card is invalid, a message is then displayed on card display 14 indicating the card is invalid. The card is then powered down and rendered inoperative for further use except by an authorized agency. If, however, the card is still valid because the number of entries of the PIN has not been exceeded, a check is made to determine if the card is being used after the issue date and before the expiration date. If it is determined that the card has expired in a previous transaction, a message is displayed on display 14 indicating the card is expired. The card is then powered down.

If, however, the card has not expired, the device proceeds by prompting the card holder to enter his personal identification number (PIN). Prompting is provided by displaying a message (ENTER PIN) on display 14. The card user is then expected to enter the personal identification number (PIN) using keypad 12. The entered personal identification number (E-PIN) is then compared with a personal identification number stored in memory (S-PIN) during programming of the device. If there is not a match between the E-PIN and S-PIN, the number of consecutive wrong guesses is incremented by one. A check is performed to determine if the maximum allowable number of guesses has been exceeded. If it has been, the card is invalidated by setting the invalid flag and a message is displayed on the card display indicating that the card is invalid. The card is then powered down and disabled from further use.

If, however, the maximum allowable number of attempts to enter the personal identification number has not been exceeded, the program returns to prompt the user to enter the personal identification number (E-PIN) by displaying "ENTER PIN" on display 14. If, however, the E-PIN and S-PIN match, then the card is valid and the program proceeds by displaying the card account number that was programmed into the data memory. Display of the card account number allows visual comparison of the account number stored in data memory with the account number embossed in the back of the card. Comparison of the two account numbers prevents fraudulent tampering of the account number embossed on the card since the embossed number is the number which will be used for billing purposes in the hard copy in the imprinting machine.

After the account number stored in memory is displayed, a transaction identification code (TIC) is computed by microprocessor 34 and displayed on display 14. Computation of the transaction identification code (TIC) is accomplished in the following manner. First, microprocessor 34 produces a transaction key number (TKN) which varies with each transactional use of the card. This transaction key number (TKN) can be incremented in a counter upon proper entry of the personal identification number (E-PIN) or generated in any desired manner with the only requirement being that it does not remain constant. The transaction identification code (TIC) is computed as a function of transaction key number (TKN). Since the transaction key number (TKN) varies for each transactional use of the card, the transaction identification code (TIC) also varies for each transactional use of the card. In credit and debit transactions, the transaction identification code (TIC) can also be entered in an automatic teller machine (ATM) or card reader to verify the validity of the transaction. Verification can be made in this manner without coupling on-line with a host computer since all of the information needed to verify the transaction is included in both the card and the ATM or card reader (e.g., credit balance, verification algorithm, etc.). The function from which the transaction identification code (TIC) is generated can comprise an algorithm stored in microprocessor 34. The algorithm (N) stored in microprocessor 34 functions to compute an algorithmic code number (ACN) which is combined or scrambled with the transaction key number (TKN) in a predetermined order (K) to produce the transaction identification code (TIC). By knowing both the preselected order of scrambling (K) of the algorithmic code number (ACN) and transaction key number (TKN), as well as the algorithm (N), the transaction identification code (TIC) can be checked (recalculated) in a manner similar to a parity check to determine the validity of the transaction identification code (TIC). This prevents fraud by merchants who attempt to use stolen or forged credit cards to bill financial institutions for purchases that did not take place since the merchants will not be aware of the algorithm or the scrambling order and will be unable to produce valid transaction identification codes (TIC). A peripheral device such as an automatic teller machine, access control device, magnetic stripe card reader, or other device, can also determine the validity of the transaction identification code (TIC) to validate the use of the card in a transaction. Such devices would not require entry of the personal identification number (PIN) for validating operation since the algorithm (N) can be stored in these devices. The algorithm (N) utilized should be of a reasonable complexity so that the resulting code cannot be deduced by observing several codes generated by different transactions. Standard encryption and decryption techniques can be used, e.g., DES.

The algorithm (N) can also be a function of the account number or the personal identification number (PIN) to add a second degree of encryption to the algorithmic code number (ACN). After the transaction identification code (TIC) is displayed, a prompting signal comprising "DATE" is displayed to prompt the entering of the current date, i.e., the date of the transaction.

Figure 8 is a continuation of the flow diagram of Figure 7. After the prompting signal "DATE" is displayed on display 14, the date of the transaction is entered in keypad 12. For security purposes, the card 10 is normally handed to the merchant or other authorized person for entry of the date. If the clear key 52 is pressed at anytime during the entry of the date in keypad 12, microprocessor 34 interprets this as an operator error and the program returns to the "DATE" prompt. When the date is entered, the program compares the date of issue that is stored in the card's data memory during programming. If the entered date is greater than the expiration date, the card has expired and the flag is set in data memory to indicate expiration. The card then displays an "EXPIRED" message on the display and the card is powered down. If the date is less than or equal to the expiration date, a "GOOD" message is displayed in the card's display indicating that the card is completely valid and the transaction is complete.

Figure 9 is a flow chart illustrating the method in which the semiconductor data memory of microprocessor 34 is programmed with confidential or non-confidential information. Programming occurs in programming machine 90 as illustrated in Figure 10.

As illustrated in Figure 10, the magnetic stripe 22 of card 10 is programmed with both confidential and non-confidential information in magnetic stripe recorder 902. This occurs prior to application of the card top 48. Card 10 is then physically transferred to programming machine 90 which accesses the microprocessor 34 through input/output port 36 which remains exposed since card top 48 has not been applied to printed circuit board 38 mounted on card backing 40. Once the microprocessor 34 is programmed in accordance with the flow diagram illustrated in Figure 9, the card is then physically transferred to a laminating machine 94 where card top 48 is applied as a laminate structure to produce a finished card.

The process of programming the card, as stated above, is disclosed in Figure 9. Since it is desired that card 10 be used by a particular user, programming machine 90 function to read the confidential and non-confidential information which has been stored on the magnetic stripes by the conventional magnetic stripe recorder 92. Programming machine 90 translates the data it reads from the magnetic stripe 22 into binary form and transmits this information to microprocessor 34 which functions to store the data in data memory after it initializes such memory. After all of the data is stored in memory, microprocessor 34 verifies that the data matches with that contained in the programming machine. This is accomplished by having the microprocessor read the data from the data memory and from the programming machine memory through the input/output port 36. The data is compared and if positive verification is not provided, the programming procedure is repeated. If the data does favorably compare, the device is initialized by setting the invalid flag to valid, the expired flag to not expired, and the number of attempts to enter the personal identification number (PIN) to zero. Programming machine 90 then erases the confidential data from magnetic stripe 22 to prevent unauthorized access to the confidential information. After the erasure of confidential information is verified, the programming process is completed and an initialization flag is set to prevent further programming. This prevents unauthorized reprogramming of the card 10. Since the magnetic strip 22 contains four separate lines of magnetic data and, presently, the fourth line is not used, the confidential data is stored on the fourth line. This allows easy erasure of the confidential data without the risk of erasure of the non-confidential information which remains on the other three magnetic stripes. Again, magnetic stripes are used for exemplary purposes only and any desired machine readable indicia could be used in place of the magnetic stripe information.

Figure 11 comprises a flow chart disclosing an optional process to be performed by microprocessor 34 in the flow diagram illustrated in Figure 8. As disclosed in Figure 11, a prompt signal "AMOUNT" is generated on display 14 to prompt entry of the amount of the transaction into keyboard 12. The transaction amount is then read and stored in the microprocessor memory. This transaction amount is then compared with the credit limit stored in the microprocessor and if greater than the credit limit, a display is generated indicating "INVALID AMOUNT". The card is then powered down and the program ended. If the transaction amount is less than the credit limit, a display is generated "VALID AMOUNT" and a new credit limit balance is generated by subtracting the transaction amount from the credit limit balance. The card is then powered down and the process ended.

Figure 12 comprises a flow diagram disclosing the generation of a transaction identification code (TIC) wherein it is assumed that the transaction key number (TKN) is a three digit decimal number "KLM". Figure 12 illustrates the functions performed in the "COMPUTE TIC"step, illustrated in Figure 7. "N" comprises an algorithm which is a function of the transaction key number (TKN). The number produced by solving the algorithm (N) is the algorithmic code number (ACN) which can be expressed as a three-digit number "XYZ" where "XY" and "Z" are decimal digits. The account number assigned to the card is expressed as a three-digit number "ABC", while the personal identification number (PIN) is expressed as a three digit number "DEF". Figure 12 comprises one example of the implementation of an algorithm to produce a transaction identification code (TIC). Initially, an algorithmic code (N) is computed by using the first digit "A" of the account number and multiplying it by the transaction key number (TKN) and adding that product to the transaction key number (TKN) divided by the second by the second digit "B" of the account number and then subtracting the third digit "C" of the account number. The algorithmic code number (ACN) is then converted to binary coded decimal number (BCD) format to produce a three digit decimal number "XYZ". The algorithmic code number (ACN) can also be computed by an algorithm (N) which is dependent upon the personal identification number (PIN) "DEF" rather than the account number "ABC" to add to another level of security to the system. Of course, any desired manner of encoding including encryption and enciphering techniques can be used in accordance with the present invention. For example, standard encryption techniques such as the well-known DES encryption technique can be used for generating the transaction identification code (TIC).

The manner in which the transaction identification code (TIC) is scrambled is then determined by the personal identification number (PIN). If the personal identification number (PIN) is less than a predetermined number such as 100, the transaction identification code (TIC) is scrambled in accordance with a first predetermined scrambling arrangement. If the personal identification number (PIN) is less than 200 and greater than 100, the transaction identification code (TIC) is scrambled in a second predetermined scrambling order, as illustrated in Figure 12. This process continues until the personal identification number (PIN) is compared with a number "G" which is the maximum allowed value allowed for the personal identification number (PIN). If it is less than "G", a second to last scrambling order is used, and it it is equal to "G", a last scrambling order is used. Consequently, by knowing the scrambling order, the transaction key number (TKN) can be extracted from the transaction identification code (TIC) can be verified by computing the algorithmic code number (ACN) from the algorithm (N) stored in microprocessor 34. Alternatively, the scrambling technique described above can alternatively be replaced with any desired method of encoding to provide a second generation of encoding to further protect against deriviation of the algorithm.

Figure 13 is a schematic illustration of a peripheral device 96 which can comprises an automatic teller machine and access control device or other peripheral device. Peripheral device 96 includes a screen 98 for displaying information and a keypad 100 for entering information. In accordance with the present invention, the peripheral device 96, when employed as an access control device, can be used with or without a security guard. When used in conjunction with a security guard, the security guard verifies the correct entry of the personal identification number (PIN) on the unitary self-contained card 10 as well as the valid expiration dates of the card. The guard also compares the account number, e.g, employee serial or staff number stored in memory with the account number appearing on the card. The term "account number" is herein defined as any identifying number associated with the card such as an employee identification number, and is not intended to be limited to a commercial account number. The security guard then inserts the card 10 in peripheral device 96 and compares the account number stored in memory in the card 10 with the account number read from on the magnetic stripe 22 and displayed on the screen 98 of the peripheral device 96. The transaction identification code (TIC) can also be entered through keypad 100 together with the personal identification number (PIN) to verify the personal identification number (PIN) with the account number read from the magnetic stripe to verify the authenticity of the transaction identification code (TIC). Alternatively, the PIN need not be entered in keyboard 100 of peripheral device 96 to verify the TIC if the PIN is not used in the algorithm (N) to encode the TIC. In other words, the card can be inserted in peripheral device 96 so that the account code for the card 10 is read from the magnetic stripe. The account code can then be used to identify the algorithm, scrambling codes, etc., used to encode the TIC. The algorithm, scrambling codes, etc. can either be stored in peripheral device 96 or accessed from a host computer via a communication link. Since there is no requirement to enter the PIN in the peripheral device, the PIN need not be known by anyone other than the owner of the card. In this regard, the present invention allows the card user to program the card with a PIN selected by the card user which need not be known by anyone else including any financial institution. The peripheral device can also compare account number of the card with stored account numbers to determine the validity of the card account number. In this manner, a great deal of security can be provided through the use of the unitary self-contained card 10 in conjunction with a peripheral device.

When peripheral device 96 is utilized as an automatic teller machine, both the personal identification number (PIN) and the transaction identification code (TIC) are required to be entered through keypad 100 to obtain money from the automatic teller machine. The automatic teller machine functions to compare the account number read from the magnetic stripe 22 on card 10 with stored account numbers to validate use of the card 10. Additionally, the personal identification number (PIN) and the transaction identification code (TIC) function to verify proper use of the card 10. Alternatively, the processes disclosed in Figures 40 through 47 for identifying the user of the card can be employed to eliminate the necessity for inserting the PIN into the ATM.

Figure 14 illustrates a card validation device 102. Card 10 can be inserted through card reader slot 104 which reads the magnetic stripe from the back of the card. A person validating the card can compare the account number appearing on screen 106, which is read from the magnetic stripe of card 10, with the account number appearing on the display 14 of the card and the embossed number of the card. If all three account numbers correspond, the account number read from the card can be compared electronically with the stored account numbers to validate use of card 10.

Keypad 108 can additionally be used for entering the transaction identification code (TIC) and/or the personal identification number (PIN) to verify proper use of card 10 by verifying the validity of the transaction identification code.

Figure 15 discloses the front surface of an alternative configuration of the credit card device of the present invention. Card 110 includes a keypad 112 which utilizes a series of membrane switches incorporated in a flexible upper plastic casing. The keypad includes various functions such as "on", "off", "clear", "enter", as well as numeral indications 0 through 9 and a decimal point. Separate functions also exist on the 0 through 9 key pad and the decimal point key pad. These are defined as follows:

VISA -- use of the card as a VISA card.

MC -- use of the card as a MasterCard card.

AE -- use of the card as an American Express card.

CR -- use of the card as a credit card for VISA, MasterCard or American Express.

DB -- use of the card as a debit card for VISA, Master Card or American Express.

CKV -- use of the card for check verification.

CLK -- use of the card as a clock.

ID -- use of the card to generate one or more identification numbers (transaction identification

codes). These numbers can be entered into the keyboard of an external device such as a computer terminal or a security device, to gain access to a secure area.

TIP -- use of the card to calculate a tip and add the tip to the total bill.

EXCH -- use of the card to compute exchange amounts for foreign currency upon entry of an exchange rate.

LIM -- use of the card to enter new limit information such as credit or debit limits or check verification limits.

Card 110 additionally has a display 114 for displaying information generated within the microprocessor of the card. A picture 115 can also be provided within the laminated layers of the card to provide additional information to identify the user of the card.

Figure 16 shows an alternative embodiment of a card 116 having a keypad 118 which includes 20 keys rather than the 15 keys of keyboard 112 (Figure 15). The additional 5 keys of keypad 118 provide the following additional functions which can be performed by the card:

CALC -- Use of the card as a calculator.

\+ -- Addition operations in the calculator mode.

\- -- Subtraction operations in the calculator mode.

x -- Multiplication operations in the calculator mode.

: -- Divisional operations in the calculator mode.

BROK -- Use of the card to compute equivalent decimal amounts for fractional amounts and vice versa. The Broker button can be used to compute stock values and verify a security transaction.

Card 116 also includes a display 120.

Figure 17 shows an alternative configuration of the present invention wherein the card 122 is configured in a vertical orientation. Keypad 124 comprises a simpler version of the 15 pad keypad 112 of card 110. Display 126 is located along the top portion of the card 122.

A simplified description of the overall operation of the card follows with regard to card 116, illustrated in Figure 16, since card 116 includes all of the operational functions performed by cards 110 and 122. These operational functions apply equally as well to the cards of Figures 15 and 17.

As illustrated in Figure 16, operation of the card is initiated by depressing "ON" button 128. If the card has not been previously programmed with a personal identification number (PIN), a prompt will appear on display 120 such as "ENTER PIN SELECTION CODE". A PIN selection code is provided with the card mailed in a different envelope at a different time. Alternatively, the PIN selection code can be provided by an ATM. The PIN selection code is then entered through the keyboard 118 by the operator of the card and if correct, another prompt appears on display 120 directing the operator to select a six digit PIN. After the six digit PIN has been inserted through the keyboard, the display 120 will indicated "NEW PIN IS" and then display the new PIN number. In this manner, the operator of the card can select his own PIN without anyone knowing his identity. Consequently, the next time the "ON" button is depressed to initiate operation of card 116, a prompt will appear on display 120 to "ENTER PIN". Upon entering the PIN through keypad 118, the card will again display the prompt "ENTER PIN" if the PIN was entered incorrectly. The user will be allowed a predetermined number of tries to enter the PIN correctly. If the user exceeds the predetermined number, the card will be disabled for a predetermined period such as half an hour, or until an authorized person reactivates the card. Reactivation can also be accomplished by providing codes through an ATM or a card reader device.

If the PIN has been entered correctly, a prompt "MODE KEY" will appear on display 120. At this point any of the mode keys such as VISA, MC, AE, CR, DB, CKV, CLK, TIP, BROK, LIM, EXCH, ID, or CALC can be selected. If either the VISA mode key 130, MasterCard mode key 132, or American Express mode key 134 is selected, a prompt will appear to select either the credit, debit or check verification mode keys. The account number of the card will then be displayed to allow comparison with the embossed account number on the card to insure that the embossed number has not been fraudulently altered. Display 120 will then generate a prompt to enter the amount of the transaction. The operator then enters the amount of the transaction through keypad 118 and pushes the enter button 136. The microprocessor within card 116 then compares the amount entered with the limit balance for the selected account. If a sufficient balance exists in the account, a transaction identification code (TIC) is displayed on display 120. If an insufficient balance exists, the display 120 displays a phone number to call and a "MODE KEY" prompt appears on the display so that another account can be selected without the necessity of reentering the PIN.

Once the TIC is displayed on display 120, it can be used in several different ways. The TIC can be recorded directly upon a paper sales receipt so that the transaction can be verified at a later date. If a consumer questions a particular transaction which appears on his monthly statement, the transaction can be verified by the bank by examining the transaction identification code. If the transaction identification code does not properly verify the transaction, the merchant will not be credited with the transaction.

If the merchant does not wish to run the risk of being credited for a transaction, he may wish to purchase a verification device for verifying the transaction at the point of sale. Such a verification device can be a simple card reader, such as card reader 102 illustrated in Figure 14. To verify the transaction, the merchant passes the card 116 through slot 104 of card reader 102 such that the account number is read from the magnetic stripe on the card. The transaction identification code which appears on the display 120 is then manually entered through keyboard 108 on card reader 102. Card reader 102 can either contain sufficient information to verify the transaction, e.g., the algorithm (N) and scrambling number (K) associated with the account number read from the magnetic stripe, or the card reader 102 can be connected on line to a host computer for verification. The verification which takes place relates to the verification of the TIC. The TIC comprises a self-verifying number if the algorithm (N) and manner of scrambling is known. Verification of credit limit balances and other information is not performed in the external device, but rather, is maintained with the card for both credit and debit transactions. As described previously in accordance with Figure 14, screen 106 can display the account number read from the magnetic stripe of the card 116 for comparison with the embossed number on the card. The merchant must also record the transaction identification code on the transaction receipt to allow for later verification, if required. A verification device such as card reader 102 prevents an individual from producing a fraudulent card which is capable of producing a number which appears as a transaction identification code. Of course, if the consumer questions a particular transaction and the transaction identification code cannot be later verified, the bank may either accept responsibility and pay the merchant or charge the merchant, depending upon the particular arrangement which has been made with the merchant. In any event, merchant fraud can be easily detected by a bank if a number of unverifiable transactions have occurred. In this manner, the bank may place legal responsibility upon the merchant for payment of these transactions but may forgive the merchant if it appears that they resulted through a mistake in recordation.

The check verification mode of operation can operate on a predetermined check verification limit, or it can operate from the debit limit which is stored in the card itself in any one of the accounts.

If the clock function key 144 is depressed when the "MODE KEY" prompt appears, display 120 will display the current time in hours, minutes and seconds. Other functions can also be included such as an alarm and other standard clock functions.

If the TIP key 146 is depressed after the TIC number appears on the display, a prompt will appear to enter the tip percentage. The percentage amount can then be entered into the keyboard such as 15 for 15%. The tip amount is then displayed on display 120. If the plus key 146 is then depressed, the entire amount of the transaction including the tip is displayed.

If the BROK function key 148 is depressed when the "MODE KEY" prompt appears, the broker account number will appear and a prompt to enter the fractional value of the stock and the number of shares will appear. The card then computes the amount of the transaction and prompts appear to select the account to which a purchase is to be charged. The amount of the transaction is subtracted from the account limit of the account selected and a TIC is generated on the display to authorize the transaction.

If the limit function key 150 is depressed after the "MODE KEY" prompt appears on display 120, the limit update program is activated to update the limit in the specified account whether it is a VISA, MasterCard, American Express, credit or debit account. Then limit update codes provided by the bank are entered through the keypad in the card to update the credit or debit limit in the selected account. After these amounts are entered by way of the encoded number received from the bank, the new limit amount is displayed on the card.

If the EXCH mode key 152 is depressed after the "MODE KEY" prompt appears on display 120, a currency exchange program will be activated. Prompts will appear for entering the exchange rate of the currency and the amount to provide an equivalent amount in a different currency. The currency exchange program has the ability to store a previous exchange rate so that this amount need not be memorized and need not be entered each time an amount is to be calculated. Also, the currency exchange program can be coupled to credit and debit authorization programs to compute equivalent local currency amounts for foreign transactions so that equivalent local currency amounts are subtracted from the limit balances.

If the ID key 154 is depressed after the "MODE KEY" prompt appears on display 120, the identification program is addressed. The identification program can be used for identifying the user of the card to other people or external devices such as computers, security access devices, or other such devices. When used in conjunction with a computer system, an algorithm (N) corresponding to the algorithm stored in the card under the ID program is stored in the computer system so that the TIC can be verified. One or more TICs may be provided by the card. Alternatively, a file of authorized TICs may be stored in the computer for comparison with one or more TICs generated by the card. Additionally, the sequence of the TICs generated by the card may also be used to verify the user, i.e., the sequence of TICs provided by the card must correspond to the sequence of TICs stored in the computer. Also, TICs which have been previously used may be erased from the memory file of the computer to avoid further use so as to further prevent fraud resulting from tapped communication lines or other instances that could result in authorized TICs being placed in the wrong hands. By eliminating TICs which have already been used, a substantial amount of fraud can be prevented.

If the calculator mode key 156 is depressed after the "MODE KEY" prompt appears on display 120, the card 116 functions as a standard calculator capable of performing addition, subtraction, multiplication and division operations, as indicated by function buttons 146, 158, 160 and 150, respectively.

Figures 18 and 19 illustrates the printed circuit board associated with the electrical components which are used in the card of the present invention. Figure 18 illustrates a plurality of keypad connectors 162 formed from a conducting material on the surface of the printed circuit board substrate 164. The keypad traces 162 are aligned with the keypad keys, such as illustrated in card 112, Figure 15. By depressing the plastic surface of the keypad, as illustrated in Figure 15, an electrical connection is produced as a result of conductive ink on the back side of the plastic layer of the keypad which connects adjacent portions of the pad traces 162. The various conductors illustrated in Figures 18 and 19 are used to connect chip connector 180, connectors for capacitors placed in openings 181, 182, 183, and 184, connectors for a resistor placed in opening 185, battery connector 186 and LCD connectors 188. Printed circuit board 164 is a double-sided printed circuit board having plated through holes and gold plated conductors on both sides. Openings 181, 182, 183, 184 and 185, as illustrated in Figure 19, provide a sufficient amount of space to mount the microprocessor chip, the capacitors and the resistor without exceeding the thickness limitation of the card, i.e., an overall thickness of 0.034 inches. Standard tab technology is used to connect the microprocessor chip to chip carrier 180. Programming pins 189 provide a means for programming the microprocessor chip after it is mounted in PC board 164 and prior to lamination within the card. Program flags are set during the initial programming process to prevent subsequent programming of the microprocessor chip. Additionally, the laminated layers over programming pins 189 provide some deterrence in subsequent programming.

Figure 20 is an exploded view illustrating the assembly of the card of the present invention. Printed circuit board 164 is mounted in a frame 190 having a web portion 192 with openings 194, 196 and 198 formed therein. Opening 194 provides a window in web portion 192 to allow room for chip carrier 180, microprocessor chip 200, capacitor chips 168, 170, 172, 174 and resistor chip 166. Window 196 provides space for LCD display 202. Window 198 provides an opening for the battery mounted in the card of the present invention. Film connector 204 comprises a polyester sheet with carbon traces to connect the PC board pads 188 (Figure 18) to connectors on LCD display 202. LCD display 202 is capable of displaying a number of alphanumeric characters 206 as well as an area 208 wherein enunciator displays in area 208. Enunciator displays comprise custom prompting blocks which provide a prompting message to the user of the card with only a single actuation from the microprocessor chip 200. Enunciator displays can comprise frequently displayed messages such as "ENTER PIN", "LIMIT EXCEEDED", "MODE KEY", "CARD TYPE", "ENTER", "CR OR DB?", etc.

In addition to the web structure 192 illustrated in Figure 20, a stainless steel plate can be added for additional structural rigidity.

Figure 21 comprises a top view of the frame structure 190 and web structure 192. Windows 194, 196, 198 are formed in the web portion 192 as illustrated in Figure 20. Of course, these windows may be formed in any desired location in the web portion 192 depending upon the particular layout of the printed circuit board 164. Frame 190 and web portion 192 can be formed from an injected molded polycarbonate plastic or any desired plastic material capable of providing sufficient rigidity to support the printed circuit board structure 164 as well as sufficient flexibility to function as a credit card.

Figure 22 is a sectional view of Figure 21 illustrating the manner in which the web portion 192 is joined to frame portion 190. As illustrated in Figure 22, web portion 192 is centered within the structure of the frame portion 190.

Figure 23 is a circuit diagram illustrating the electrical interconnection of the various components of the card structure of one embodiment of the present invention. As illustrated in Figure 23, keypad 112 is configured in the manner illustrated in Figure 15 for the purpose of simplicity. Consequently, the reference numerals referred to in Figure 23 correspond to the reference numerals of Figure 15.

Microprocessor chip 200 comprises a Sanyo LC 5812 microprocessor available from Sanyo Corporation, Santa Clara, CA. The PIN numbers for chip 200 are indicated in Figure 23. Chip 200 has four programming inputs 210 and four verification outputs 212. Synchronization output 214 and enable line 216, together with programming inputs 210 and verification outputs 212, allow programming of microprocessor chip with the information necessary for operation. This occurs after the chip 200 is mounted in the chip carrier 180 and the additional components are mounted on the printed circuit board 164.

Figure 23 also includes a number of power pins 218 and capacitive coupling pins 182 which must be properly connected to microprocessor chip 200 for operation. Battery 220 is connected to the microprocessor 200 via power pins 218. An rc time circuit is coupled to chip 200 comprising capacitor 222 and resistor 223. The rc time circuit provides a time constant to operate the interal clock of microprocessor chip 200. Alternatively, a 32 kHz crystal can be coupled to microprocessor chip 200 to provide a stable oscillator signal for operation of the microprocessor chip 200. The 32 kHz crystal 222 can comprise an Epson C-5 Crystal available from Epson America, Torrance, California. Keypad 112 comprises a membrane pad such as described above and in U.S. application S.N. 750,489 filed June 27, 1985 entitled "Unitary, Self-Contained Consumer Transaction Card", which is specifically incorporated herein by reference for all that it discloses. LCD display 114 is coupled to the display driver pins illustrated in Figure 23 on microprocessor chip 200. LCD display can comprise an Epson LD-BR3138AY or an Epson E3005 available from Epson America, Torrance, California. LCD display 114 can also comprise a sharp D-124-01 available from Sharp Corporation, Paramus, New Jersey. Each of the elements illustrated in Figure 23 are incorporated with the printed circuit board 164 to provide a credit card size device having a high degree of durability.

Figures 24-50 illustrate various programs which can be performed by the microprocessor chip 200 to carry out the desired functions of the card and other external devices used in conjunction with the card. Figures 24-50 provide a detailed description of the manner in which the card can be programmed to perform these desired functions. Although the microprocessor chip suggested for use in the present invention may have insufficient storage to be programmed with all of the program functions illustrated in Figures 24-50, simultaneously, it should be understood that other alternative microprocessor chip can be used and that all of the program functions need not be contained within a single card. Also, although figures 24-50 disclose one or more alternative methods of programming the microprocessor chip 200, an equivalent method of programming the chip to perform the concepts and functions of the present invention is certainly included within the scope of the present invention.

Figure 24 comprises a flow diagram of the PIN verification program and the manner in which the chip is originally programmed prior to being sent to the card user. The schematic flow diagram of figure 24 discloses methods for verifying the PIN and determining if the chip has been programmed for basic operation. The program is initiated at instruction block 224 and proceeds to a stand by mode 226. The program then then determines whether the program input pins 189 (Figure 19) have been accessed at decision block 228. If they have been, the card is then programmed at step 230 and returns to the stand-by mode 226. If the input pins 189 have Not been accessed, then the program proceeds to decision block 232 to determine if the "ON" key has been depressed. If the "ON" key has not been depressed the program returns to stand-by mode at instruction block 226. If the "ON" key has been depressed, the program proceeds to decision block 234 to determine if a personal identification number (PIN) has been selected. If it is determined at decision block 234 that a PIN has not been selected, the program proceeds to the PIN selection program at instruction block 264. If the PIN has been selected, program proceeds to block 236 and instructs the microprocessor to generate a "ENTER PIN" prompt on the display. The program then scans the keypad at block 238 and determines if any key has been depressed at decision block 240. If no key has been depressed, the program returns to continue scanning the keypad. If a key has been depressed, blank prompts (- -) are displayed for each number that has been entered through the keyboard at instruction block 242. The program then proceeds to decision block 244 to determine if 6 keys have been depressed, which comprises the full compliment of numbers constituting a PIN. If a total of 6 keys have not been depressed the program returns to continue scanning the keypad 238. If the full complement of 6 keys have been depressed, the program proceeds to block 246 to compare the PIN stored within the microprocessor (S-PIN) with the PIN entered through the keyboard (E-PIN). If a match exists between the S-PIN and E-PIN at decision block 248, the program proceeds to the mode selection program at instruction 250. If the S-PIN and E-PIN do not match, the program proceeds to decision block 252 to determine if the maximum number of tries to enter the PIN has been exceeded. If the maximum number of tries has been exceed, the card is disabled for a predetermined period to prevent the entry of additional PIN numbers at block 254. If the maximum number of tries have not been exceeded, the number of tries is incremented by 1 at block 256 and the program returns to the "ENTER PIN" prompt at instruction block 236.

An alternative method of verifying the PIN is also illustrated in Figure 24. If it is determined at decision block 244 that 6 keys have been depressed, the program can alternatively proceed to instruction block 256 to enter the PIN as a decryption key in a decryption algorithm stored within the microprocessor chip. If the entered number comprises the correct decryption key, the microprocessor can then generate a decryption code at step 260 and compare decryption code with the stored decryption code at block 262. The program then proceeds to decision block 248 to determine if a match exists in the same manner as described above. If its is determined at decision block 234 that a PIN has not been selected, the program proceeds to the PIN selection program at instruction block 264.

The PIN selection program can also be accessed by depressing a preselected key such as the multiplication (x) key after the "ENTER PIN" prompt appears. The program determines if the (x) key has been depressed at decision block 241. If it has not been depressed, program proceeds to display blank prompts for the PIN and instruction block 272. However, if the (x) key has been depressed, the program proceeds directly to PIN selection program as indicated by instruction block 243.

A flow diagram of the PIN selection diagram is illustrated in Figure 25. The program is initiated at instruction block 266 and proceeds to set a verification number to a predetermined value "X" at instruction block 268. The program then displays a prompt to enter the access code for the PIN selection program at instruction block 270. The entered access code is then compared with the access code stored in the card at decision block 272. If a comparison does not exist, the verifier number is examined to determine if it is greater than 0. If the verified number is greater than 0, the program returns to display the prompt to enter the access code. If is not greater than 0, the card is disabled for a predetermined period at instruction block 276.

If the entered access code and stored access code compare at decision block 272, a prompt to enter the PIN selection code is produced on the entire display at instruction box 278. The PIN selection code entered through the keyboard by the card user is read at instruction block 280 and decoded at instruction box 282. The decoded PIN selection code is then compared with the PIN collection code stored in the card at decision block 284. If no comparison exists, the program proceeds to decision box 274 to determine if the verifier number is greater than zero. If a comparison exists, the program proceeds to instruction block 286 to grant access to the PIN storage file.

Alternatively, the program can proceed directly from decision box 272 via line 288 if a comparison exists between the access code entered in the card and the stored access code to grant access to the PIN storage file. This eliminates the necessity for entering two separate codes, i.e., an access code and a PIN selection code to obtain access to the PIN storage file. The display then produces a prompt to "ENTER PIN" at instruction block 290. The keyboard is scanned at instruction block 292 and is determined if a key has been depressed at decision 294. If no key has been depressed, the program then returns to display the "ENTER PIN" prompt at block 290. If the key has been depressed, the program proceeds to instruction block 296 to display the keys which have been depressed. At decision block 298, it is determined whether 6 keys have been depressed (which constitutes the number of decimal numerals in the PIN). Of course, any number of numerals could be used to form the PIN. If 6 keys have not been depressed, the program returns to display the keys that have been depressed at instruction block 296. If 6 keys have been depressed, the program proceeds to instruction block 300 to display a prompt "PIN ENTERED". At instruction block 302, the program displays a "NEW PIN IS" prompt. The newly entered PIN is then displayed at instruction block 304. If the card has a file of authorized access codes stored in memory, the card is then instructed to erase the access code at instruction block 306 which corresponds to the access code which was previously used to gain access to the PIN storage file. If, on the other hand, the access code was generated from an algorithm stored in the card, the access code which was entered in the card is eliminated from further use as an access code. This greatly eliminates potential fraudulent use of the card that could occur as a result of an access code falling into the wrong hands. The program then proceeds to the mode selection program at instruction block 308.

The mode selection program is illustrated in Figures 26, 27 and 28. As illustrated in Figure 26, the mode selection program is initiated at instruction block 310 and proceeds to display a "MODE KEY" prompt at instruction block 312. The keypad is then scanned at instruction block 314 and is determined whether a key has been depressed at decision block 316. If the key has not been depressed, the program returns to display the "MODE KEY" prompt at instruction block 312. If a key has been depressed, the program proceeds to decision block 318 to determine if the credit mode key 136 (Figure 16) has been depressed. If it has not been depressed, the program proceeds to decision block 320 to determine if the debit mode key 138 (Figure 16) has been depressed. If not, the program proceeds to decision block 322 to determine if the check verification key 140 (Figure 16) has been depressed. If not, the program proceeds to decision block 324 to determine if the ID key 154 (Figure 16) has been depressed. If not, the program proceeds to decision block 326 to determine if the limit update program key 150 (Figure 16) has been depressed. If not, the program proceeds to decision block 328 to determine if the currency exchange program key 152 (Figure 16) has been depressed. If not, the program proceeds to decision block 330 to determine if the TIP program key 146 (Figure 16) has been depressed. If not, the program proceeds to decision block 332 to determine if the clock program key 144 (Figure 16) has been depressed. If not, the program proceeds to decision block 334 to determine if the calculator program key 156 (Figure 16) has been depressed. If not, the program proceeds to decision block 336 to determine if the broker key 148 (Figure 16) has been depressed. If not, the program proceeds to decision block 338 to determine if the Visa key 130 (Figure 16) has been depressed. If not, the program proceeds to decision block 340 to determine if the MasterCard key 132 (Figure 16) has been depressed. If not, the program proceeds to decision block 342 to determine if the American Express key 134 (Figure 16) has been depressed. If not, the program proceeds to decision block 334 to determine if the off key 131 has been depressed. If not, the program returns to display the "MODE KEY" prompt at block 312. If the off key 131 has been depressed at decision block 344, the program is stopped at instruction block 346.

If it is determined that the credit mode key has been depressed at decision block 318 (Figure 26), program proceeds to decision block 348 (Figure 28) to determine if the limit update key 150 (Figure 16) has been depressed. If the limit update key has not been depressed, the program proceeds to the credit authorization program at instruction block 350. If the limit update key has been depressed, the program proceeds to decision block 352 to determine if the Visa key has been depressed. If the Visa key has been depressed, the program proceeds to insert D in the limit update program at instruction block 354. If it has been determined at decision block 352 that Visa key has not been depressed, the program proceeds to decision block 356 to determine if the MasterCard key has been depressed. If it has been depressed, the program proceeds to the F insert in the limit update program at instruction block 358. If the MasterCard key has not been depressed, the program proceeds to decision block 360 to determine if the American Express key 134, (Figure 16) has been depressed. If the American Express key has been depressed, the program proceeds to insert H in the limit update program, as illustrated by instruction block 362. If the American Express key has not been depressed, the program proceeds to insert K in the limit update program, as set forth instruction block 364.

If it is determined at decision block 320 (Figure 26) that the debit mode key has been depressed, the program proceeds to decision block 366 (Figure 28) to determine if the limit update key has been depressed. If it is determined at decision block 366 that the limit update key has not been depressed, the Program proceeds to the debit authorization program at instruction block 368. If it is determined at decision block 366 that the limit update key has been depressed, the program proceeds to decision block 370 to determine if the Visa key has been depressed. If the Visa key has been depressed, the program proceeds to the E insert in the limit update program as indicated by instruction block 372. If the Visa key has not been depressed, the program proceeds to decision block 374 to determine if the MasterCard key has been depressed. If the MasterCard key has been depressed, the program proceeds to insert G in the limit update program, as indicated by instruction block 376. If the MasterCard key has not been depressed at decision block 374, the program proceeds to decision block 378 to determine if the American Express key has been depressed. If the American Express key has been depressed, the program proceeds to insert I in the limit update program, as indicated by instruction block 380. If it is determined at decision block 378 that the American Express key has not been depressed, the program proceeds to insert K in the limit update program, as indicated by instruction block 382.

Referring again to Figure 26, if it is determined at decision block 322 that the check verification key has been depressed, the program proceeds to the debit authorization program, as indicated by instruction block 384. If it is determined at decision block 324 that the ID key has been depressed, the program proceeds to the computer access program, as indicated by instruction block 386. If it is determined at decision block 326 that the limit update program key has been depressed, the program proceeds to the limit update program, as indicated by instruction block 388. If it is determined at decision block 328 that the currency exchange program is depressed, the program proceeds to the currency exchange program, as indicated by instruction block 390. If it is determined at decision block 330 that the Tip program key has been depressed, the program proceeds to the Tip program, as indicated by instruction block 392.

Referring to Figure 27, if it is determined at decision block 332 that the clock program key has been depressed, the program proceeds to the clock program, as indicated by instruction block 394. If it is determined at decision block 344 that the calculator program key has been depressed, the program proceeds to the calculator program, as indicated by instruction block 396.

If it is determined at decision block 336 that the broker key has been depressed, the program proceeds to the broker program, as indicated by instruction block 398. If it is determined at decision block 338 that the Visa key has been depressed, the program proceeds to decision block 400 to determine if the limit update key has been depressed. If the limit update key has been depressed, the program proceeds to insert A in the limit update program, as indicated by instruction block 402. If it is determined at decision block 400 that the limit update key has not been depressed, the display will produce a "CR, DB or CKV" prompt to request the user of the card to depress either the credit, debit, or check verification key, as indicated at instruction block 404. The program then proceeds to insert B (Figure 26) of the mode selection program to determine if the credit mode key has been depressed at decision block 318.

If it is determined at decision block 340 that the MasterCard key has been depressed, the program proceeds to decision block 406 to determine if the limit update key has been depressed. If the limit update key has been depressed, the program proceeds to B insert of the limit update program, as indicated by instruction block 408. If it is determined at decision block 406 that the limit update key has not been depressed, the display produces a "CR, DB or CKV" prompt, as indicated by instruction block 410 to request the user of the card to depress either the credit, debit, or check verification key. The program then proceeds to insert B (Figure 26) of the mode selection program. If it is determined at decision block 342 that the American Express key has been depressed, the program proceeds to decision block 412 to determine if the limit update key has been depressed. If the limit update key has been depressed, the program proceeds to insert C in the limit update program, as indicated by instruction block 414. If the limit update key has not been depressed at decision block 412, the program proceeds to display a "CR, DB or CKV" prompt, as indicated by instruction block 416. The program then proceeds to insert B (Figure 26) of the mode selection program.

Figures 29 and 30 disclose the credit authorization program. As illustrated in Figure 29, the credit authorization program is initiated at instruction block 418 and displays an "ENTER AMOUNT" prompt at instruction block 420. The program then proceeds to scan the keyboard at instruction block 422 and determines if a key has been depressed at decision block 424. If a key has not been depressed, the program returns to scan the keypad. If a key has been depressed, the program displays the depressed keys, as indicated by instruction block 426. The program then proceeds to determine if the enter key, such as key 142 (Figure 16) has been depressed at decision block 428. If the enter key has not been depressed, the program returns to scan the keypad at instruction block 422. If the enter key has been depressed, the card displays a "CARD TYPE" prompt at instruction block 430. The program then proceeds to decision block 432 to determine if the Visa key has been depressed. If the Visa key is depressed, the program proceeds to display the Visa credit account number at instruction block 434 and compares the amount entered with the credit balance at instruction block 436. The program then proceeds to insert A, Figure 30 as indicated by instruction block 438.

It is determined at decision block 432 that the Visa key has not been depressed, the program proceeds to decision block 440 to determine if the MasterCard key has been depressed. If the MasterCard key has been depressed, the program displays the MasterCard credit account number at instruction block 442 and compares the amount entered in the card with the credit balance stored in the card at instruction block 444. The program then proceeds to insert B, Figure 30, as indicated by instruction block 446.

If it is determined at decision block 440 that the MasterCard key has not been depressed, the program proceeds to decision block 448 to determine if the American Express key has been depressed. If the American Express key has been depressed, the American Express credit account number is displayed at instruction block 450 and the amount entered in the card is compared with the credit balance for the American Express credit card account at instruction block 452. The program then proceeds to insert C, Figure 30, as indicated by instruction block 454. If it is determined at instruction block 448 that the American Express key has not been depressed, the program returns to display the "CARD TYPE" prompt at instruction block 430.

Figure 30 discloses an additional portion of the credit authorization program continued from Figure 29. At insert A in Figure 30, it is determined at instruction block 456 if the entered amount exceeds the Visa account credit limit. If the limit is exceeded, the program proceeds to instruction block 458 to display a "LIMIT EXCEEDED" prompt. The display then gives a phone number to call at instruction block 460 and proceeds to insert A in the mode selection program at instruction block 462. If it is determined that the limit is not exceeded at decision block 456, the program proceeds to debit the amount entered from the credit balance of the Visa account at instruction block 464. The program then proceeds to instruction block 466 to access the algorithm stored in the card for the Visa credit account. The program then proceeds to instruction block 468 to generate a transaction identification code (TIC) from the algorithm stored in the card for the Visa credit account. The TIC generated from the algorithm is then displayed at instruction block 470.

If it is determined at decision block 472 that the amount entered exceeds the credit balance of the MasterCard credit account, the card displays a "LIMIT EXCEEDED" prompt as indicated by instruction block 474. The program then displays a phone number to call at instruction block 476 and goes to insert A of the mode selection program, as indicated by instruction block 478. If it is determined at decision block 472 that the credit balance of the MasterCard account has not been exceeded, the program proceeds to instruction block 480 and debits the amount entered from the credit balance of the MasterCard account. The program then proceeds to instruction block 482 to access an algorithm stored in the card for the MasterCard credit account. The program then proceeds to instruction block 484 to generate a transaction identification code (TIC) from the algorithm and displays the (TIC), as indicated by instruction block 486.

Referring to insert C in Figure 30, if it is determined at decision block 488 that the amount entered exceeds the credit balance of the American Express credit account, the program displays a "LIMIT EXCEEDED" prompt, as indicated by instruction block 490. The card then displays a phone number to call as indicated by instruction block 492 and proceeds to input A in the mode selection program, as indicated by instruction block 494. If it is determined that the limit has not been exceeded at decision block 488, the amount of the transaction entered in the card is debited from the credit balance of the American Express credit account at instruction block 496 and the program proceeds to access an algorithm stored in the card for the American Express credit account at instruction block 498. A transaction identification code (TIC) is generated from this algorithm at instruction block 500 and displayed on the card at instruction block 502. It is pointed out that the card can store separate algorithms for each of the different card companies, as indicated above, to allow for greater security. It is also pointed out that the credit authorization program can alternatively proceed to the currency exchange program after decision block 428, as indicated by instruction block 429, and/or the Tip program, as indicated by instruction block 431.

Figures 31 and 32 comprise the debit authorization program which corresponds directly to the credit authorization program illustrated in Figures 29 and 30. The same exact procedures are followed as disclosed in the credit authorization program with the exception that the debit accounts of the Visa, MasterCard and American Express accounts are accessed rather than the credit accounts.

Figures 33 and 34 disclose the limit update program wherein either the credit or debit limit can be increased for the Visa, MasterCard or American Express accounts by inserting a limit code received from the bank which contains a limit access code and a limit amount code in an encoded format. As illustrated in Figure 33, the program starts at decision block 504 and proceeds to instruction block 506 to display a "CARD TYPE" prompt. The keyboard is then scanned at instruction block 508 and it is determined if the Visa mode key has been depressed at decision block 510. If the Visa decision block has not been depressed, the program proceeds to decision block 512 to determine the MasterCard key has been depressed. If the MasterCard key has not been depressed, the program proceeds to decision block 514 to determine if the American Express key has been depressed. If it has not, the program returns to instruction block 506 to display the "CARD TYPE" prompt. If it is determined at decision block 510 that the Visa key has been depressed, the program proceeds to instruction block 516 to display a "CR or DB" prompt. The keyboard is then scanned at instruction block 518 and it is determined at decision block 520 whether the credit mode key has been depressed. If the credit mode key has been depressed, the program proceeds to insert D (Figure 34). If the credit mode key has not been depressed, the program proceeds to decision block 522 to determine if the debit mode key has been depressed. If the mode key has been depressed, the program proceeds to insert E (Figure 35). If the debit mode key has not been depressed, the program returns to instruction block 516. If it is determined at decision block 512 that the MasterCard key has been depressed, the program proceeds through instruction blocks 524 and 526 and decision blocks 528 and 530 in a manner similar to that described above. If it is determined at decision block 528 that the credit mode has been depressed, the program proceeds to insert F (Figure 35). If it is determined at decision block 530 that the debit mode key has been depressed, the program proceeds to insert G (Figure 35). Similarly, if it is determined at decision block 514 that the American Express key has been depressed, the program proceeds through instruction blocks 532 and 534 and decision blocks 536 and 538. If the credit mode key is depressed at decision block 536 the program proceeds to insert H (Figure 35). If the debit mode key is depressed at decision block 538, the program proceeds to insert I (Figure 35).

Figure 34 comprises insert D in the limit update program, which is a continuation from Figure 33. Insert D is a path which the program follows when it is determined at decision block 520 (Figure 33) that the credit mode key is depressed. Referring again to Figure 34, at instruction block 540, a verification number is set to some predetermined value x. The program then displays a "ENTER CODE" prompt at instruction block 542. At instruction block 544, the microprocessor 200 decodes the limit code which has been entered through the keypad on the card using a decoding algorithm assigned to the Visa credit account. At instruction block 546 limit access code is derived from the decoded limit code in the microprocessor. At instruction block 548 a limit amount code is derived from the decoded limit code. At instruction block 550, a limit access code stored in the microprocessor for the Visa limit account is compared with the decoded limit code. If it is determined at decision block 552 that the two match, the program proceeds to instruction block 554 and grants access to the credit limit file for the Visa card. The program then stores the new credit amount code in the credit limit file for the Visa card. The credit amount code is the credit limit amount generated from the decoded limit code. The new credit limit is then displayed on the card at instruction block 558 and the program proceeds to insert A of the mode selection program, as indicated by instruction block 560. If it is determined at instruction block 552 that a match does not exist between the stored limit access code and the decoded limit code, the program proceeds to instruction block 562 to display "INCORRECT". A value of 1 is then subtracted from the verification number at instruction block 564 and the program proceeds to decision block 566 to determine if the verification number is greater than zero. If it is greater than zero, the program proceeds to insert A in the mode selection program, as indicated by instruction block 560. If the verification number is not greater than zero, the program proceeds to insert A at instruction block 542. This procedure gives the card user another chance to enter a limit code in the card.

Figure 35 is a schematic illustration of inserts E, F, G, H and I which correspond very closely to insert D in Figure 34. Instruction blocks 568 through 578 illustrate the differences between insert D and insert E. Instruction block 568 corresponds to instruction block 544 except that the limit code entered through the keyboard in the card is decoded using the decoding algorithm for the Visa debit account, rather than the Visa credit account. Similarly, instruction block 570 correspond to instruction block 554 (Figure 34) except that access is granted to the debit limit file for the Visa card, rather than the credit limit file. At instruction block 572, the new debit limit is stored and filed for the Visa card. At instruction block 574 the new debit limit which is displayed on the card. The program then proceeds to insert A in the mode selection program at instruction block 576. In a similar manner, insert F corresponds to the credit limit file for the MasterCard account stored in the card, insert G corresponds to the debit account for the MasterCard accounts stored in the card, insert H corresponds to the credit Limit account for the American Express account stored in the card, and insert I corresponds to the debit limit account for the American Express debit account stored in the card.

Figures 36 and 37 are flow diagrams of the currency exchange program. The currency exchange program can be used to calculate an exchange amount by depressing the currency exchange program mode key after the "MODE KEY" prompt appears, as disclosed in Figure 26. An exchange rate is entered through the keypad on the card in response to a prompt generated on the display after the mode key has been depressed. A previous exchange rate is stored in the card so that the exchange rate need not be entered for each use and need not be memorized by the user. However, the user can easily change exchange rate by depressing the multiplication button "X" at the appropriate time. Additionally, the currency exchange program can function in conjunction with the credit and debit authorization programs, such as disclosed in Figures 29, 30 and 31, 32, respectively. In this case, if the user of the card is making a purchase in a foreign country, the credit and debit authorization programs can be alternatively programmed to refer directly to the currency exchange program by way of optional instruction block 429. In this case, after the amount in local currency is entered through the keypad at instruction block 420 (Figure 29), the program proceeds directly to the currency exchange program so that the merchant can enter the appropriate exchange rate and the exchange amount can be calculated in the exchange program and recycled back to the credit and debit authorization programs at insert D so that amount can be deducted from the credit or debit limit balance.

Referring more specifically to Figures 36 and 37, the program is initiated at instruction block 578 when the currency exchange program key is depressed after the "MODE KEY" prompt appears in the mode selection program (Figure 26), or if the currency exchange program is addressed from the debit or credit authorization limit programs (Figures 29 and 31). The program then proceeds to decision block 580 to determine if currency exchange rate is already stored in the card. If an exchange rate is already stored in the card, the program displays the stored exchange rate at instruction block 582 and displays with a "ENTER?" prompt at instruction block 584. A delay is then provided at instruction block 586 and it is determined at instruction block 588 if the enter key has been depressed. If the enter key has been depressed, the stored exchange rate is then used and the program proceeds to instruction block 590. If the enter key is not depressed at decision block 588, the program proceeds to instruction block 592 to display an "EXCHANGE RATE" prompt. Additionally, if it is determined at decision block 580 that an exchange rate is not stored in the card the program will automatically proceed to instruction block 592 to display the "EXCHANGE RATE" prompt. In both cases, the program then proceeds to instruction block 594 to scan the keyboard and determine at decision block 596 if a key has been depressed. If no key has been depressed, the program returns to display the "EXCHANGE RATE" prompt at instruction block 592. If a key has been depressed, the program proceeds to instruction block 598 to display the depressed keys and continues to scan the keyboard at instruction block 600. At decision block 602, it is determined if the enter key has been depressed. If not, the program returns to display the depressed keys at instruction block 598. If the enter key has been depressed, the program proceeds to store the exchange rate at instruction block 590. The program then proceeds to decision block 604 to determine if the credit or debit key has been depressed. If the credit key has been depressed, the program proceeds to instruction block 606 to read the amount entered in the credit authorization program in response to the "ENTER AMOUNT" prompt produced at instruction block 420 (Figure 29). The exchange amount, (i.e., the equivalent amount in U.S. currency) is then computed at instruction block 608. Again, it should be pointed out that the amount entered in the credit authorization program in response to the "ENTER AMOUNT" prompt of instruction block 420 is an amount which is entered in the foreign currency. For example, if a U.S. traveller were visiting France, the amount entered by the merchant in response to instruction block 420 would be in francs. The amount read into the currency exchange program at instruction block 606 is the amount entered in francs. The computed exchange amount at instruction block 608 is the equivalent amount in U.S. currency. This amount is then displayed on the card at instruction block 610 and the program proceeds to insert D of the credit authorization program (Figure 29) in response to instruction block 612. In this manner, the merchant and customer are given the amount that the purchase has cost the customer in U.S. dollars. This amount is then used in credit and debit authorization programs to be deducted from the credit or debit balances. Of course, both the amount of the transaction and the exchange rate are entered by the merchant during the purchase transaction. The merchant will be given a daily, weekly, or a monthly exchange rate which he will use for credit and debit purchases made by foreign purchasers.

If it is determined at decision block 604 that the debit key has been depressed, indicating that the currency exchange program has been accessed from the debit authorization program of Figure 31, the program proceeds to decision block 614 to read the amount entered in the debit authorization program. The equivalent U.S. Dollar amount is then computed at instruction block 616 and this amount is displayed at instruction block 618. The program then proceeds to insert D and the debit authorization program at instruction blocks 620 in a manner similar to that disclosed for the credit authorization program.

If it has been determined at decision block 604 that neither the credit or debit key has been depressed, i.e., that the currency exchange program was not accessed through either the credit or debit authorization programs, but rather was accessed by depressing the currency exchange mode key in response to the "MODE KEY" prompt of the mode selection program (Figure 26), the program proceeds to instruction block 622. In this instance, it is understood by the program that an amount is not being calculated for subtraction from the credit or debit limit balance in equivalent U.S. dollars, but that the customer is using the currency exchange program to calculate an equivalent exchange amount in either U.S. dollars, or a foreign currency exchange for his own information.

Referring to Figure 37, at instruction block 622 the card displays a "ENTER AMOUNT" prompt. The keyboard is scanned at instruction block 624 and it is determined if a key has been depressed at decision block 626. If no key has been depressed, the program returns to instruction block 622. If a key has been depressed, the program proceeds to instruction block 628 to display the depressed keys. The keyboard is then scanned at instruction block 630 and a decision is made at decision block 632 as to whether the enter key has been depressed. If the enter key has not been depressed, the program returns to instruction block 628. If the enter key has been depressed, the program proceeds to instruction block 634 to compute the exchange amount. This amount can either be a U.S. dollar amount or a foreign currency amount depending upon the exchange rate which has been entered or used in the initial part of the program. The program then returns to insert A in the mode selection program, as indicated by instruction block 638.

Figure 38 discloses the TIP program. The program is initiated at instruction block 640 and proceeds to display a "ENTER AMOUNT" prompt at instruction block 642. The keyboard is then scanned at instruction block 644 and a decision is made at decision block 646 if a key has been depressed. If not, the program returns to instruction block 642. If the key has been depressed, the program proceeds to instruction block 648 to display the depressed key. The keyboard is then scanned at instruction block 650 and it is determined at decision block 652 if the enter key has been depressed. If not, the program returns to instruction block 648. If the enter key has been depressed, the program proceeds to instruction block 654 to store the transaction amount.

It should also be pointed out that the transaction amount stored at instruction block 654 can also be derived from either the credit or debit authorization program. For the purposes of simplicity, however, the TIP program has been illustrated as disclosed in Figure 38.

The program then proceeds to instruction block 636 to display a "ENTER TIP %" prompt. If a 15% tip is desired, the numbers 1 5 can be entered in the keypad. The program scans the keypad at instruction block 658. At decision block 660, it is determined if a key has been depressed. If not, the program returns to instruction block 656. If a key has been depressed, the program proceeds to instruction block 652 to display the depressed keys. The keyboard is then scanned at instruction block 664 and it is determined at decision block 666 if the enter key has been depressed. If the enter key has not been depressed, the program returns to decision block 662. If the enter key has been depressed, the program proceeds to instruction block 668 to compute the tip amount. The tip amount is then displayed at instruction block 670 and a "ENTER" prompt is generated at instruction block 672. The program then proceeds to decision block 674 to determine if the enter key has been depressed. If it has not been depressed, the program returns to instruction block 672. If the enter key has been depressed, the program proceeds to instruction block 676 to add the TIP amount to the transaction amount. The total amount is then displayed at instruction amount 678. The program can then alternatively return to insert D in the credit or debit authorization program as indicated at instruction block 780 if it is determined that the TIP program was accessed from either of these programs.

Figure 39 discloses the clock program. The program is initiated at instruction block 782 in response to the CLK key being depressed after the "MODE KEY" prompt is produced in the mode selection program (Figure 26). The program then proceeds to instruction block 784 to scan the keyboard. It is then determined at decision block 786 if the clock (CLK) key has been depressed. If the clock key has been depressed, the program reads the new hours in minutes and seconds from the keypad at instruction block 788. The program then stores the new data at instruction block 790 and proceeds to instruction block 792 to transfer the hours, minutes and seconds from the RAM to the display. If it is determined at decision block 786 that the clock key has not been depressed, the program proceeds directly to instruction block 792 to transfer the time in hours, minutes and seconds from the RAM to the display. The program then proceeds to decision block 794 to determine if the off key has been depressed. If it is not, the program returns to decision block 786. If the off key has been depressed, the card is powered down as indicated by instruction block 796.

Figure 40 discloses the calculator program which is initiated by depressing the calculator button after the "MODE KEY" prompt appears on the display in the mode selection program illustrated in Figure 26.

The calculator program is initiated at instruction block 798 and proceeds to instruction block 800 to read a first number A which has been entered in the keyboard. The program then reads an operator key at instruction block 802, such as the add, subtract, multiply or divide key. The program then reads a second number B at instruction block 804. The program then proceeds to decision block 806 to determine which operator key has been depressed. If the addition operator key has been depressed, the program starts the addition process, as indicated by instruction block 808. If the subtraction operator key has been depressed, the subtraction program is initiated as indicated by instruction block 810. If the multiplication operator key has been depressed, the multiplication program is initiated, as indicated by instruction block 812. If a division operator key has been depressed, a division program is initiated, as indicated by instruction block 814.

As indicated above, the addition and subtraction programs are indicated at instruction blocks 808 and 810, respectively. At instruction block 820, the sign of B is changed to perform the subtraction process. Both the addition program and the subtraction program then proceed to instruction block 822 to compute a result of $C = A + B$. At instruction block 824, a display "E" is generated if there is an overflow. The result C is then displayed on the LCD display at instruction block 826. The program then returns to instruction block 798 and instruction block 828.

The multiplication program is initiated at instruction block 812. The program then proceeds to decision block 832 to determine if A is equal to zero. If A is equal to zero, a zero is displayed at instruction block 834. The program then returns to instruction block 798 at instruction block 836. If it is determined that A is not equal to zero at decision block 832, the program proceeds to decision block 838 to determine if B is equal to zero. If B is equal to zero, the program proceeds to instruction block 834. If B is not equal to zero, the program proceeds to instruction block 840 to set C equal to zero. The program then proceeds to instruction block 842 to set B = B - 1. The program then proceeds to decision block 844 to determine if B is less than zero. If B is less than zero, the program proceeds to instruction block 846 to display a "E" if there is an overflow. At instruction block 848, C is then displayed and the program returns to instruction block 798, as indicated by instruction block 850. If it is determined at instruction block 844 that B is greater than zero, the program proceeds to instruction block 852 to set C = A + C. The program then returns to instruction block 842.

Figure 41 discloses the division program of the calculator program illustrated in Figure 40. The division program is initiated at instruction block 844 and proceeds to decision block 856 to determine if B is equal to zero. If B is equal to zero, the program proceeds to display a "E" indicating an error and returns to instruction block 798 as indicated by instruction block 860. If it is determined that B is not equal to zero at decision block 856, the program proceeds to instruction block 862 to set C = A. At instruction block 864, COUNT is then set equal to zero. At instruction block 866 REM is set equal to zero. At instruction block 868 REM and C are left shifted. At instruction block 870, REM is set equal to REM minus B. The program then proceeds to decision block 872 to determine if REM is less than zero. If it is determined that REM is not less than zero at decision block 872, the program proceeds to instruction block 874 to left shift REM and C. $Bit_{N-1}$ of C is then made equal to 1. At instruction block 878 the program proceeds to instruction block 878 to set REM equal to REM - B.

If REM is less than zero, the program proceeds to instruction block 880 to left shift REM and C. The program then proceeds to instruction block 882 to set $Bit_{N-1}$ of C =0. At instruction block 884 REM is equal to said REM + B. From instruction blocks 878 and 884, the program proceeds to decision block 886 to determine if count equals N-1. If not, program proceeds to instruction block 990 to set count equal to count plus 1 and the program returns to decision block 872. If count is equal to N-1, the program proceeds to decision block 892 to determine if REM is less than 0. If REM is not less than zero, the program proceeds to instruction block 894 and sets REM equal to REM + B. The program then proceeds to display the result at instruction block 896. If it is determined at instruction block 892 that REM is less than zero, the program proceeds to display the result at instruction block 896. The program then returns to instruction block 798 as indicated by instruction block 898.

Figure 42 discloses the broker program which is initiated by depressing the broker program key after the "MODE KEY" prompt appears in the mode selection program (Figure 27). The broker program is initiated at instruction block 900 and displays a predesignated broker account number stored in the microprocessor at instruction block 902. The user of the card can then read the broker number over the phone to the broker.

The program then proceeds to instruction block 904 to display a "RATE FRACTION" prompt to prompt the user to enter the fractional value of a single share of stock which he is trading. For example, many penny stocks are traded at fractional values such as 11/32, 7/16, 25/32, etc. The user of the card can then enter the fractional amount, such as, for example, 11/32 by inserting 11, divisional sign, 32. The program then proceeds to instruction block 906 to read this fractional value entered through the keypad. After the fractional amount is entered, the user of the card depresses the enter key. Decision block 908 determines if the enter key has been depressed. If it has not been depressed, the program returns to instruction block 906. If it is determined that the enter key has been depressed at decision block 908, the program proceeds to instruction block 910 to convert the fractional value to a decimal value. The program then displays a "NUMBER OF SHARES" prompt to prompt the user to enter the number of shares to be traded. The card then reads the number of shares entered at instruction block 914 and proceeds to decision block 916 to determine if the enter key has been depressed. If the enter key has not been depressed. The program returns to instruction block 914. If the enter key has been depressed, the program proceeds to instruction block 918 and multiplies the decimal value by the number of shares to obtain a total transaction amount. This total amount is then displayed for a predetermined period as indicated by instruction block 920. The display then produces a "CR or DB" prompt to prompt the user to depress either the credit mode key or debit mode key. The program then proceeds to decision block 924 to determine if the credit or debit mode key has been depressed. If neither has been depressed, the program returns to instruction block 922. If the credit mode key has been depressed, the program goes to insert D in the credit authorization program to debit the amount of the purchase from the credit limit in a particular account which has been selected, i.e., Visa, MasterCard, or American Express. If a sufficient balance exists, a transaction identification code will be generated which is read over the phone to the broker, as indicated by instruction block 926. If the debit key is depressed, the program proceeds to insert D in the debit authorization program, as indicated by instruction block 928. The functions performed in the debit authorization program correspond to those performed in the credit authorization program.

Figures 43 through 52 disclose the operation of the card in conjunction with an external device such as a computer or security authorization device which has been programmed to function to verify numbers produced by the card. Figures 43, 46, 48, and 51 show the programming for the card. Figures 44, 45, 47, 49, 50 and 52 show the programming for the external device, such as computer. Although these diagrams indicate an external computer, this computer can constitute any type of device for carrying out the desired programming functions. Generally, the card is used to produce one or more TICS which are entered into the external device. The external device is programmed to verify the proper identity of the holder of the card by verifying the one or more TICs generated by the card. Upon verification, the holder of the card can then be granted access to a computer, access to a secured area, or access to any desired device such as computer purchasing terminal, an ATM, or any device to which access is to be secured.

Figure 43 discloses one manner of programming the card to perform the desired functions and to interact with an external device programmed in the manner illustrated in Figures 44 and 45. Referring to Figure 42, the computer access program is initiated at instruction block 930 upon depressing the ID key after the "MODE KEY" prompt is generated in the mode selection program (Figure 27). The program then proceeds to set a verifier number to a predetermined value x at instruction block 932. The microprocessor then generates a transaction key number (TKN) from a random number generator program in the microprocessor at instruction block 934. An algorithmic code number (ACN) is then generated at instruction block 936 from TKN and a algorithm (N) stored in the card. For example, TKN can be used as one or more parameters of the algorithm (N) to generate the algorithmic code number (ACN).

The random number generator then produces a scrambling order number (K) at instruction block 938. The program then proceeds to instruction block 940 to generate a transaction identification code (G-TIC) comprising the algorithmic code number (ACN) and the scrambling order number (K). These numbers are scrambled in accordance with the scrambling order number (K). The transaction identification code (G-TIC) generated in the card is then displayed at instruction block 942. The program then proceeds to decision block 944 to determine if the verifier number is greater than zero. If it is not greater than zero, the program stops at instruction block 946. If the number is greater than zero, the program proceeds to instruction block 948 to subtract one from the verifier number. The program then returns to instruction block 934. Consequently, by setting the verifier number to a predetermined value, a predetermined number of transaction identification codes (G-TICs) can be generated and displayed on the card.

Figure 44 discloses the manner in which an external device, such as a computer, is programmed, in conjunction with the programming of the card in a manner illustrated in Figure 44 to allow access to the external device. Again, the present invention is described for use with a computer, but it should be understood that any type of external device could be used other than a computer which is capable of performing these steps. The computer program is initiated by entering a password through the keyboard of the computer at instruction block 950 which identifies the card being used. The computer then sets an attempt number to a predetermined number x at instruction block 952. The program then proceeds to instruction block 954 to set a verifier number equal to a predetermined value y. The program then proceeds to instruction block 956 to access a file of descrambled transaction identification codes (S-TICs) which are stored in the computer and assigned to the password entered through the computer keyboard. The program then proceeds to instruction block 958 to prompt the display of the computer to enter the G-TIC generated by the card into the computer keyboard. The computer then descrambles the G-TIC entered through the computer keyboard by identifying the scrambling order number (K) and the G-TIC using descrambling sequences which are stored in the computer. The program then proceeds to decision block 962 to determine if the verifier number is greater than zero. If it is, the program subtracts one from the verifier number at instruction block 964 and stores the descrambled G-TIC entered through the computer keyboard at instruction block 966. The program then returns to instruction block 958 to prompt entry of another G-TIC. Consequently, the verifier number of Figure 43 should correspond to the verifier number of Figure 44 so that the number of G-TICs prompted to be entered in the computer corresponds to the number of G-TICs generated by the card.

If it is determined at decision block 962 that the verifier number is not greater than zero, the program proceed to instruction block 968 to store the descrambled G-TIC. The program then compares the file of descrambled S-TICs with the descrambled G-TICs at instruction block 970. If there is a match between the S-TICs and G-TICs, as determined by decision block 972, the transaction is recorded at instruction block 974 and access is granted to computer at instruction block 976. If there is no match between the S-TICs and G-TICs, the program proceeds to instruction block 978 to determine if the attempt number is greater than zero. If it is greater than zero, one is subtracted from the attempt number at instruction block 980 and the program returns to instruction block 958. This allows the user to have a predetermined number (x) of attempts to insert a series of G-TICs in the computer keyboard prior to denying access. If it is determined at decision block 978 that the attempt number is not greater than zero, the program proceeds to insert A, Figure 45.

Referring to Figure 45, the computer generates a transaction key number (TKN) from a random number generator or sequence number generator at instruction block 982. The TKN is then applied to the algorithm (N) stored in the computer to generate an algorithmic code number (ACN) at instruction block 983. The computer then displays the ACN and prompts entry of the ACN into the card through the keypad at instruction block 984. The card then reads the ACN entered through the card keypad at instruction block 985 and this number is applied to the algorithm stored in the card and a result is computed at instruction block 986. The result is indicated on the card at instruction block 987. This result is then entered into the computer through the keyboard at instruction block 988 and the computer compares this result with an expected result at instruction block 990. The program then proceeds to decision block 992 to see if there is a match between the result and the ACN. If there is not a match between the two, the transaction is recorded at instruction block 994 and access is denied at instruction block 996. The program is then stopped at instruction block 998. If there is a match between the entered result and the expected result, the transaction is recorded at decision block 1000 and access is granted at instruction block 1002. The program is then stopped at instruction block 1004.

Figure 46 discloses the card program for an alternative method of generating one or more TICs to be inserted in a computer or other security access device. The program is initiated at 1006 and proceeds to instruction block 1008 to generate a transaction key number (TKN) from a random number generator. The card then produces an algorithmic code number (G-ACN) from the TKN and an algorithm stored in the card at instruction block 1010. The scrambling order number (K) is then generated in the card from a random number generator at instruction block 1012. A transaction identification code (G-TIC) is then generated at instruction block 1014 from TKN, G-ACN, and K which are scrambled in accordance with with K. The G-TIC is then displayed at instruction block 1016.

Figure 47 comprises a program which is inserted in the computer or other access device which interacts and corresponds with the program used in the card, as disclosed in Figure 5. Referring to Figure 47, the program is initiated at instruction block 1018 and proceeds to instruction block 1020 to prompt the user of the computer to enter his password. The computer then identifies an algorithm (N) which is assigned to the password entered in the computer at instruction block 1022. The computer then prompts the user to enter the G-TIC generated by the card through the computer keyboard. The entered G-TIC is then read by the computer and the scrambling order is identified from the location of the scrambling order number (K) in the G-TIC and the file of the scrambling order numbers stored in the computer at instruction block 1026. The program then proceeds to instruction block 1028 to identify the transaction key number (TKN) in the G-TIC using the stored file of scrambling order numbers. The program then proceeds to instruction block 1030 to compute an algorithmic code number (C-ACN) from the transaction key number (TKN) and the algorithm (N) assigned to the password. At instruction block 1032 the computer identifies G-ACN in the G-TIC after descrambling in accordance with the stored file of descrambling orders. The program then proceeds to decision block 1034 to compare G-ACN with C-ACN. If a comparison exists, access is granted to the system at instruction block 1036. If no comparison exists, access is denied at instruction block 1038. Alternatively, rather than denying access at instruction block 1038, the program can proceed to insert A in Figure 45, as indicated by instruction block 1040.

Figure 48 discloses a card program which works in conjunction with a computer program, as illustrated in Figure 49 and 50. Referring to Figure 48, the program is initiated at instruction block 1042 and proceeds to instruction block 1044 to set a verifier number to a predetermined value of x. At instruction block 1046, the card generates a transaction key number (TKN) from a random number generator program. The program then proceeds to instruction block 1048 to generate an algorithmic code number (G-ACN) from the transaction key number (TKN) and an algorithm (N) stored in the card memory. A scrambling order number (K) is then generated at instruction block 1050 from a random number generator in the card. A transaction identification code (G-TIC) is then generated at instruction block 1052 which comprises the ACN and K and is scrambled in accordance with a value of K. The card then displays the G-TIC at instruction block 1054 and proceeds to decision block 1056 to determine if the verifier number is greater than zero. If the verifier number is not greater than zero, the program stops at instruction 1058. If the verifier number is greater than zero, the program proceeds to instruction block 1060 to subtract one from the verifier number. At instruction block 1062, the transaction key number is altered in a predetermined manner and the program returns to instruction block 1048. The transaction key number (TKN) be altered to provide a discernable and repeatable sequence. Again, the verifier number x determines the number of G-TICs generated by the card which should correspond to the verifier numbers used in the computer programs illustrated in Figures 49 and 50.

Figure 49 discloses one computer program which can be used in conjunction with the card program illustrated in Figure 48. Referring to Figure 49, the program is initiated by entering a password for the individual at instruction block 1064. The program then proceeds to instruction block 1066 and accesses a file in the computer containing descrambled transaction identification codes (S-TICs) which are assigned to the password entered into the computer at instruction block 1064. The program then proceeds to instruction block 1068 to set a verifier number to a predetermined value x. At instruction block 1070, the computer prompts the user to enter the first G-TIC generated by the card. The program then proceeds to instruction block 1072 to read and descramble the G-TIC entered in the card. Descrambling is performed in accordance with stored descrambling sequences by identifying the scrambling order number (K) in the G-TIC. The program then proceeds to 1074 to determine if the verifier number is greater than zero. If it is greater than zero, one is subtracted from the verifier number at instruction block 1076 and the descrambled G-TIC is stored in the computer at instruction block 1078. The computer than prompts the display to enter another G-TIC and returns to instruction block 1070. If the verifier number is not greater than zero. The descrambled G-TIC is stored at instruction block 1082 and the program proceeds to decision block 1084 to compare x number of consecutive descrambled G-TICs with the S-TICs. If the G-TICs compare in consecutive sequential order, access is granted to the computer at instruction block 1086. If the G-TICs and S-TICs do not compare in consecutive sequential order, access is denied at instruction block 1088. Rather than deny access at instruction block 1088, alternatively, the program can proceed to insert A in Figure 45 in an attempt to grant access to the system. Additionally, a predetermined number of attempts can be implemented into the system by assigning an attempt number, as illustrated in Figure 43. Of course, the attempt number can also be assigned in the program illustrated in Figure 47 to allow a predetermined number of attempts to access the computer.

Figure 50 comprises an alternative computer program to be used in conjunction with the card program illustrated in Figure 48. The program is initiated at instruction block 1092 by entering a password assigned to the user of the system. The program then proceeds to instruction block 1094 to identify an algorithm (N) assigned to the password entered by the user of the system. At instruction block 1096, a file of possible transaction identification codes (S-TICs) is generated by the computer from the algorithm (N) by altering a TKN in the predetermined manner in which it is altered at instruction block 1062 (Figure 48) in the card. The program then proceeds to instruction block 1098 to set a verifier number to a predetermined value x. The program then proceeds to instruction block 1100 to produce a prompt to enter the first G-TIC generated by the card into the computer. The computer reads the G-TIC entered and identifies the scrambling order number K at instruction block 1102. The computer scrambles the TIC at instruction block 1104 in accordance with the identified scrambling order number K. The program then proceeds to decision block 1106 to determine if the verifier number is greater than zero. If it is greater than zero, the program subtracts one from the verifier number at instruction block 1108 and stores the descrambled G-TIC at instruction block 1110. The program then prompts the user to enter another G-TIC at instruction block 1112. If the verifier number is not greater than zero, the program proceeds to instruction block 1114 to store the current descrambled TIC. At decision block 1116 the stored descrambled G-TICs are compared with the file of S-TICs generated by the computer to determine if there is a comparison. Since the transaction key numbers have been altered in a predetermined manner in both the computer and the card, the G-TICs and S-TICs should match in sequence. If they do match in sequence, the program proceeds to instruction block 1118 to grant access to the computer. If they do not match, access is denied to the computer. Alternatively, the program can proceed to instruction block 1122 to proceeds to insert A and Figure 45 rather than denying access to the computer system.

Figures 51 and 52 disclose an alternative method of controlling access to a peripheral system such as a computer. Figure 51 comprises the card program, while Figure 52 comprises the peripheral device program. Referring to Figure 51, the program is initiated by depressing the ID mode key after the "MODE KEY" prompt appears on the card display in response to proper entry of the PIN. The card program is initiated at instruction block 1124 and proceeds to instruction block 1126 to sequence and read a seed number (C-seed) from a sequence generator in the card. The card sequence generator initially starts with a predetermined number and sequences that number in a predetermined manner. The initial number is also stored in the computer and sequenced in the same manner as it is sequenced in the card using a similar sequence generator. The sequence generator can perform any desired sequencing function such as standard mathematical functions including incrementing the number using addition or subtraction, or altering the number by multiplication or division, or using logrithmic functions to alter the number in a predetermined manner. One or more mathematical functions can be used in conjunction to perform the desired sequencing.

The program then proceeds to instruction block 1128 to apply the seed number (C-seed) to an algorithm (C-DES) which is stored in the card. This algorithm can be any desired algorithm such as a standard DES public encryption algorithm available from the National Bureau of Standards. It can also comprise any other desired algorithm including encryption or enciphering techniques and it is pointed out that the notation "C-DES" and "C-DES" are not intended to limit the present invention to the DES algorithm, but are used simply as a shorthand notation. The program then proceeds to compute a transaction identification code (G-TIC) by applying the seed number (C-seed) to the algorithm (C-DES). The G-TIC is then displayed on the card at instruction block 1132.

The user then initiates the computer program as illustrated in Figure 52, at instruction block 1134. The user initiates the program by entering a password to identify the user in the keyboard of the computer. The computer reads the password entered through the keyboard at instruction block 1136. The computer program then proceeds to instruction block 1138 to access an algorithm (P-DES) which is assigned to the password entered through the keyboard. If the proper password has been entered by the user, the algorithm (P) should correspond to the algorithm (C-DES). The program then proceeds to instruction block 1140 to sequence and read a seed number (P-seed) from a sequence number generator assigned to the password. An expected transaction identification code (P-TIC) is then computed at instruction block 1142 by applying the P-seed to the P-DES. The P-TIC is then stored in the electronic memory means at instruction block 1144 and the program proceeds to instruction block 1146 to prompt the user to enter the G-TIC produced by the card into the peripheral device. The program proceeds to instruction block 1148 to read the G-TIC entered in the peripheral device. The computer then compares the G-TIC and P-TIC at instruction block 1150 and proceeds to decision block 1152 to determine if a match exists. If a match does exists, the computer can grant access at instruction block 1154 and stop the program at instruction block 1156, or can alternatively proceed to instruction block 1158, as indicated by line 1160, to require further authentication prior to granting access. In this case, the computer would deny access as indicated by instruction block 1162 and stop the program as illustrated by instruction block 1164.

Alternatively, if a match does not exist, the program can proceed to instruction block 1158 to sequence the P-seed. The peripheral device then displays the P-seed and prompts the card user to enter the P-seed in the card at instruction block 1166. Referring to Figure 51, which comprises the card program, the card reads the P-seed entered in the card at instruction block 1168 and applies the P-seed to the C-DES to compute a second transaction identification code (G2-TIC) at instruction block 1170. The G2-TIC is then displayed on the card at instruction block 1172 and the P-seed is applied to the sequence generator as a new sequence number to ensure synchronization between the sequence generators of the card and the peripheral device at instruction block 1174. The card program stops at instruction block 1178.

Referring to Figure 52, which comprises the peripheral device program, the peripheral device reads the G2-TIC entered into the peripheral device at instruction block 1180. The P-seed is then applied to the P-DES at instruction block 1182 and a second expected result (P2-TIC) is computed at instruction block 1184. The program then compares the G2-TIC with the P2-TIC at instruction block 1186. If it is determined at decision block 1188 that a match exists between G2-TIC and P2-TIC, access is granted to the computer, as indicated by instruction block 88 and the program is stopped at instruction block 1190. If a match does not exist between the G2-TIC and the P2-TIC, access is denied at instruction block 1192 and the program is stopped at instruction block 1194. A timer device can be deployed in the external device to change the codes periodically, e.g., every month.

Consequently, several different methods of controlling access to the peripheral device can be used, as disclosed in Figures 51 and 52. A number of entries required to be performed by the user naturally increases as the amount of security increases. The above disclosed programs do, however, alternatively allow for the generation of a challenge number by the computer to be entered in the card which synchronize the sequencing generators of the card and the computer system and grant access if second generation transaction identification codes are produced in both the card and peripheral device which correspond.

Hence, the card of the present invention is capable of performing a number of various functions as set forth above. It should be understood that the terms encoding and decoding are generic terms which include encryption and decryption techniques, and ciphering and deciphering techniques and any other methods of encoding and decoding including scrambling and descrambling. Additionally, it should be understood that any of the encoding, decoding, encryption, decryption, ciphering, deciphering, scrambling or descrambling techniques of the present invention can be used interchangeably and should be considered to be equivalent methods of performing the functions of the present invention. Moreover, standard encryption and decryption techniques such as DES can be employed in the present invention in place of the encoding and decoding, scrambling and descrambling techniques disclosed herein. Also, although the present invention has disclosed a predetermined sequence of events to be carried out by the card and/or external device, these sequences can be carried out in any desired order, or in any equivalent manner. For example, it may be desirable to select one or more credit card accounts prior to selecting the debit or credit account as illustrated above.

The random number generator referred to in instruction block 934 for generating a transaction key number can be a virtual number random generator or a true random number generator. Both of these devices are clearly disclosed in U.S. Patent 4,529,870, issued July 16, 1985 to David Chaum which is specifically incorporated herein by reference for all that it discloses. It should also be understood that anything which is to be entered through the keyboard of either an external device or the card can alternatively be entered through a magnetic read/write device located on the card. Typically, this has a primary application in transmitting the transaction identification code and the amount of the transaction to a host computer which is connected on line with the card to authorize the transaction on an on-line mode. Similarly, contact pins or other devices such as capacitive coupling or inductive coupling, radio frequency coupling or other type of coupling could be used to transmit information between the card and a card reader or terminal device in either direction.

The foregoing description of the invention has been presented for purposes of illustration and description. It is not intended to be exhaustive or to limit the invention to the precise form disclosed and other modifications and variations may be possible in light of the above teachings. The embodiment was chosen and described in order to best explain the principles of the invention and its practical application to thereby enable others skilled in the art to best utilize the invention in various embodiments and various modifications as is suited to the particular use contemplated. It is intended that the appended claims be construed to include other alternative embodiments of the invention except insofar as limited by the prior art.

WHAT IS CLAIMED IS:

1. A method of producing a transaction identification code (TIC) on a unitary, self-contained card to verify authorized use of said card comprising the steps of:

reading a personal identification number (E-PIN) entered through a data entry means on said card;

verifying said personal identification number (E-PIN) entered through said data entry means;

generating a transaction key number (TKN) in an electronic memory in said card in response to verification of said personal identification number (E-PIN), said transaction key number (TKN) having a different value for each verification of said personal identification number (E-PIN);

generating said transaction identification code (TIC) from an algorithm (N) stored in said electronic memory means and said transaction key number (TKN);

indicating said TIC on said card to allow verification of said use of said card.

2. The method of claim 1 wherein said step of generating said TIC comprises the step of:

including said transaction key number (TKN) in said TIC to allow verification of said TIC by knowing said algorithm (N) and the location of said transaction key number (TKN) in said TIC.

3. The method of claim 1 further comprising the steps of:

using said personal identification number (E-PIN) as a decoding key in a decoding algorithm (N) to produce an algorithmic code number (ACN);

combining said algorithmic code number (ACN) and said transaction key number (TKN) to form at least a portion of said TIC.

4. The method of claim 1 further comprising the steps of:

selecting one of several accounts stored in said card;

reading a transaction amount entered into said card;

subtracting said transaction amount from a limit balance stored in said card for said selected account;

authorizing generation of said TIC if said transaction amount is less than said limit balance.

5. The method of claim 1 further comprising the steps of:

transforming said transaction amount from a foreign currency amount to a domestic currency amount prior to subtracting said transaction amount from said limit balance.

6. The method of claim 5 wherein said step of transforming said transaction amount further comprises the step of:

selecting an exchange rate from an exchange rate stored in said electronic memory and an exchange rate entered in said card.

7. The method of claim 1 further comprising the steps of:

providing means for performing financial transactions on said card with more than one transaction card company.

8. The method of claim 1 further comprising the steps of:

providing means for performing both credit and debit transactions on said card.

9. The method of claim 7 further comprising the steps of:

providing means for performing both credit and debit transactions for more than one transaction card company.

10. The method of claim 1 further comprising the steps of:

reading a currency exchange rate entered through said data entry means or said card;

computing a currency exchange amount from said currency exchange rate;

indicating said currency exchange amount on said card.

11. The method of claim 10 further comprising the step of:

debiting said currency exchange amount from a limit balance stored in said card.

12. The method of claim 1 further comprising the steps of:

reading a percentage amount entered through said data entry means for a tip for services performed;

computing a tip amount from said percentage amount and a transaction amount entered in said card;

indicating said tip amount and said transaction amount plus said tip amount on said card.

13. The method of claim 1 further comprising the steps of:

operating said card as a calculator.

14. The method of claim 1 further comprising the step of:

operating said card as a clock.

15. The method of claim 1 further comprising the steps of:

indicating a broker account number on said card;

reading a unit value amount for securities entered in said card;

reading a number entered in said card representative of the number of securities;

computing a total value for said securities by multiplying said unit value amount of said securities by said number of securities;

subtracting said total value from a limit balance of a selected account stored in said card;

authorizing generation of said TIC if said total value is less than said limit balance.

16. The method of claim 15 wherein said step of reading a value for securities comprises:

reading a fractional value for said securities and transforming said fractional value to a decimal value.

17. A method of selecting a personal identification number (PIN) in a unitary, self-contained card comprising the steps of:

comparing an access code entered in said card with an access code stored in said card;

granting access to a PIN storage file in said card upon favorable comparison of said entered access code and said stored access code;

reading a PIN entered in said card;

storing said PIN entered in said card in said PIN storage file.

18. The method of claim 17 further comprising the step of:

comparing a PIN selection code entered in said card with a PIN selection code stored in said card upon favorable comparison of said entered access code and said stored access code;

granting access to said PIN storage file in said card upon favorable comparison of both said entered access code and said stored access code, and said entered PIN selection code and said stored PIN selection code.

19. The method of claim 17 further comprising the steps of:

erasing said access code stored in said card;

providing a new access code for said card.

20. A method of verifying the use of a unitary, self-contained card by a card holder comprising:

storing a predetermined personal identification number (S-PIN) and an encryption algorithm (N) in an electronic memory means disposed in said card;

reading a personal identification number (E-PIN) entered into said card through a data entry means disposed on said card;

comparing said personal identification number (E-PIN) with said S-PIN in a data processing device disposed in said card to generate a PIN verification signal;

generating a transaction key number (TKN) in said data processing device;

generating a transaction identification code (G-TIC) in said data processing device by execution of said encryption algorithm (N) using said transaction key number (TKN), said transaction identification code (G-TIC) arranged in a preselected order (K) such that said transaction identification code (G-TIC) can be later verified by knowing both said encryption algorithm (N) and said preselected order (K);

displaying said transaction identification code (G-TIC) on said display means to allow recordation and subsequent verification of said transaction.

21. The method of claim 20 further comprising the steps of:

storing an account code in said electronic memory means;

displaying said account code on said display means to allow visual comparison of an account code embossed on said card and said account code displayed on said display means.

22. The method of claim 20 further comprising the steps of:

storing a balance limit in said electronic memory means;

reading a transaction amount entered through said data entry means;

comparing said balance limit and said transaction amount to provide authorization of a financial transaction;

decrementing said balance limit by said transaction amount to provide an updated balance limit.

23. The method of claim 20 further comprising the steps of:

storing a PIN attempt number in said electronic memory means;

accumulating the number of incorrect entries of said personal identification number (E-PIN) through said data entry means by a potential user of said card;

disabling further use of said card whenever said number of accumulated incorrect entries of said personal identification number (E-PIN) exceeds said PIN attempt number.

24. A method of updating a limit amount stored in a unitary, self-contained transaction card comprising the steps of:

reading a limit code entered into said card through said keyboard;

decoding said limit code in said card to produce an access code and a limit amount code;

comparing said access code decoded from said limit code with an access code stored in said card;

granting access to a limit file in said card upon favorable comparison of said access code decoded from said limit code and said access code stored in said card;

entering said limit amount code in said limit file in said card;

storing said limit amount code as a new limit amount for said card.

25. The method of claim 24 further comprising the steps of:

reading a personal identification number entered into said card;

verifying said PIN;

generating a transaction identification code on said card; and,

indicating said transaction identification code (TIC) on said card prior to reading said encoded limit code.

26. The method of claim 25 further comprising the steps of:

using said TIC to obtain said encoded limit code from a peripheral device.

27. The method of claim 25 further comprising the steps of:

selecting an account to update said limit amount from a plurality of accounts stored in said card.

28. The method of claim 24 further comprising the step of:

indicating said new limit on said card.

29. The method of claim 24 wherein said limit amount comprises a credit limit amount.

30. The method of claim 24 wherein said limit amount comprises a debit limit amount.

31. A method of using a unitary self-contained card system to gain access to a peripheral system comprising the steps of:

reading a personal identification number (E-PIN) entered in said card;

generating a transaction key number (TKN) in said card from a random number generator upon verification of said personal identification number (E-PIN) by said card;

generating an algorithmic code number (ACN) in said card from said transaction number (TKN) and an algorithm (N) stored in said card;

generating a transaction identification code (G-TIC) in said card which comprises said algorithmic code number (ACN);

indicating said transaction identification code (G-TIC) on said card;

reading a password entered in said computer system;

accessing a file of transaction identification codes (S-TICs) stored in said peripheral system for said password;

reading said transaction identification code (G-TIC) indicated on said card and entered into said computer system;

comparing said transaction identification code (G-TIC) entered in said peripheral system with said file of transaction identification codes (S-TICs);

granting access to said peripheral system upon favorable comparison of said transaction identification code (G-TIC) with said file of transaction identification codes (S-TICs).

32. The method of claim 31 further comprising the step of:

eliminating an S-TIC from said file of transaction identification codes corresponding to said G-TIC to prevent further use of said G-TIC by an unauthorized party.

33. The method of claim 31 further comprising the steps of:

generating a scrambling code (K) in said card;

scrambling said algorithmic code number (ACN) in accordance with said scrambling code (K);

generating a transaction identification code (G-TIC) in said card which comprises said scrambling code (K) and said algorithmic code number (ACN) scrambled in accordance with said scrambling code (K);

identifying said scrambling code (K) in said transaction identification code (G-TIC) in said computer system;

descrambling said transaction identification code (G-TIC) in said peripheral system.

34. A method of using a unitary self-contained card system to control access to a peripheral system comprising the steps of:

entering a personal identification number (E-PIN) in said card;

generating a plurality of transaction key numbers (TKNs) in said card from a random number generator upon verification of said personal identification number (E-PIN) by said card;

generating a plurality of algorithmic code numbers (ACNs) in said card from said transaction numbers (TKNs) and an algorithm (N) stored in said card;

generating a plurality of transaction identification codes (G-TICs) in said card which comprise said algorithmic code numbers (ACNs);

indicating said transaction identification codes (G-TICs) on said card;

reading a password entered in said peripheral system;

accessing a file of transaction identification codes (S-TICs) stored in said peripheral system system for said password;

reading said transaction identification codes (G-TICs) indicated on said card and entered into said peripheral system;

comparing said transaction identification codes (G-TICs) entered in said peripheral system with said file of transaction identification codes (S-TICs);

granting access to said peripheral system upon favorable comparison of said transaction identification codes (G-TICs) with said file of transaction identification codes (S-TICs).

35. The method of claim 34 further comprising the steps of:

generating a scrambling code (K) in said card for each of said algorithmic code numbers (ACNs);

scrambling said algorithmic code numbers (ACNs) in accordance with said scrambling codes (K);

generating a plurality of transaction identification codes (G-TICs) in said card which comprise said scrambling code (K) and said algorithmic code number (ACN) scrambled in accordance with said scrambling code (K);

identifying said scrambling codes (K) in said transaction identification codes (G-TICs);

descrambling said transaction identification codes (G-TICs) in said peripheral system.

36. The method of claim 34 wherein said step of generating a plurality of transaction key numbers (TKNs) comprises:

generating a first transaction key number (TKN);

generating subsequent transaction key numbers (TKNs) based upon a sequence of said first transaction key numbers (TKNs) so that comparison of said transaction identification codes (G-TICs) in said peripheral system with said file of transaction identification codes (S-TICs) must correspond in said sequence to produce a favorable comparison.

37. A method of using a unitary self-contained card system to control access to a peripheral system comprising the steps of:

reading a personal identification number (E-PIN) entered in said card;

generating a transaction key number (TKN) in said card from a random number generator upon verification of said personal identification number (E-PIN) by said card;

generating an algorithmic code number (G-ACN) in said card from said transaction key number (TKN) and an algorithm (N) stored in said card;

generating a transaction identification code (G-TIC) in said card which comprises said transaction key number (TKN) and said algorithmic code number (G-ACN);

indicating said transaction identification code (G-TIC) on said card;

reading a password entered in said peripheral system;

identifying said algorithm (N) stored in said peripheral system and assigned to said password;

reading said transaction identification code (G-TIC) entered in said peripheral system;

identifying said transaction key number (TKN) in said transaction identification code (G-TIC) entered in said peripheral system;

computing an algorithmic code number (C-ACN) in said peripheral system from said transaction key number (TKN) and said algorithm (N) assigned to said password;

identifying said algorithmic code number (G-ACN) in said transaction identification code (G-TIC) entered in said peripheral system;

comparing said algorithmic code number (G-ACN) identified from said transaction identification code (G-TIC) entered in said peripheral system with said algorithmic code number (C-ACN) computed in said peripheral system;

granting access to said peripheral system upon favorable comparison of said algorithmic code number (G-TIC) identified from said transaction identification number entered in said peripheral system and said algorithmic code number (C-ACN) computed in said peripheral system;

38. A method of using a unitary self-contained card system to control access to a peripheral system comprising the steps of:

reading a personal identification number (E-PIN) entered in said card;

generating a transaction key number (TKN) in said card from a random number generator upon verification of said personal identification number (E-PIN) in said card;

generating an algorithmic code number (G-ACN) in said card from said transaction key number (TKN) and an algorithm (N) stored in said card;

scrambling said transaction key number (TKN) and said algorithmic code number (G-ACN) in accordance with said scrambling order number (K);

generating a transaction identification code (G-TIC) in said card comprising said scrambling order number (K), said transaction key number (TKN) and said algorithmic code number (G-ACN) scrambled in accordance with said scrambling order number (K);

indicating said transaction identification code (G-TIC) on said card;

reading a password entered in said peripheral system;

identifying an algorithm (N) stored in said peripheral system and assigned to said password;

reading said transaction identification code (G-TIC) displayed on said card and entered into said peripheral system;

identifying said scrambling order number (K) in said transaction identification code (G-TIC) entered in said peripheral system;

descrambling said transaction identification code (G-TIC) in said peripheral system in accordance with said scrambling order number (K) identified in said transaction identification code (G-TIC) entered in said peripheral system;

identifying said transaction key number (TKN) in said transaction identification code (G-TIC) descrambled in said peripheral system;

computing an algorithmic code number (C-ACN) in said peripheral system from said transaction key number (TKN) identified in said transaction identification code (G-TIC) and said algorithm (N) assigned to said password;

identifying said algorithmic code number (G-ACN) in said transaction identification code (G-TIC) descrambled in said peripheral system;

identified from said transaction identification number (G-TIC) with said algorithmic code number (C-ACN) computed in said peripheral system;

granting access to said peripheral system upon favorable comparison of said algorithmic code number (G-ACN) identified from said transaction identification number and said algorithmic code number (C-ACN) computed in said peripheral system.

39. A method of using a unitary, self-contained card system to control access to a peripheral system comprising:

reading a personal identification number (E-PIN) entered in said card;

generating a transaction key number (TKN) in said card from a random number generator upon verification of said personal identification number (E-PIN) by said card;

generating an algorithmic code number (G-ACN) from said transaction key number (TKN) and a algorithmic code number (S-ACN) stored in said card;

generating a transaction identification code (G-TIC) comprising said algorithmic code number (G-ACN);

indicating said transaction identification code (G-TIC) on said card;

altering said transaction key number (TKN) in a predetermined manner a predetermined number of additional transaction identification codes (G-TICs) which are indicated on said card;

reading a password entered in said peripheral system;

accessing a file of transaction identification codes (S-TICs) stored in said peripheral system and assigned to said password, said transaction identification codes (S-TICs) stored in said peripheral system and having a predetermined sequential order corresponding to a sequence of transaction identification codes (G-TICs) generated by said card as a result of altering said transaction key number (TKN) in said predetermined manner;

reading said transaction identification code (G-TIC) produced by said card and entered in said peripheral system and said predetermined number of additional transaction identification codes (G-TIC) produced by said card and entered in said peripheral system;

comparing said transaction identification code (G-TIC) produced by said card and said predetermined number of additional transaction identification codes (G-TICs) produced by said card with said file of transaction identification codes (S-TICs) stored in said peripheral system;

granting access to said peripheral system if said transaction identification code (G-TIC) produced by said card and said predetermined number of additional transaction identification codes (G-TICs) produced by said card match said file of transaction identification codes (S-TICs) in successive sequential order.

40. A method of using a unitary, self-contained card system to control access to a peripheral system comprising:

reading a personal identification number (E-PIN) entered in said card;

generating a transaction key number (TKN) in said card from a random number generator upon verification of said personal identification number (E-PIN) by said card;

generating an algorithmic code number (G-ACN) from said transaction key number (TKN) and an algorithm (N) stored in said card;

generating a scrambling order number (K) from a random number generator;

generating a transaction identification code (G-TIC) comprising said scrambling order number (K) and said algorithmic code number (G-ACN) scrambled in accordance with said scrambling order number (K);

generating a predetermined number of additional scrambling order numbers (Ks);

scrambling said predetermined number of additional algorithmic code numbers (G-ACNs) with said predetermined number of additional scrambling order numbers (Ks);

generating a predetermined number of additional transaction identification codes (G-TICs) comprising said predetermined number of additional scrambling order numbers (Ks) and said additional algorithmic code numbers (G-ACNs) scrambled in accordance with said predetermined number of additional scrambling order numbers (Ks);

indicating said predetermined number of additional transaction identification codes (G-TICs) on said card;

reading a password entered in said peripheral system;

accessing a file of algorithmic code numbers (S-ACNs) stored in said peripheral system and assigned to said password, said algorithmic code numbers (S-ACNs) having a predetermined sequential order corresponding to a sequence of said algorithmic code numbers (G-ACN) and said additional algorithmic code numbers (G-ACNSs) generated by said card as a result of altering said transaction key number (TKN) in said predetermined manner;

reading said transaction identification code (G-TIC) and said predetermined number of additional transaction identification codes (G-TICs) entered into said peripheral system;

identifying said scrambling order number (K) in said transaction identification code (G-TIC) and said additional scrambling order numbers (Ks) in said additional transaction identification codes (G-TICs);

descrambling said transaction identification code (G-TIC) and said additional transaction identification codes (G-TICs);

identifying said algorithmic code number (G-ACN) from said descrambled transaction identification code (G-TIC);

identifying said additional algorithmic code numbers (G-ACNs) from said descrambled additional transaction identification codes (G-TICs);

comparing said algorithmic code number (G-ACN) and said predetermined number of additional algorithmic code numbers (G-ACNs) with said file of stored algorithmic code numbers (S-ACNs) generated in said peripheral system;

granting access to said peripheral system if said algorithmic code number (G-ACN) and said predetermined number of additional algorithmic code numbers (G-ACNs) match said file of stored algorithmic code numbers (S-ACNs) in successive sequential order.

41. A method of using a unitary, self-contained card system to control access to a peripheral system comprising:

reading a personal identification number (E-PIN) entered in said card;

generating a transaction key number (TKN) in said card from a random number generator upon verification of said E-PIN by said card;

generating an algorithmic code number (G-ACN) from said transaction number (TKN) and a algorithm (N) stored in said card;

generating a scrambling order number (K) from a random number generator;

generating a transaction identification code (G-TIC) comprising said scrambling order number (K) and said algorithmic code number (G-ACN) scrambled in accordance with said scrambling order number (K);

indicating said transaction identification code (G-TIC) on said card;

altering said transaction number (G-TIC) in a predetermined manner a predetermined number of times to produce a predetermined number of additional algorithmic code numbers (G-ACNs) in said peripheral system;

generating a predetermined number of additional scrambling order numbers (Ks);

scrambling said predetermined number of additional algorithmic code numbers (G-ACNs) with said predetermined number of additional scrambling order numbers (Ks);

generating a predetermined number of additional transaction identification codes (G-TICs) comprising said predetermined number of additional scrambling order numbers (Ks) and said additional algorithmic code numbers (G-ACNs) scrambled in accordance with said predetermined number of additional scrambling order numbers (Ks);

indicating said predetermined number of additional transaction identification codes (G-TICs) on said card;

entering a password in said peripheral system;

identifying an algorithm (N) stored in said peripheral system and assigned to said password;

generating a file of possible algorithmic code numbers (C-ACNs) in said peripheral system by altering said algorithm (N) stored in said peripheral system and assigned to said password in said predetermined manner;

entering said transaction identification code (G-TIC) and said predetermined number of additional transaction identification codes (G-TICs) into said peripheral system;

identifying said scrambling order number (K) in said transaction identification code (G-TIC) and said additional scrambling order numbers (Ks) in said additional transaction identification codes (G-TICs);

descrambling said transaction identification code (G-TIC) and said additional transaction identification codes (G-TICs);

identifying said algorithmic code number (G-ACN) from said descrambled transaction identification codes (G-TIC);

identifying said additional algorithmic code numbers (G-ACNs) from said descrambled additional transaction identification codes (G-TICs);

comparing said algorithmic code number (G-ACN) and said predetermined number of additional algorithmic code numbers (G-ACNs) with said file of possible algorithmic code numbers (C-ACNs) generated in said peripheral system;

granting access to said peripheral system if said algorithmic code number (G-ACN) and said predetermined number of additional algorithmic code numbers (G-ACNs) match said file of possible algorithmic code numbers (C-ACNs) in successive sequential order.

42. A method of using a unitary, self-contained card system to control access to a peripheral system comprising:

reading a personal identification number (E-PIN) entered in said card;

generating a transaction key number (TKN) in said card from a random number generator in response to verification of said personal identification number (E-PIN) in said card;

generating an algorithmic code number (G-ACN) from said transaction key number (TKN) and an algorithm (N) stored in said card;

generating a transaction identification code (G-TIC) comprising said algorithmic code number (G-ACN);

indicating said transaction identification code (G-ACN);

altering said transaction key number (TKN) in a predetermined manner a predetermined number of times to produce a predetermined number of additional transaction identification codes (G-TIC) which are indicated on said card;

reading a password entered in said peripheral system;

identifying an algorithm (N) stored in said peripheral system and assigned to said password;

generating a file of possible transaction identification codes (C-TICs) in said peripheral system by altering said algorithm (N) stored in said peripheral system and assigned to said password in said predetermined manner;

reading said transaction identification code (G-TIC) generated by said card and said predetermined number of additional transaction identification codes (G-TICs) generated by said card and entered in said peripheral system;

comparing said transaction identification code (G-TIC) generated by said card and said predetermined number of additional transaction identification codes (G-TICs) generated by said card with said file of possible transaction codes (C-TICs) generated in said peripheral system;

granting access to said peripheral system if said transaction identification code (G-TIC) generated by said card and said predetermined number of additional transaction identification codes (G-TICs) generated by said card match said file of possible transaction codes (C-TICs) in successive sequential order.

43. A method of using a unitary, self-contained card to control access to a peripheral system comprising the steps of:

verifying a personal identification number (PIN) entered in said card;

generating a seed number (C-seed) from a sequence generator in said card;

computing a transaction identification code (G-TIC) by applying said C-seed to an algorithm (C-DES) stored in said card;

indicating said G-TIC on said card;

reading a password entered into said peripheral device:

accessing a seed number (P-seed) and an algorithm (P-DES) assigned to said password;

computing an expected transaction identification code (P-TIC) by applying said P-seed to said P-DES;

reading said G-TIC entered into said peripheral device;

comparing said G-TIC and said P-TIC;

granting access to said peripheral device if said G-TIC and P-TIC compare.

44. The method of claim 43 further comprising the steps of:

sequencing said P-seed if said G-TIC and said P-TIC do not match;

indicating said P-seed on said peripheral device;

reading said P-seed entered into said card;

applying said P-seed to said C-DES to compute a second transaction identification code (G2-TIC);

indicating said G2-TIC on said card;

reading said G2-TIC entered into said peripheral device;

applying said P-seed to said P-DES to compute a second expected transaction identification code (P2-TIC);

comparing said G2-TIC and said P2-TIC;

granting access to said peripheral device if said G2-TIC and said P2-TIC match.

45. The method of claim 44 further comprising the steps of:

applying said P-seed to said sequence generator in said card to synchronize said sequence generator in said card with a sequence generator for generating said P-seed in said computer.

46. A method of using a unitary, self-contained card to control access to a peripheral system comprising the steps of:

verifying a personal identification number (PIN) entered in said card;

generating a seed number (C-seed) from a sequence generator in said card;

computing a transaction identification code (G-TIC) by applying said C-seed to an algorithm (C-DES) stored in said card;

indicating said G-TIC on said card;

reading a password entered into said peripheral device:

accessing a seed number (P-seed) and an algorithm (P-DES) assigned to said password;

computing an expected transaction identification code (P-TIC) by applying said P-seed to said P-DES;

reading said G-TIC entered into said peripheral device;

comparing said G-TIC and said P-TIC;

sequencing said P-seed if said G-TIC and said P-TIC match;

indicating said P-seed on said peripheral device;

reading said P-seed entered into said card;

applying said P-seed to said C-DES to compute a second transaction identification code (G2-TIC);

indicating said G2-TIC on said card;

reading said G2-TIC entered into said peripheral device;

applying said P-seed to said P-DES to compute a second expected transaction identification code (P2-TIC);

comparing said G2-TIC and said P2-TIC;

granting access to said peripheral device if said G2-TIC and said P2-TIC match.

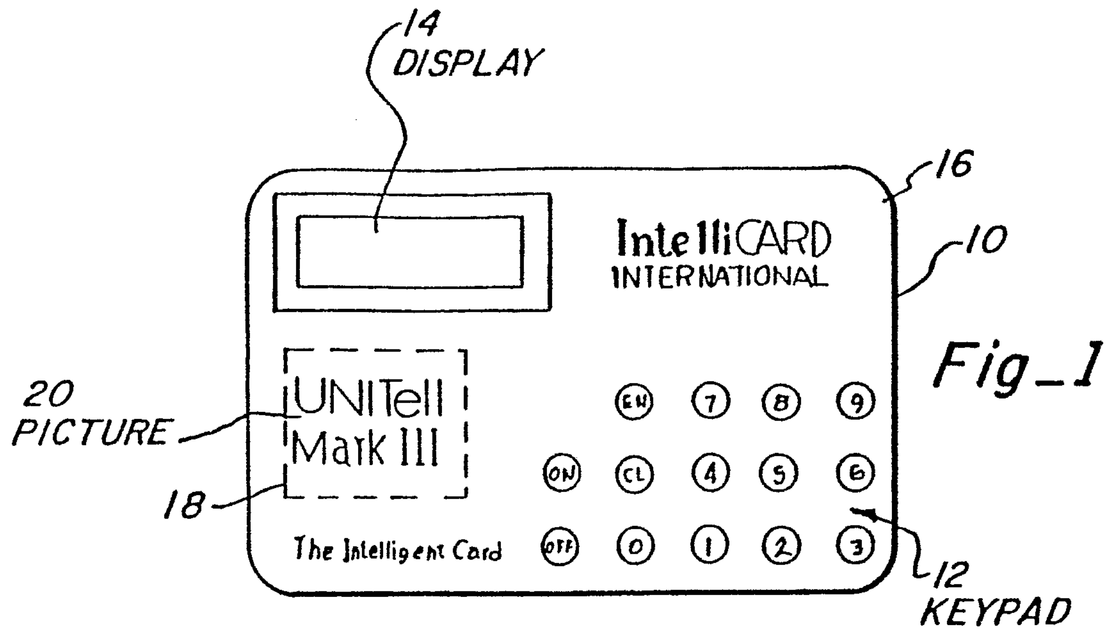


Fig_1

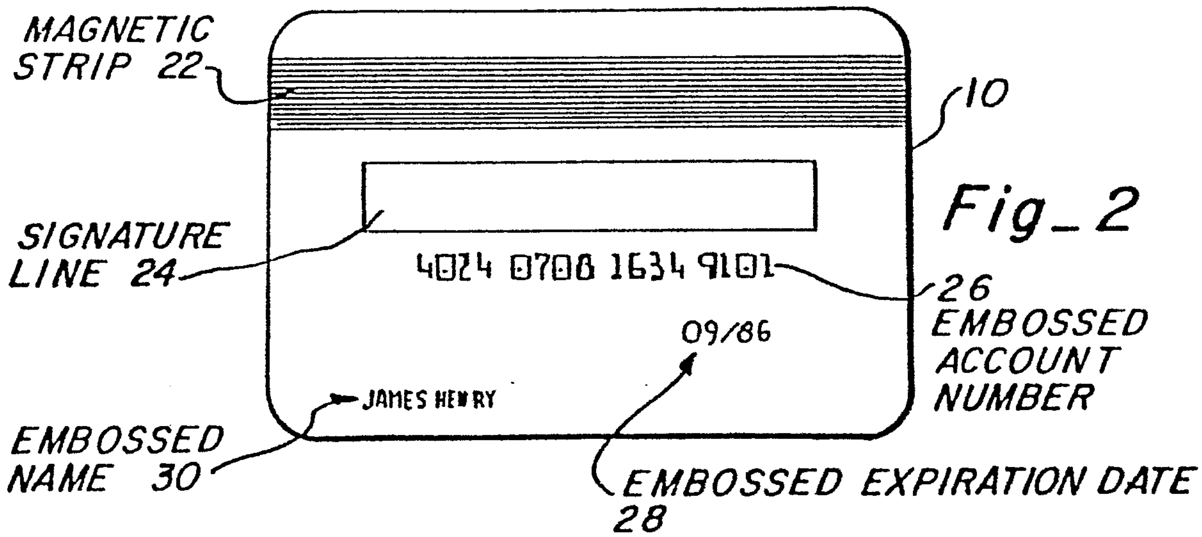


Fig_2

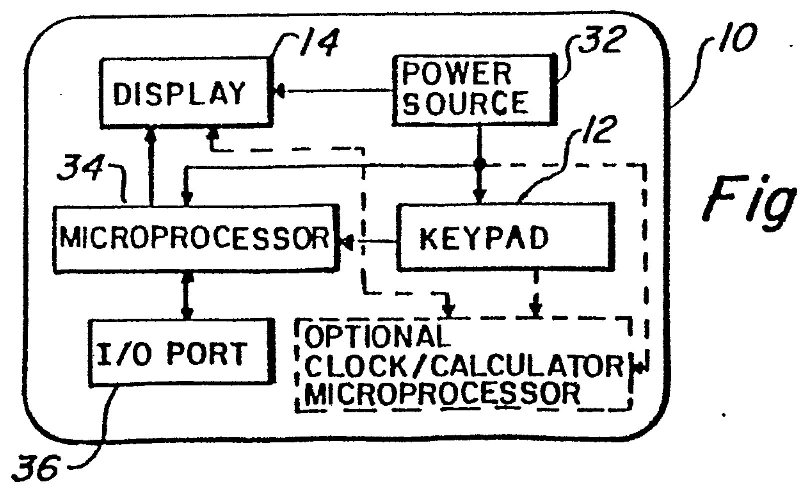


Fig_3

0234954

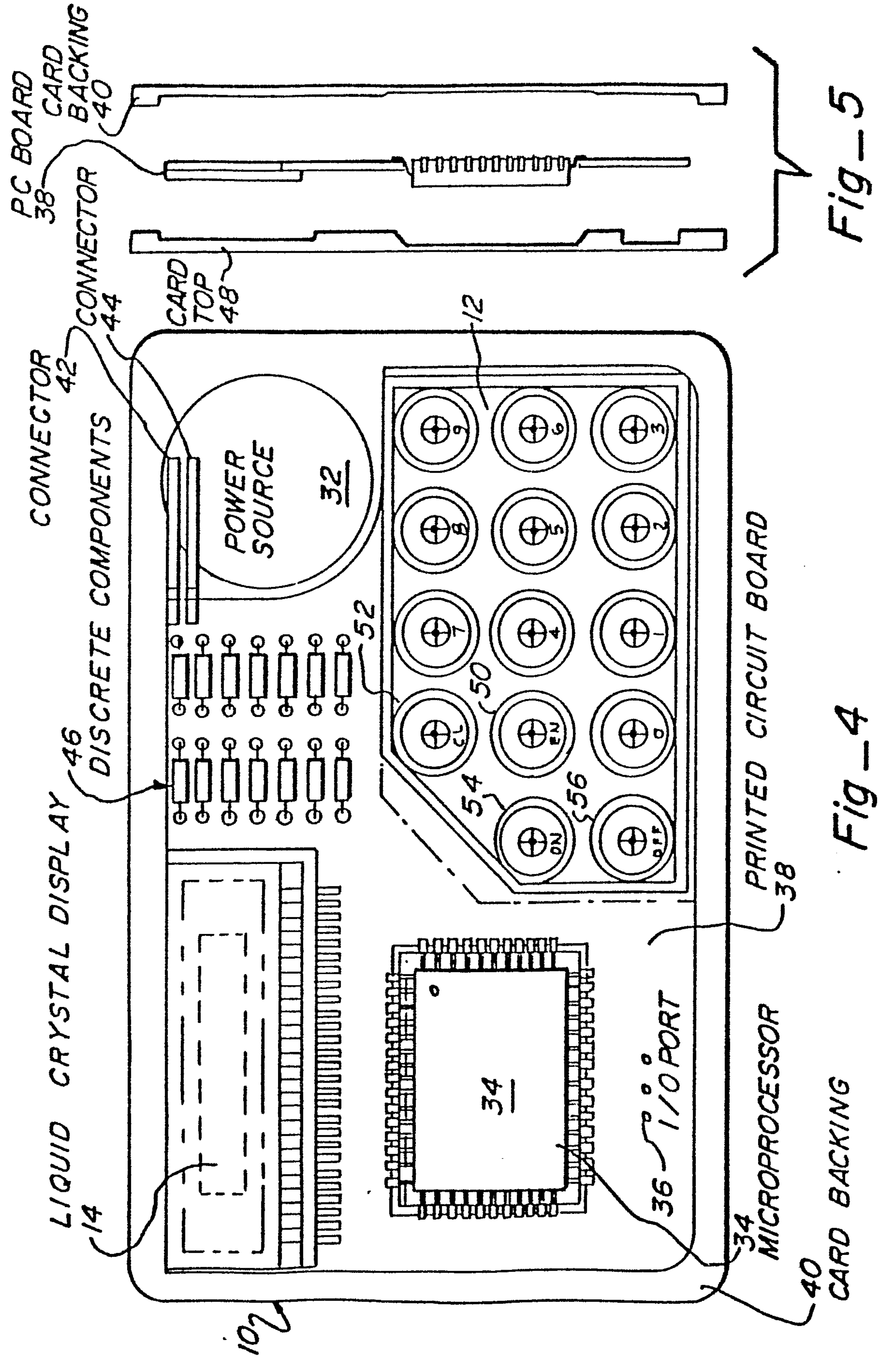


Fig_4

Fig_5

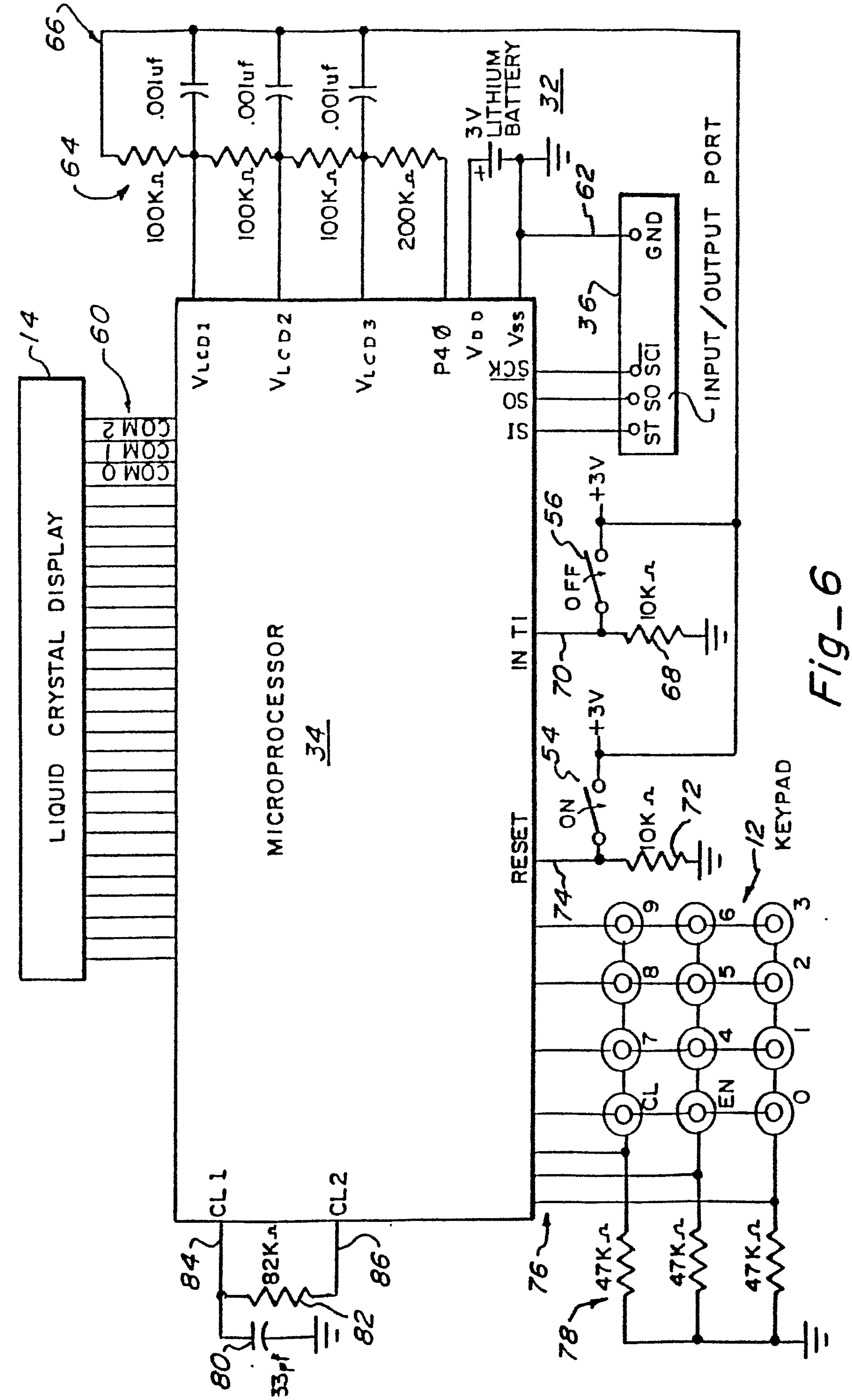

66
64
.001uf
.001uf
.001uf
100KΩ
100KΩ
100KΩ
200KΩ
3V LITHIUM BATTERY
32
62
14
LIQUID CRYSTAL DISPLAY
60
COM 2
COM 1
COM 0
$V_{LCD1}$
$V_{LCD2}$
$V_{LCD3}$
P4Ø
$V_{DD}$
Vss
SCK
SO
SI
ST SO SCI
GND
36
INPUT/OUTPUT PORT
MICROPROCESSOR
34
IN T1
OFF
56
+3V
10KΩ
70
68
RESET
ON
54
+3V
10KΩ
72
74
12
KEYPAD
9
8
7
CL
6
5
4
EN
3
2
1
0
CL 1
CL 2
84
82KΩ
86
82
80
33pf
76
78
47KΩ
47KΩ
47KΩ


Fig_6

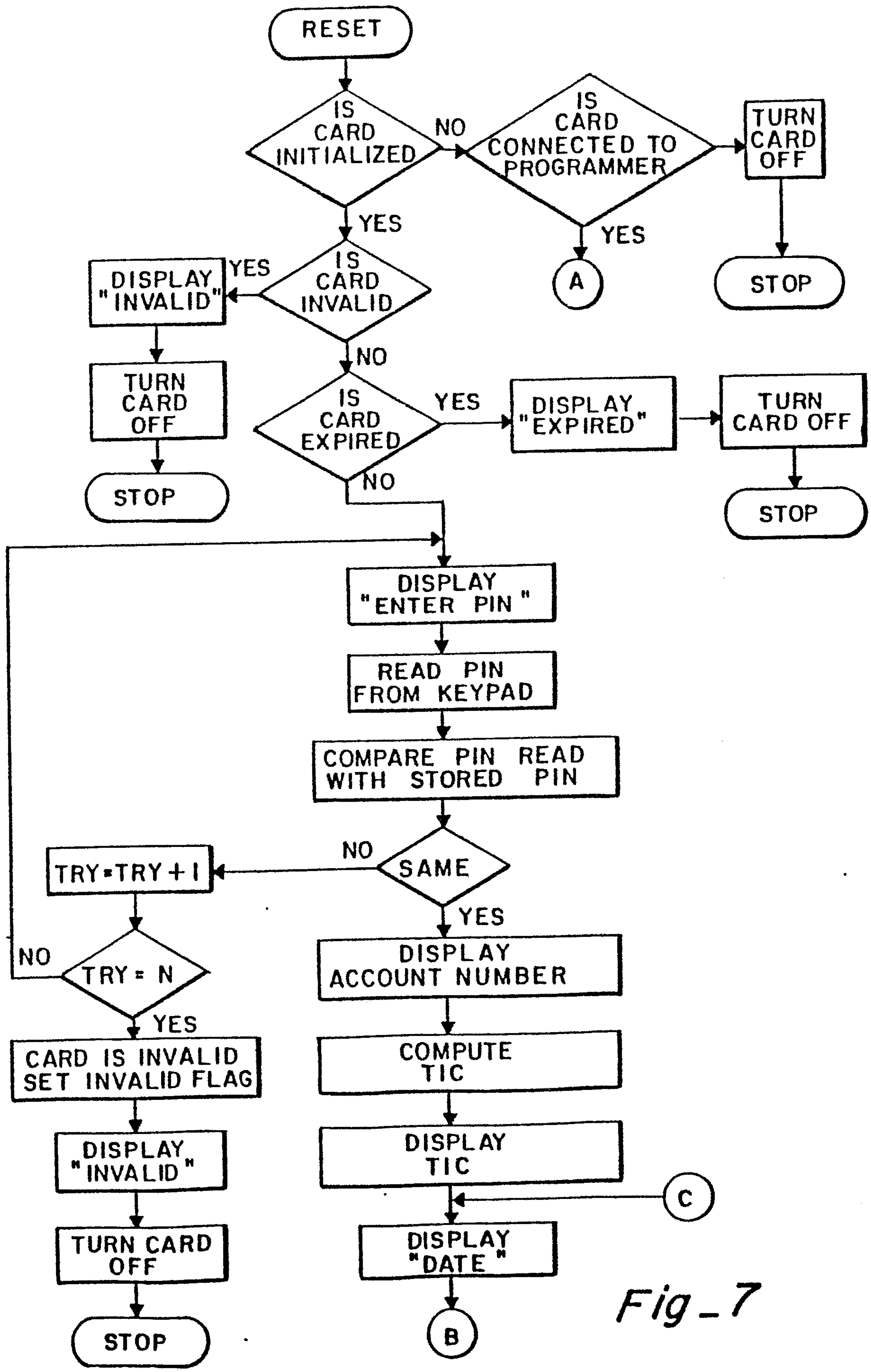
RESET
IS CARD INITIALIZED
NO
IS CARD CONNECTED TO PROGRAMMER
TURN CARD OFF
YES
A
STOP
YES
IS CARD INVALID
YES
DISPLAY "INVALID"
TURN CARD OFF
STOP
NO
IS CARD EXPIRED
YES
DISPLAY "EXPIRED"
TURN CARD OFF
STOP
NO
DISPLAY "ENTER PIN"
READ PIN FROM KEYPAD
COMPARE PIN READ WITH STORED PIN
SAME
NO
TRY=TRY+1
TRY = N
NO
YES
CARD IS INVALID SET INVALID FLAG
DISPLAY "INVALID"
TURN CARD OFF
STOP
YES
DISPLAY ACCOUNT NUMBER
COMPUTE TIC
DISPLAY TIC
C
DISPLAY "DATE"
B

Fig_7

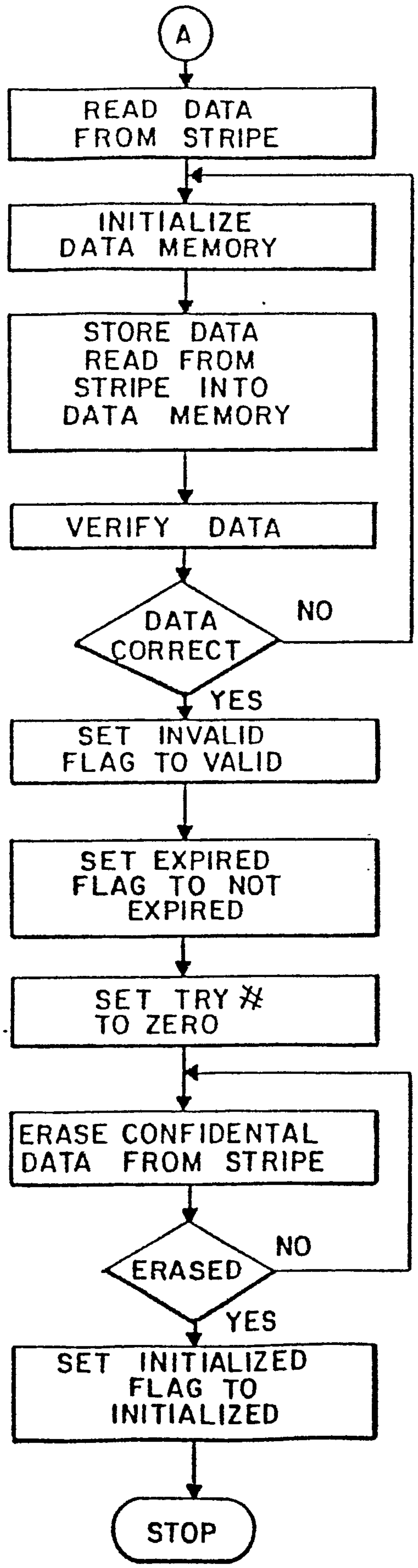
A
READ DATA FROM STRIPE
INITIALIZE DATA MEMORY
STORE DATA READ FROM STRIPE INTO DATA MEMORY
VERIFY DATA
DATA CORRECT
NO
YES
SET INVALID FLAG TO VALID
SET EXPIRED FLAG TO NOT EXPIRED
SET TRY # TO ZERO
ERASE CONFIDENTAL DATA FROM STRIPE
ERASED
NO
YES
SET INITIALIZED FLAG TO INITIALIZED
STOP

Fig_9

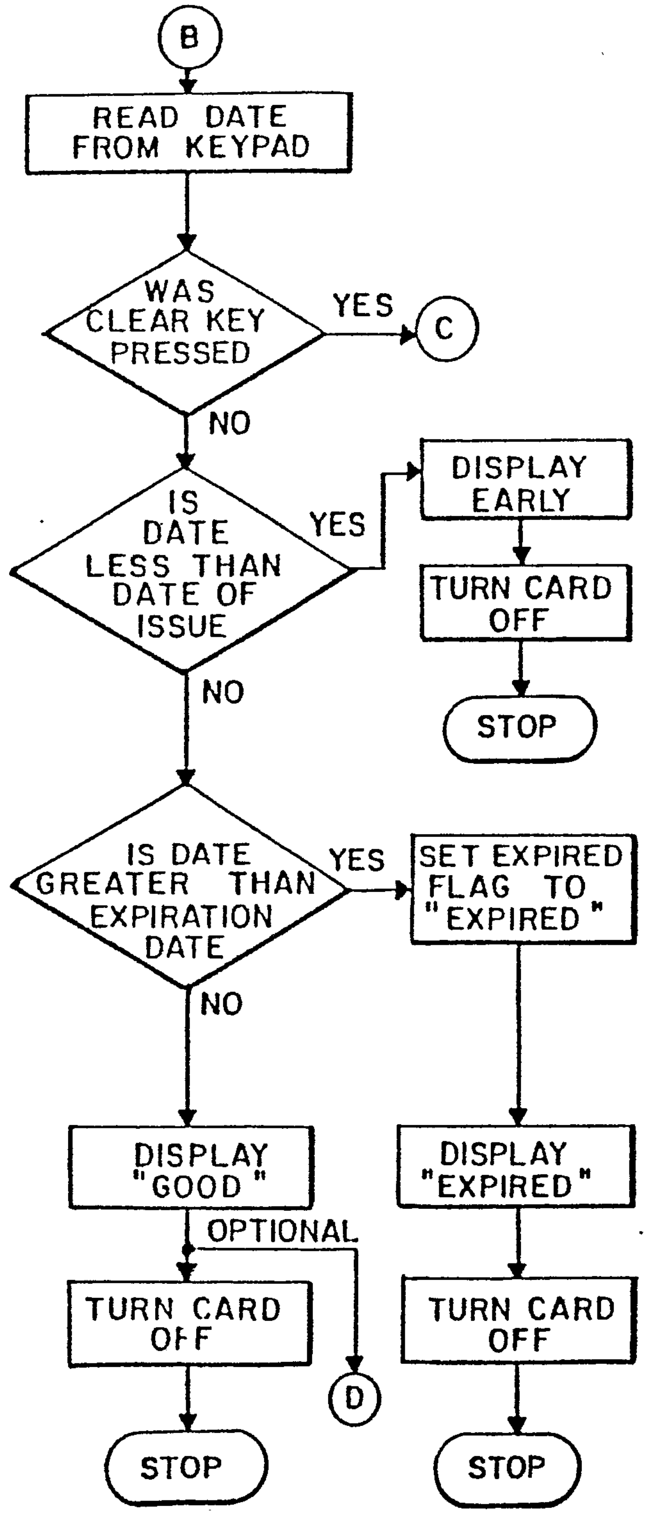
B
READ DATE FROM KEYPAD
WAS CLEAR KEY PRESSED
YES
C
NO
IS DATE LESS THAN DATE OF ISSUE
YES
DISPLAY EARLY
TURN CARD OFF
STOP
NO
IS DATE GREATER THAN EXPIRATION DATE
YES
SET EXPIRED FLAG TO "EXPIRED"
NO
DISPLAY "GOOD"
OPTIONAL
TURN CARD OFF
D
STOP
DISPLAY "EXPIRED"
TURN CARD OFF
STOP

Fig_8

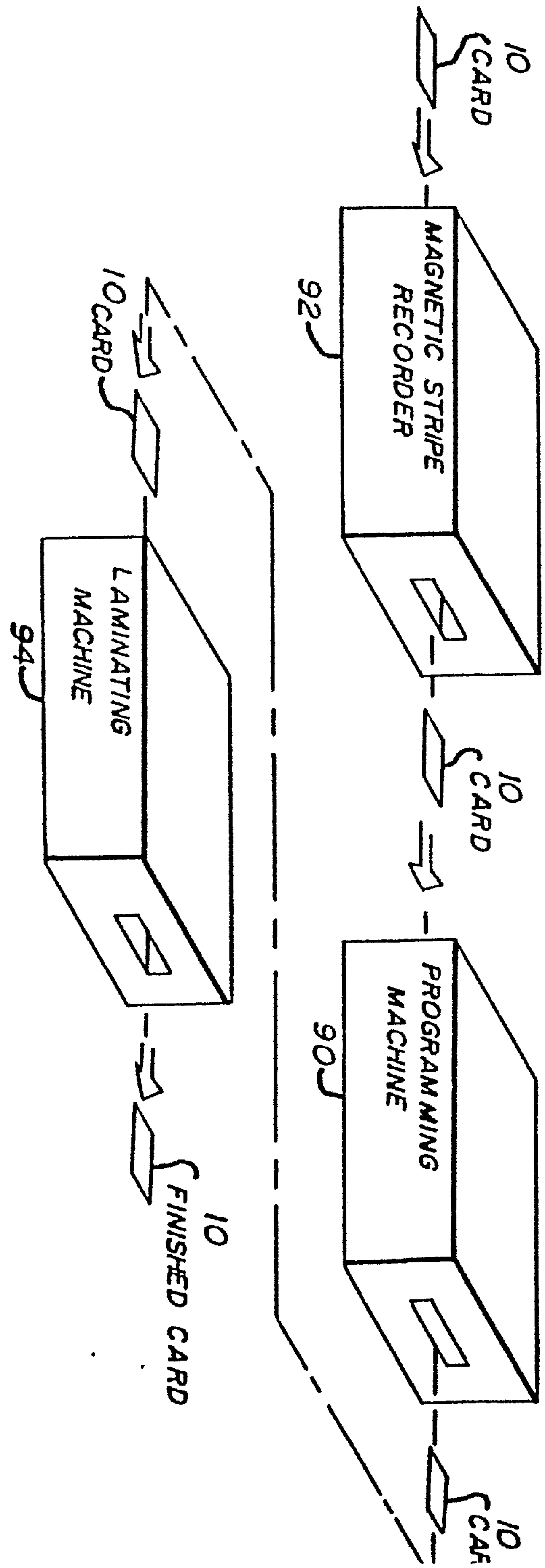
10
CARD
MAGNETIC STRIPE RECORDER
92
10
CARD
PROGRAMMING MACHINE
90
10
CARD
10
CARD
LAMINATING MACHINE
94
10
FINISHED CARD

Fig—10

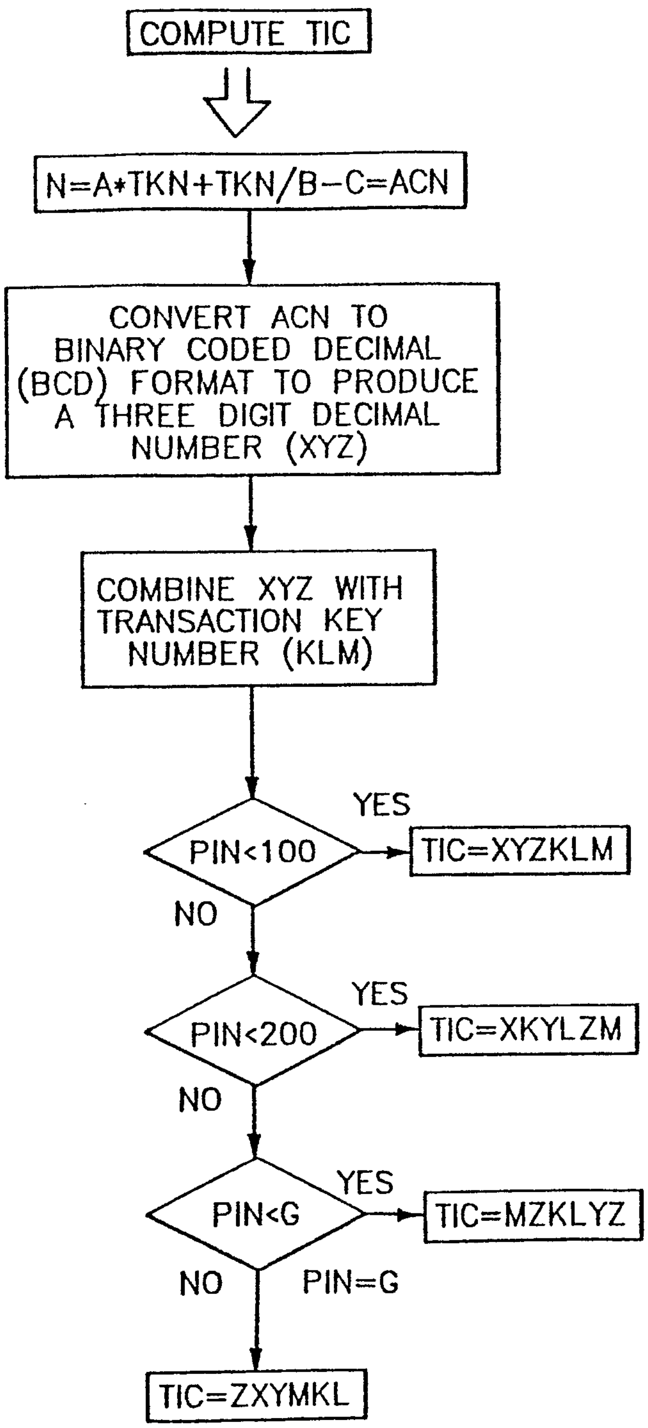
COMPUTE TIC
N=A*TKN+TKN/B–C=ACN
CONVERT ACN TO BINARY CODED DECIMAL (BCD) FORMAT TO PRODUCE A THREE DIGIT DECIMAL NUMBER (XYZ)
COMBINE XYZ WITH TRANSACTION KEY NUMBER (KLM)
PIN<100
YES
TIC=XYZKLM
NO
PIN<200
YES
TIC=XKYLZM
NO
PIN<G
YES
TIC=MZKLYZ
NO
PIN=G
TIC=ZXYMKL

Fig_12

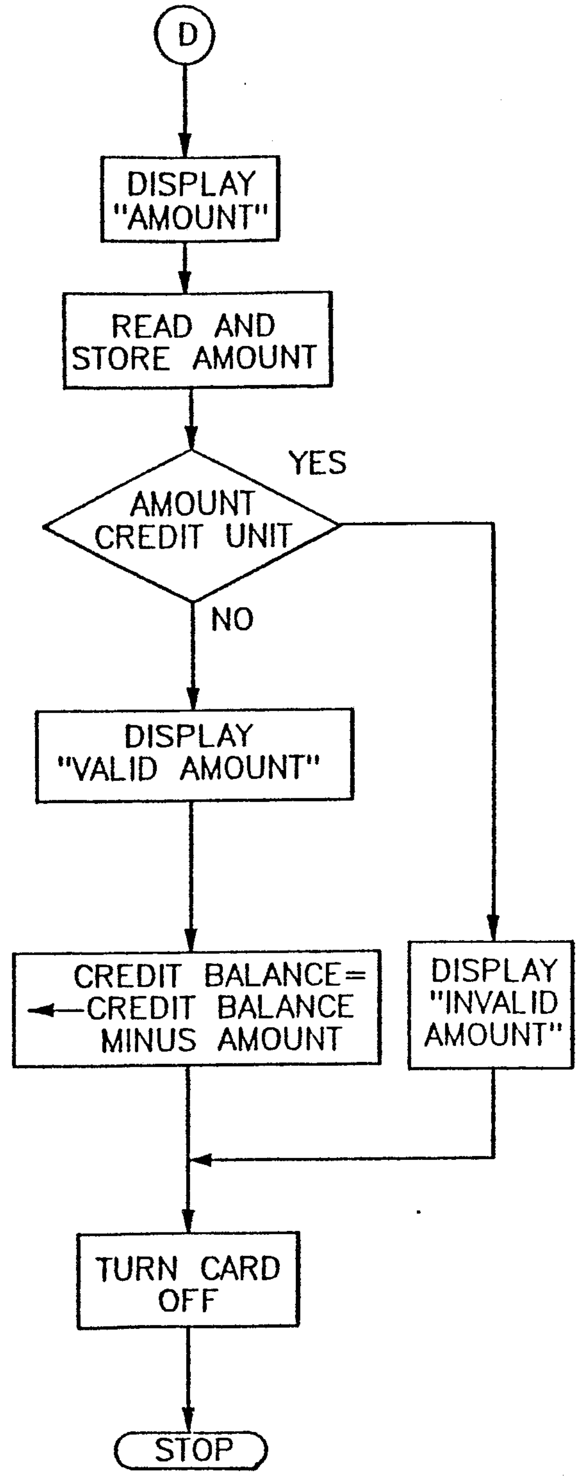
D
DISPLAY "AMOUNT"
READ AND STORE AMOUNT
AMOUNT CREDIT UNIT
YES
NO
DISPLAY "VALID AMOUNT"
CREDIT BALANCE= CREDIT BALANCE MINUS AMOUNT
DISPLAY "INVALID AMOUNT"
TURN CARD OFF
STOP

Fig_11

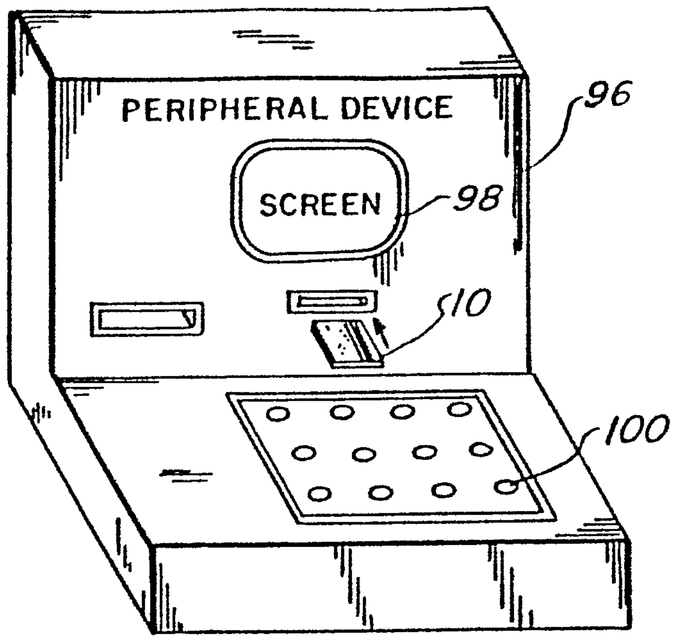
PERIPHERAL DEVICE
SCREEN
96
98
10
100

Fig_ 13

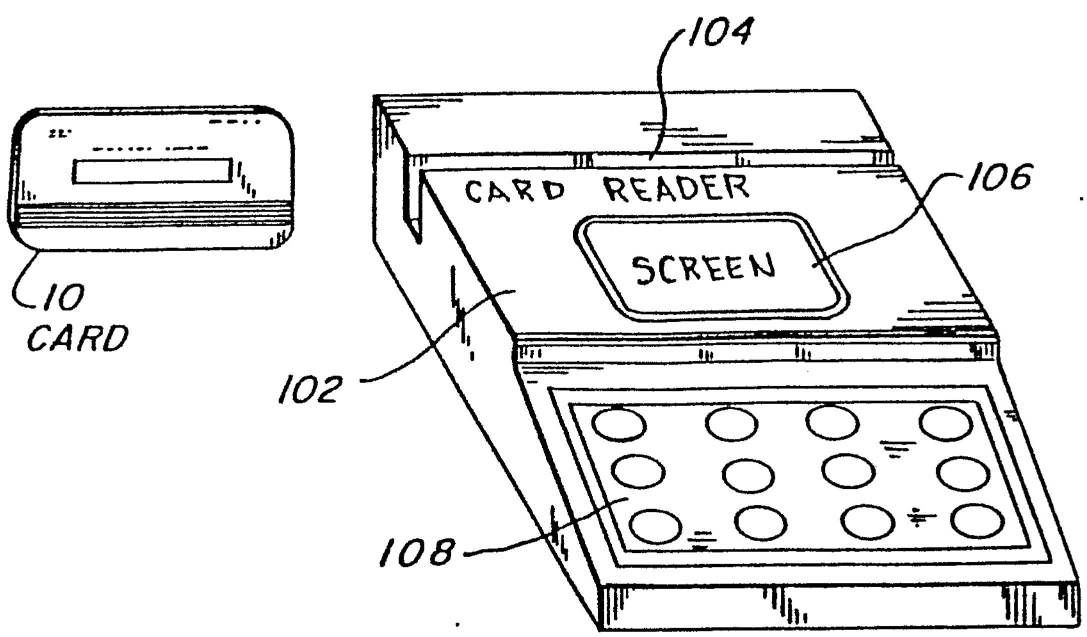
104
CARD READER
106
SCREEN
10
CARD
102
108

Fig_ 14

0234954

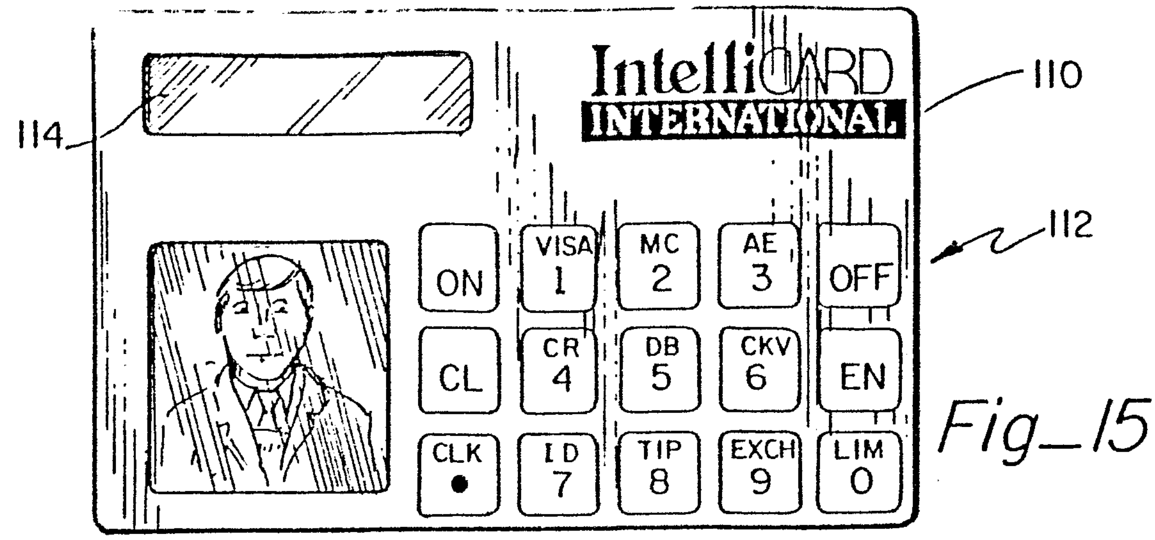


Fig_15

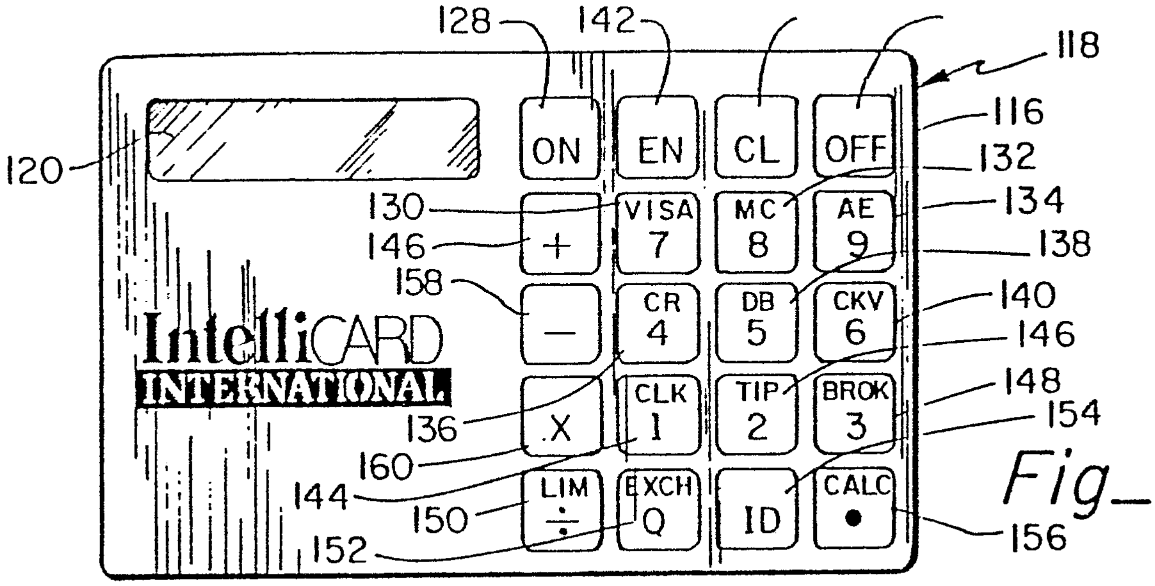


Fig_16

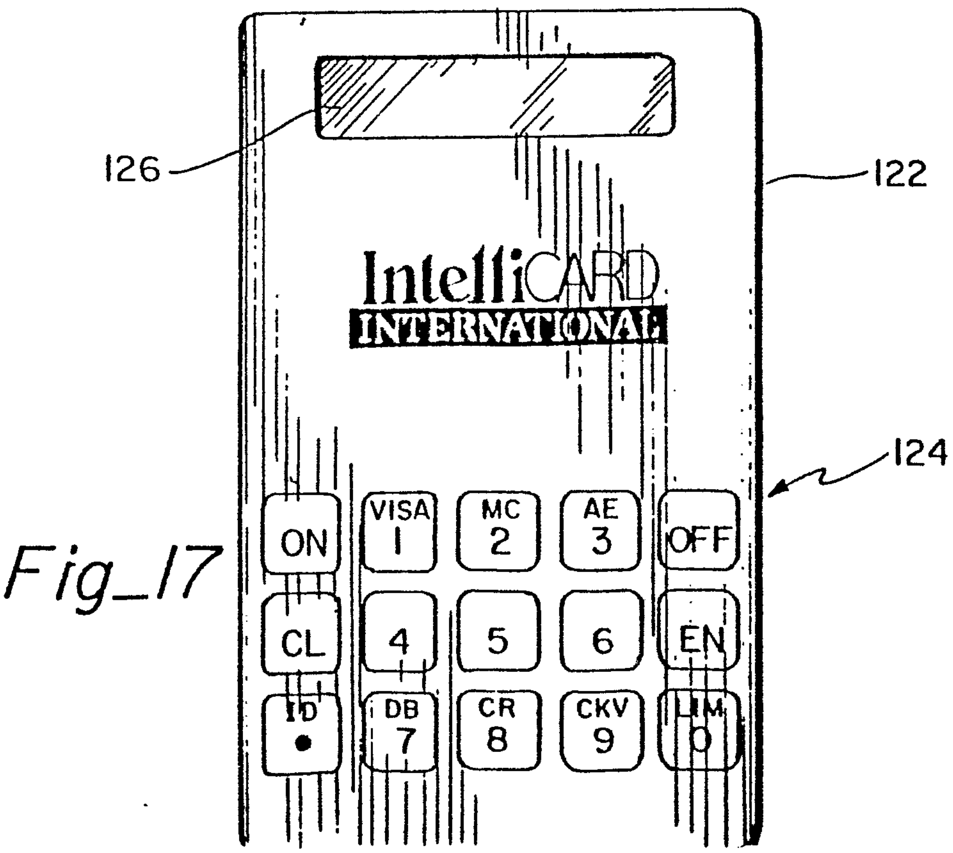


Fig_17

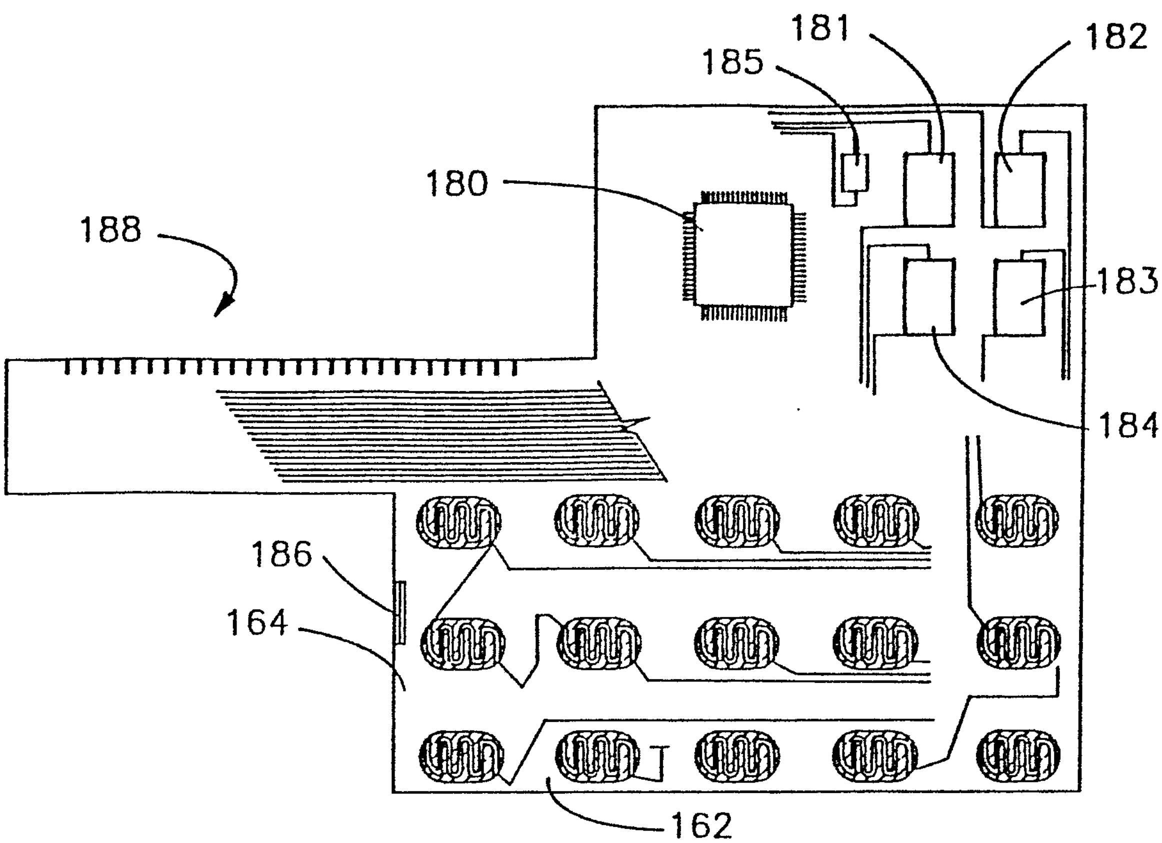
181
182
185
180
188
183
184
186
164
162

Fig_18

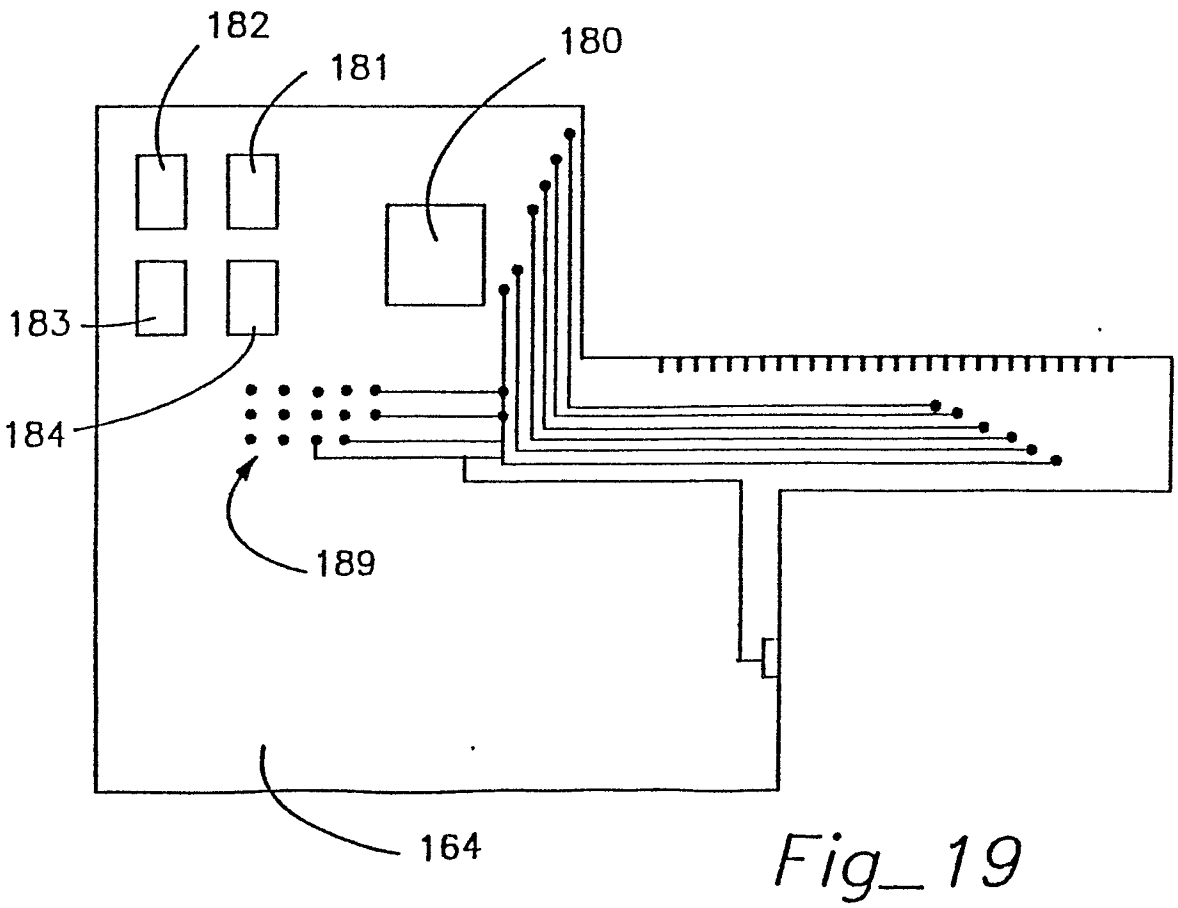
182
181
180
183
184
189
164

Fig_19

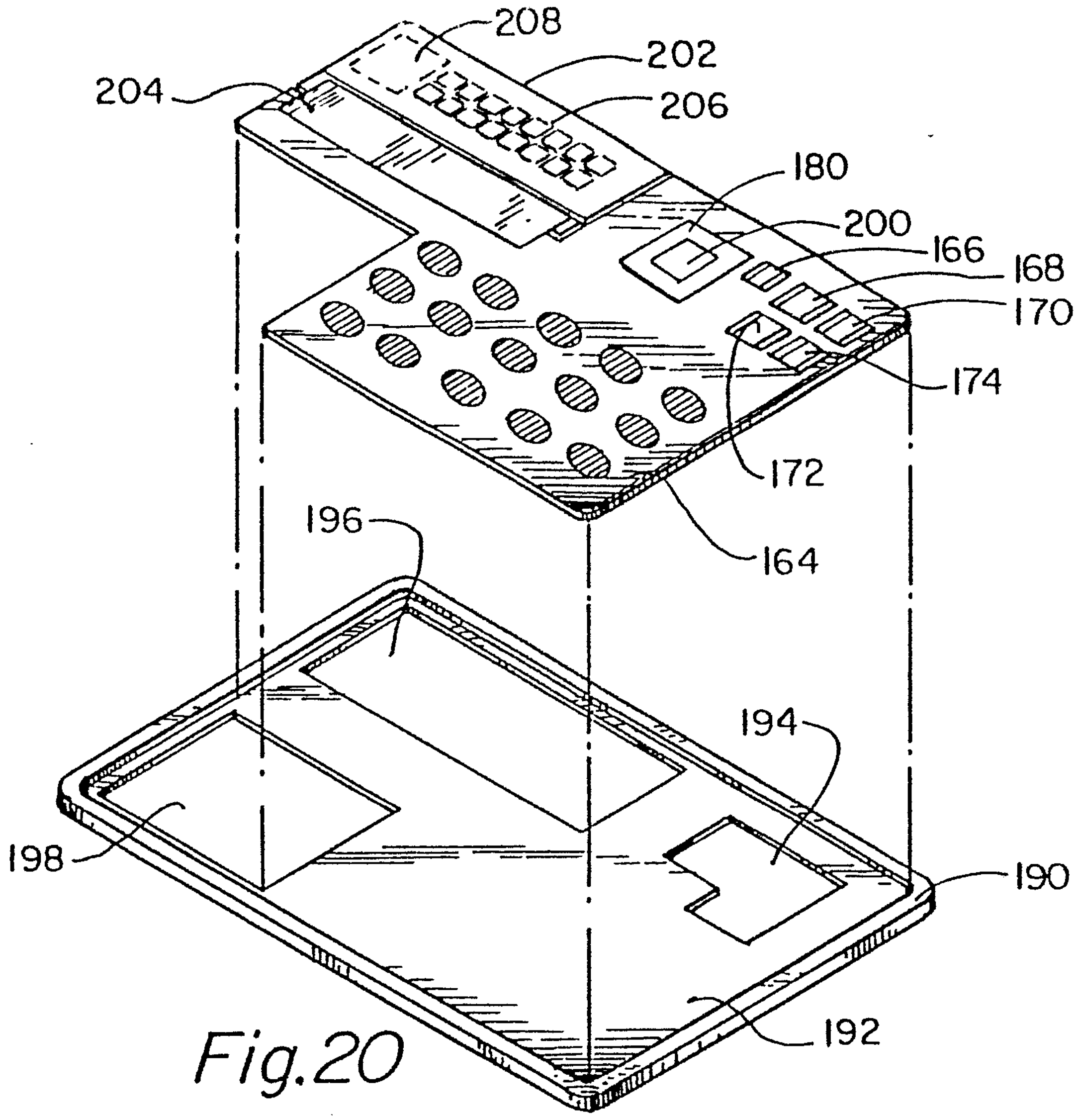


Fig.20

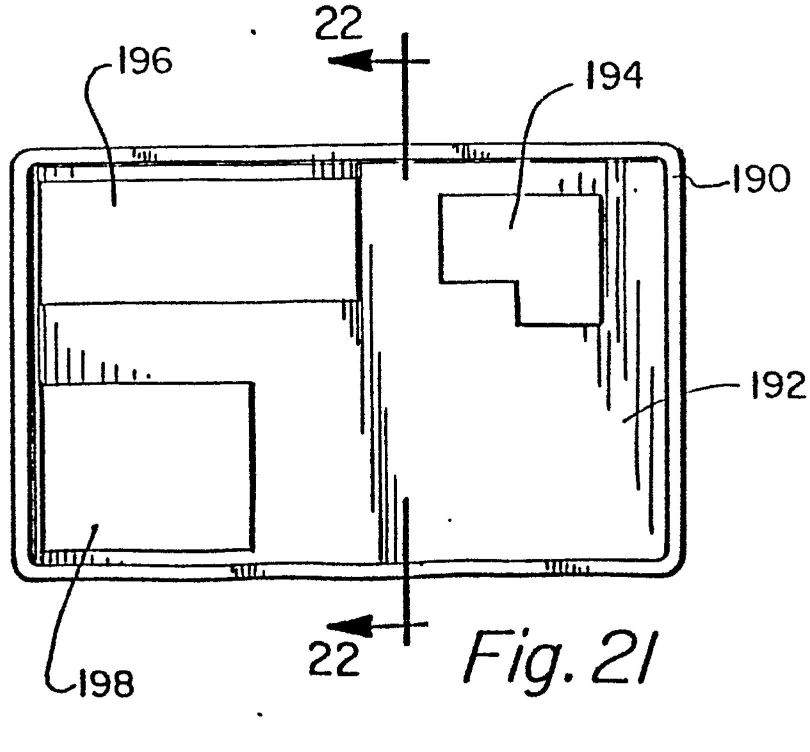


Fig. 21

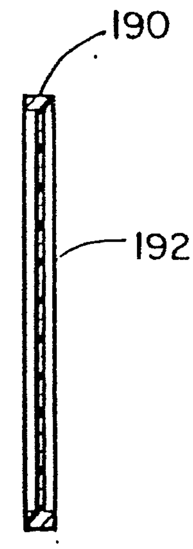


Fig.22

0234954

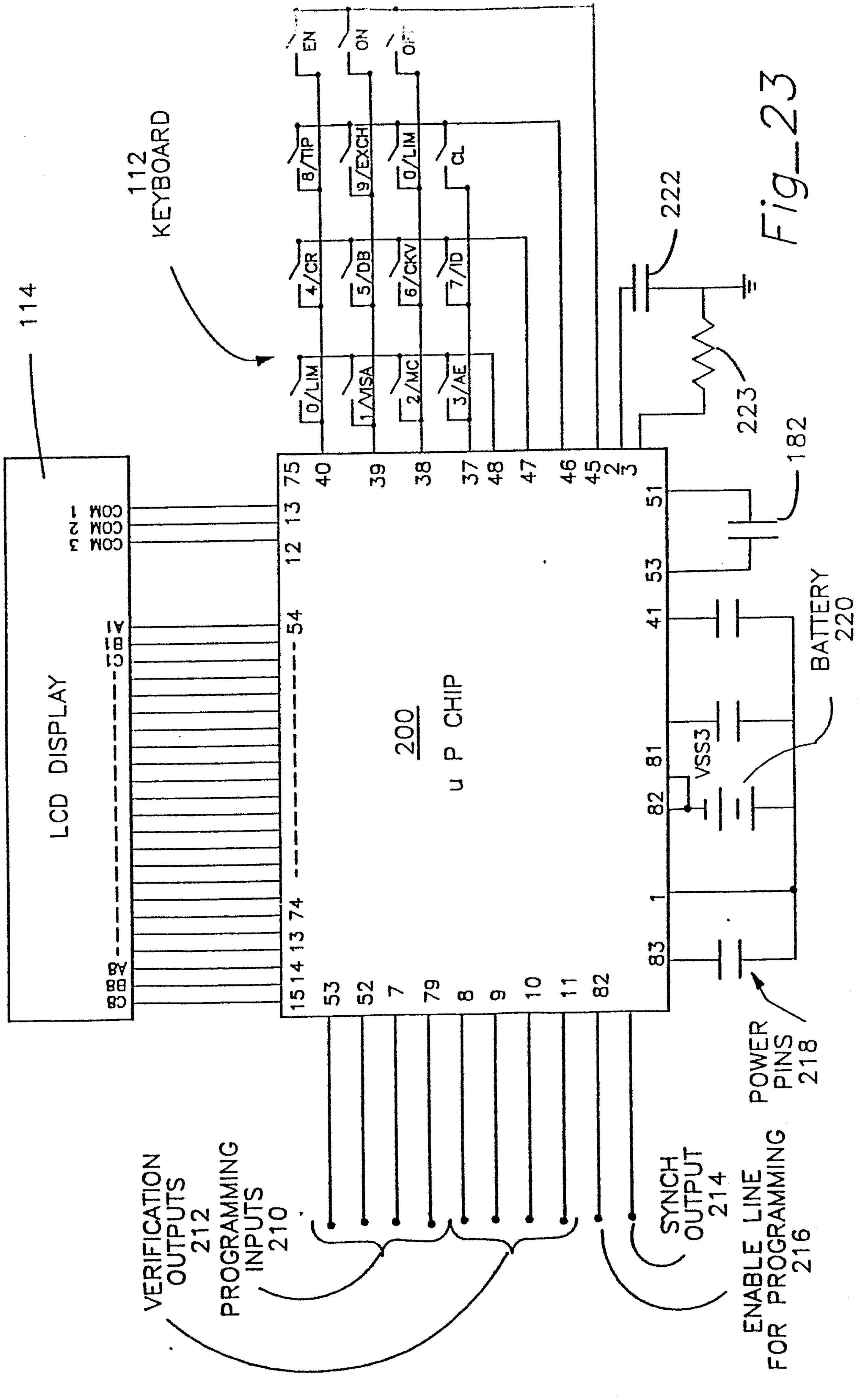


Fig_23

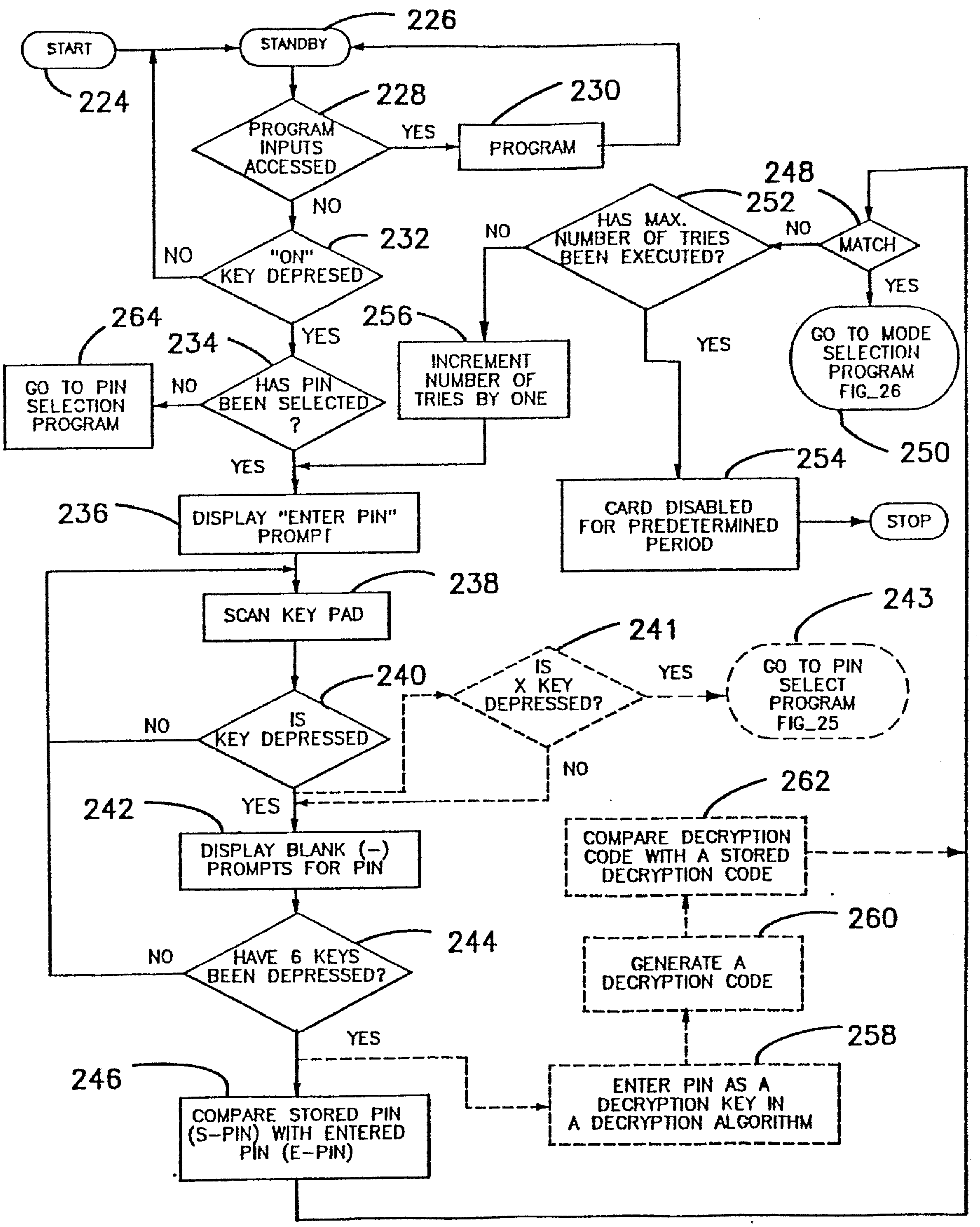

START
224
STANDBY
226
PROGRAM INPUTS ACCESSED
228
YES
PROGRAM
230
NO
"ON" KEY DEPRESED
232
NO
YES
HAS PIN BEEN SELECTED ?
234
NO
GO TO PIN SELECTION PROGRAM
264
YES
DISPLAY "ENTER PIN" PROMPT
236
SCAN KEY PAD
238
IS KEY DEPRESSED
240
NO
YES
IS X KEY DEPRESSED?
241
YES
NO
GO TO PIN SELECT PROGRAM FIG_25
243
DISPLAY BLANK (–) PROMPTS FOR PIN
242
HAVE 6 KEYS BEEN DEPRESSED?
244
NO
YES
COMPARE STORED PIN (S-PIN) WITH ENTERED PIN (E-PIN)
246
ENTER PIN AS A DECRYPTION KEY IN A DECRYPTION ALGORITHM
258
GENERATE A DECRYPTION CODE
260
COMPARE DECRYPTION CODE WITH A STORED DECRYPTION CODE
262
MATCH
248
NO
YES
GO TO MODE SELECTION PROGRAM FIG_26
250
HAS MAX. NUMBER OF TRIES BEEN EXECUTED?
252
NO
YES
INCREMENT NUMBER OF TRIES BY ONE
256
CARD DISABLED FOR PREDETERMINED PERIOD
254
STOP


Fig_24

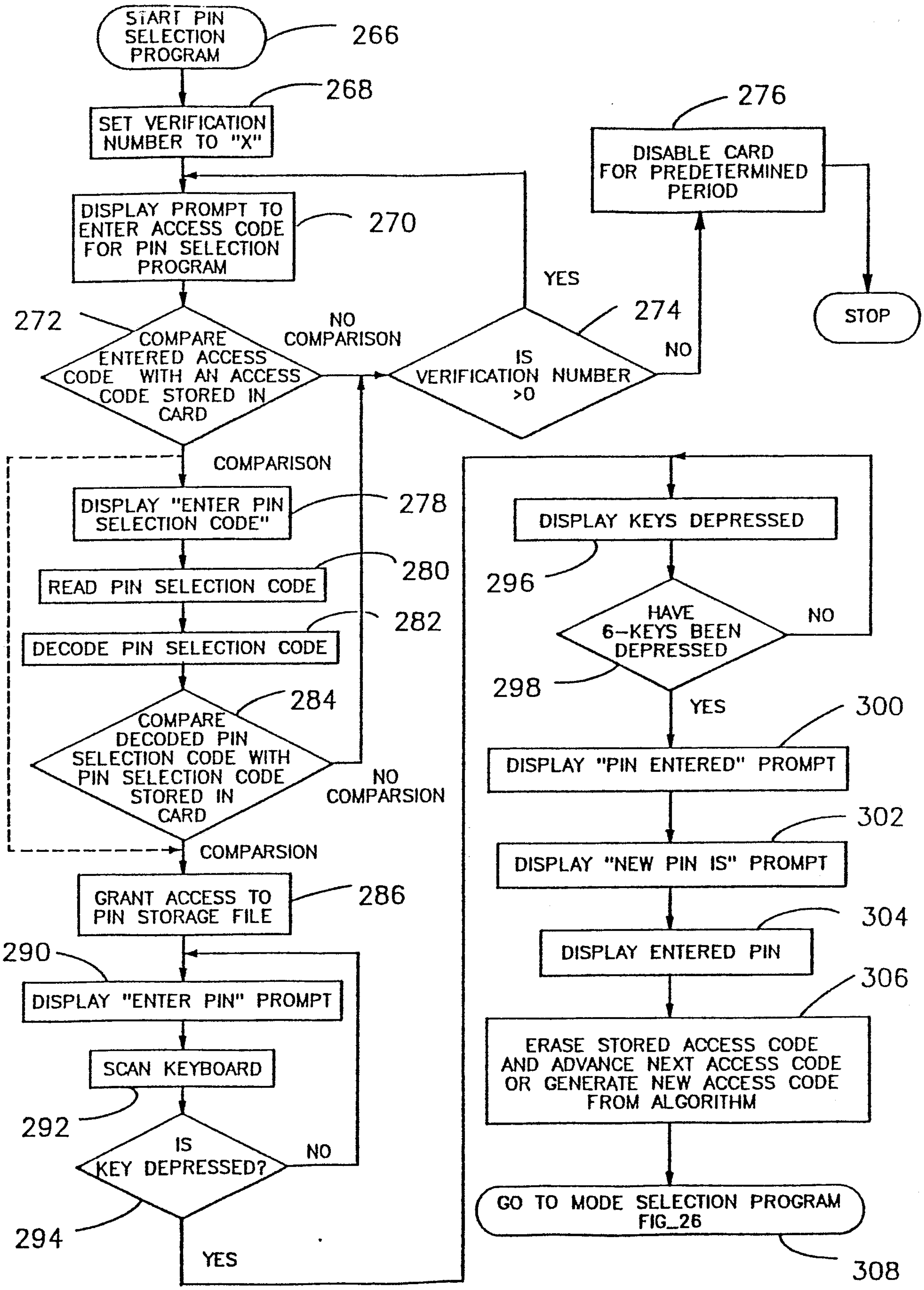
START PIN SELECTION PROGRAM
266
SET VERIFICATION NUMBER TO "X"
268
DISPLAY PROMPT TO ENTER ACCESS CODE FOR PIN SELECTION PROGRAM
270
272
COMPARE ENTERED ACCESS CODE WITH AN ACCESS CODE STORED IN CARD
NO COMPARISON
IS VERIFICATION NUMBER >0
274
YES
NO
DISABLE CARD FOR PREDETERMINED PERIOD
276
STOP
COMPARISON
DISPLAY "ENTER PIN SELECTION CODE"
278
READ PIN SELECTION CODE
280
DECODE PIN SELECTION CODE
282
COMPARE DECODED PIN SELECTION CODE WITH PIN SELECTION CODE STORED IN CARD
284
NO COMPARSION
COMPARSION
GRANT ACCESS TO PIN STORAGE FILE
286
290
DISPLAY "ENTER PIN" PROMPT
SCAN KEYBOARD
292
IS KEY DEPRESSED?
NO
294
YES
DISPLAY KEYS DEPRESSED
296
HAVE 6-KEYS BEEN DEPRESSED
NO
298
YES
DISPLAY "PIN ENTERED" PROMPT
300
DISPLAY "NEW PIN IS" PROMPT
302
DISPLAY ENTERED PIN
304
ERASE STORED ACCESS CODE AND ADVANCE NEXT ACCESS CODE OR GENERATE NEW ACCESS CODE FROM ALGORITHM
306
GO TO MODE SELECTION PROGRAM FIG_26
308

Fig_25

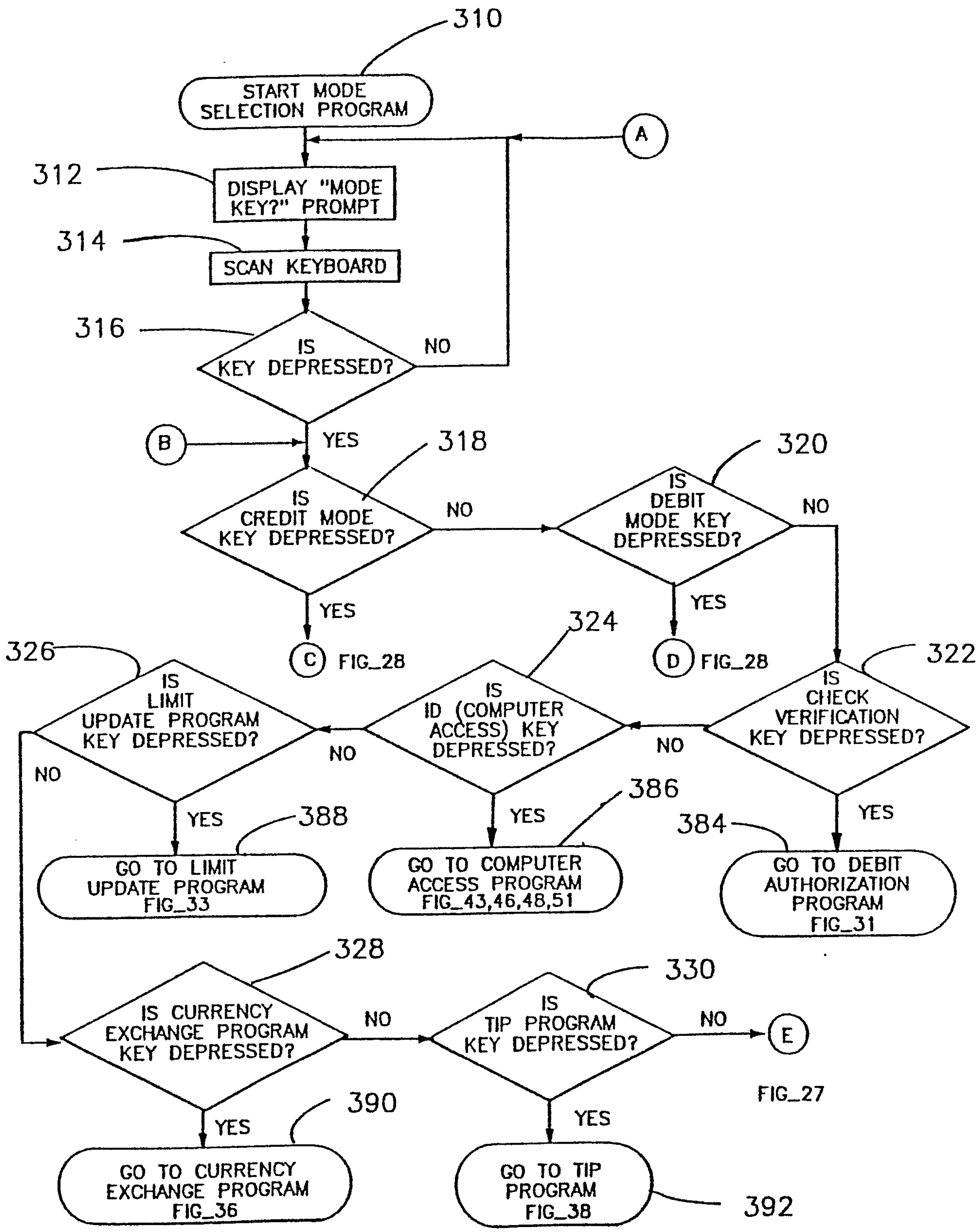
310
START MODE SELECTION PROGRAM
A
312
DISPLAY "MODE KEY?" PROMPT
314
SCAN KEYBOARD
316
IS KEY DEPRESSED?
NO
B
YES
318
IS CREDIT MODE KEY DEPRESSED?
NO
320
IS DEBIT MODE KEY DEPRESSED?
NO
YES
C FIG_28
YES
D FIG_28
326
IS LIMIT UPDATE PROGRAM KEY DEPRESSED?
324
IS ID (COMPUTER ACCESS) KEY DEPRESSED?
322
IS CHECK VERIFICATION KEY DEPRESSED?
NO
NO
NO
YES
388
GO TO LIMIT UPDATE PROGRAM FIG_33
YES
386
GO TO COMPUTER ACCESS PROGRAM FIG_43,46,48,51
384
YES
GO TO DEBIT AUTHORIZATION PROGRAM FIG_31
328
IS CURRENCY EXCHANGE PROGRAM KEY DEPRESSED?
NO
330
IS TIP PROGRAM KEY DEPRESSED?
NO
E
FIG_27
YES
390
GO TO CURRENCY EXCHANGE PROGRAM FIG_36
YES
GO TO TIP PROGRAM FIG_38
392

Fig_26

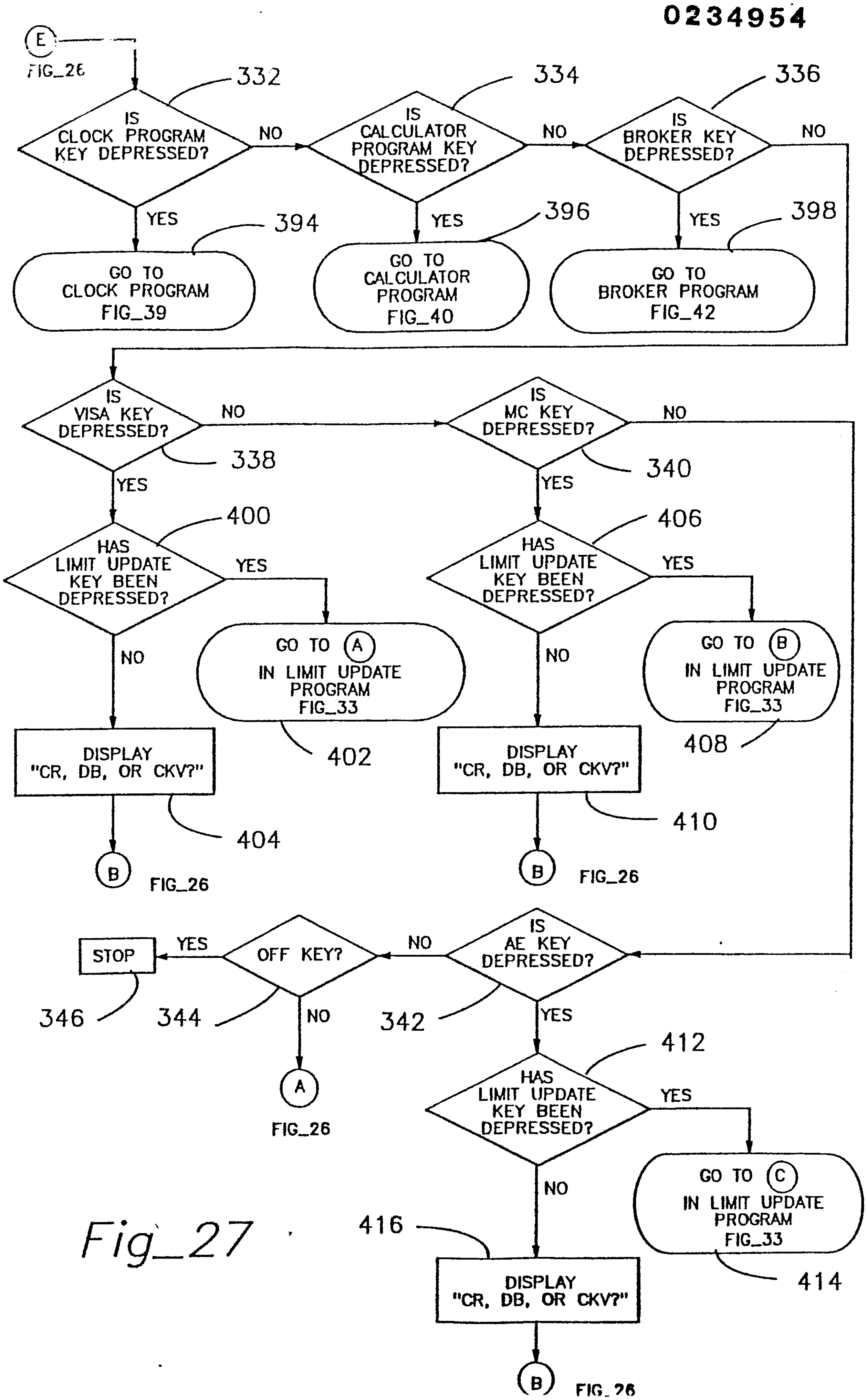
E
FIG_26
332
IS CLOCK PROGRAM KEY DEPRESSED?
NO
334
IS CALCULATOR PROGRAM KEY DEPRESSED?
NO
336
IS BROKER KEY DEPRESSED?
NO
YES
394
GO TO CLOCK PROGRAM FIG_39
YES
396
GO TO CALCULATOR PROGRAM FIG_40
YES
398
GO TO BROKER PROGRAM FIG_42
IS VISA KEY DEPRESSED?
NO
338
IS MC KEY DEPRESSED?
NO
340
YES
400
HAS LIMIT UPDATE KEY BEEN DEPRESSED?
YES
GO TO A IN LIMIT UPDATE PROGRAM FIG_33
402
NO
DISPLAY "CR, DB, OR CKV?"
404
B
FIG_26
YES
406
HAS LIMIT UPDATE KEY BEEN DEPRESSED?
YES
GO TO B IN LIMIT UPDATE PROGRAM FIG_33
408
NO
DISPLAY "CR, DB, OR CKV?"
410
B
FIG_26
STOP
YES
OFF KEY?
NO
IS AE KEY DEPRESSED?
346
344
NO
342
A
FIG_26
YES
412
HAS LIMIT UPDATE KEY BEEN DEPRESSED?
YES
GO TO C IN LIMIT UPDATE PROGRAM FIG_33
414
NO
416
DISPLAY "CR, DB, OR CKV?"
B
FIG_26

Fig_27

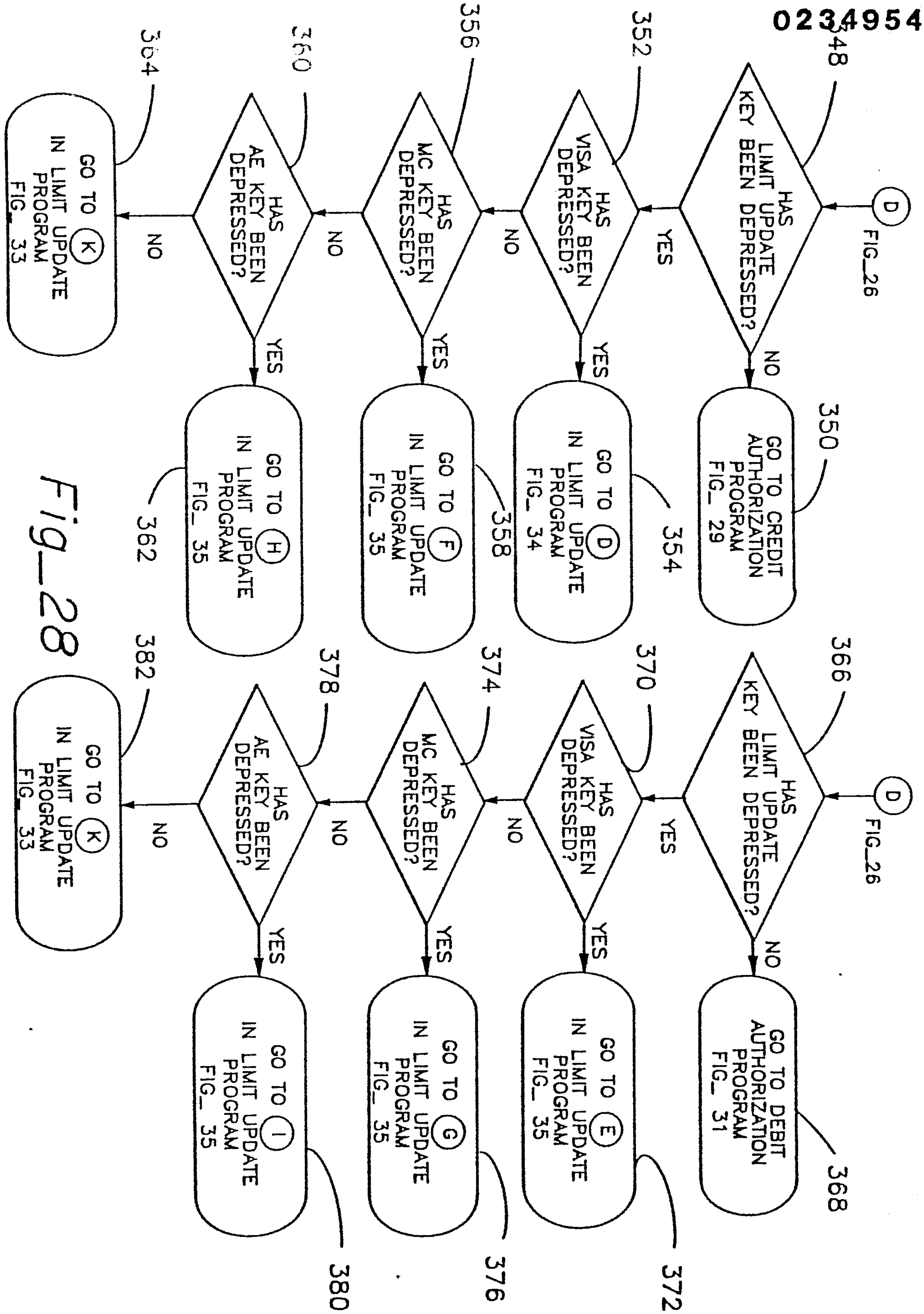
D
FIG_26
348
HAS LIMIT UPDATE KEY BEEN DEPRESSED?
NO
350
GO TO CREDIT AUTHORIZATION PROGRAM FIG_ 29
YES
352
HAS VISA KEY BEEN DEPRESSED?
YES
354
GO TO D IN LIMIT UPDATE PROGRAM FIG_ 34
NO
356
HAS MC KEY BEEN DEPRESSED?
YES
358
GO TO F IN LIMIT UPDATE PROGRAM FIG_ 35
NO
360
HAS AE KEY BEEN DEPRESSED?
YES
362
GO TO H IN LIMIT UPDATE PROGRAM FIG_ 35
NO
364
GO TO K IN LIMIT UPDATE PROGRAM FIG_ 33
D
FIG_26
366
HAS LIMIT UPDATE KEY BEEN DEPRESSED?
NO
368
GO TO DEBIT AUTHORIZATION PROGRAM FIG_ 31
YES
370
HAS VISA KEY BEEN DEPRESSED?
YES
372
GO TO E IN LIMIT UPDATE PROGRAM FIG_ 35
NO
374
HAS MC KEY BEEN DEPRESSED?
YES
376
GO TO G IN LIMIT UPDATE PROGRAM FIG_ 35
NO
378
HAS AE KEY BEEN DEPRESSED?
YES
380
GO TO I IN LIMIT UPDATE PROGRAM FIG_ 35
NO
382
GO TO K IN LIMIT UPDATE PROGRAM FIG_ 33

Fig_28

0234954

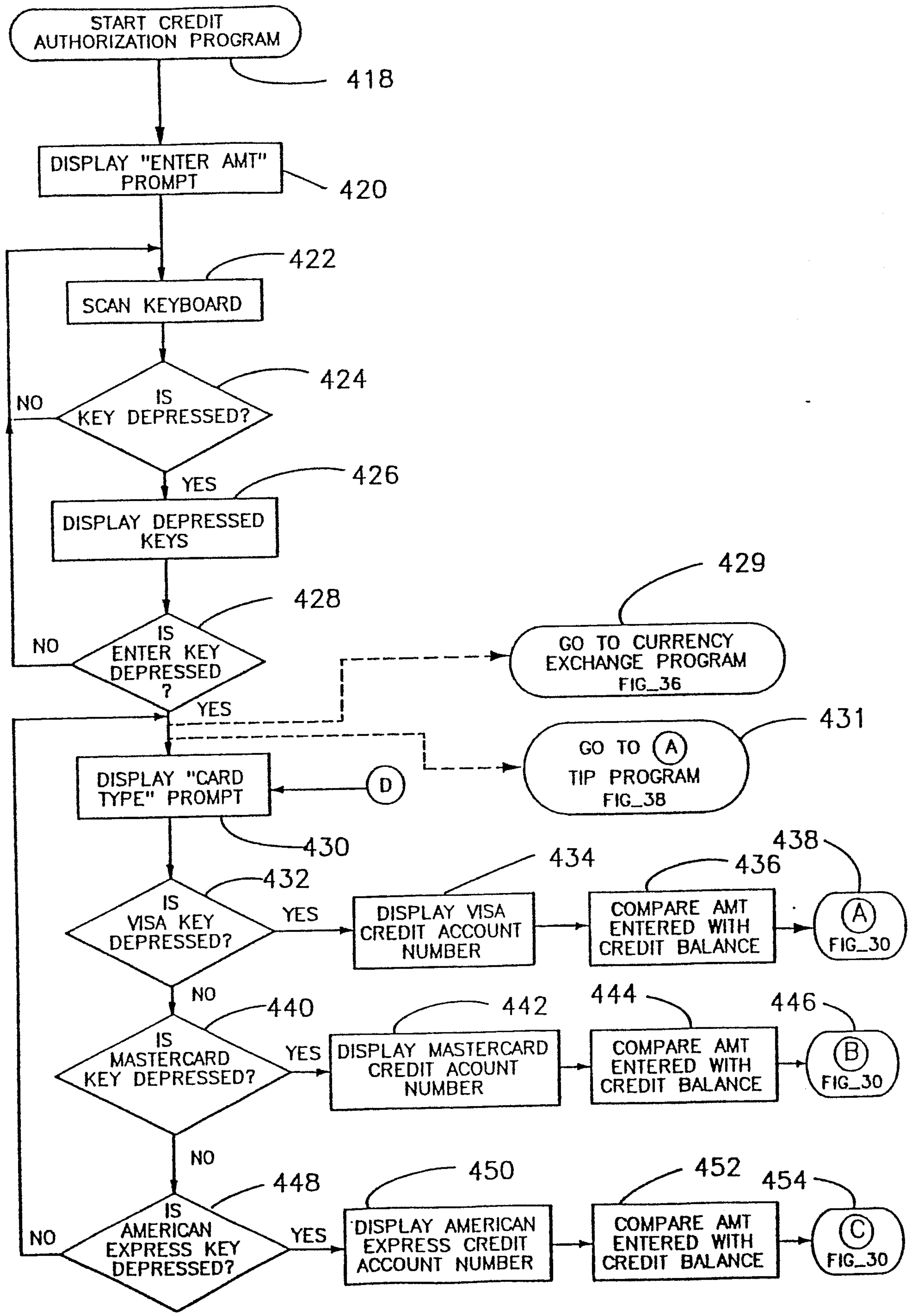


Fig_29

0234954

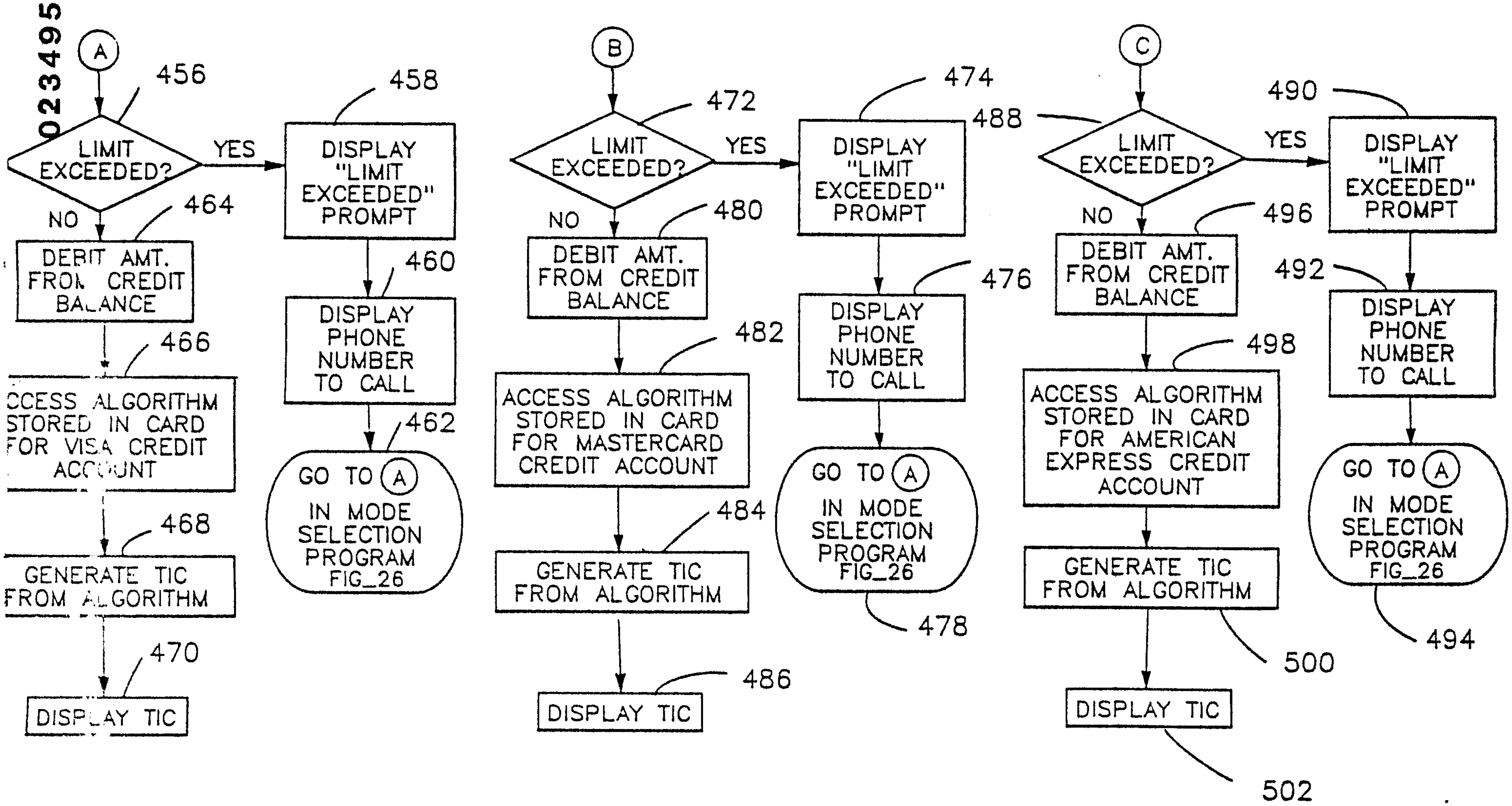


Fig_30

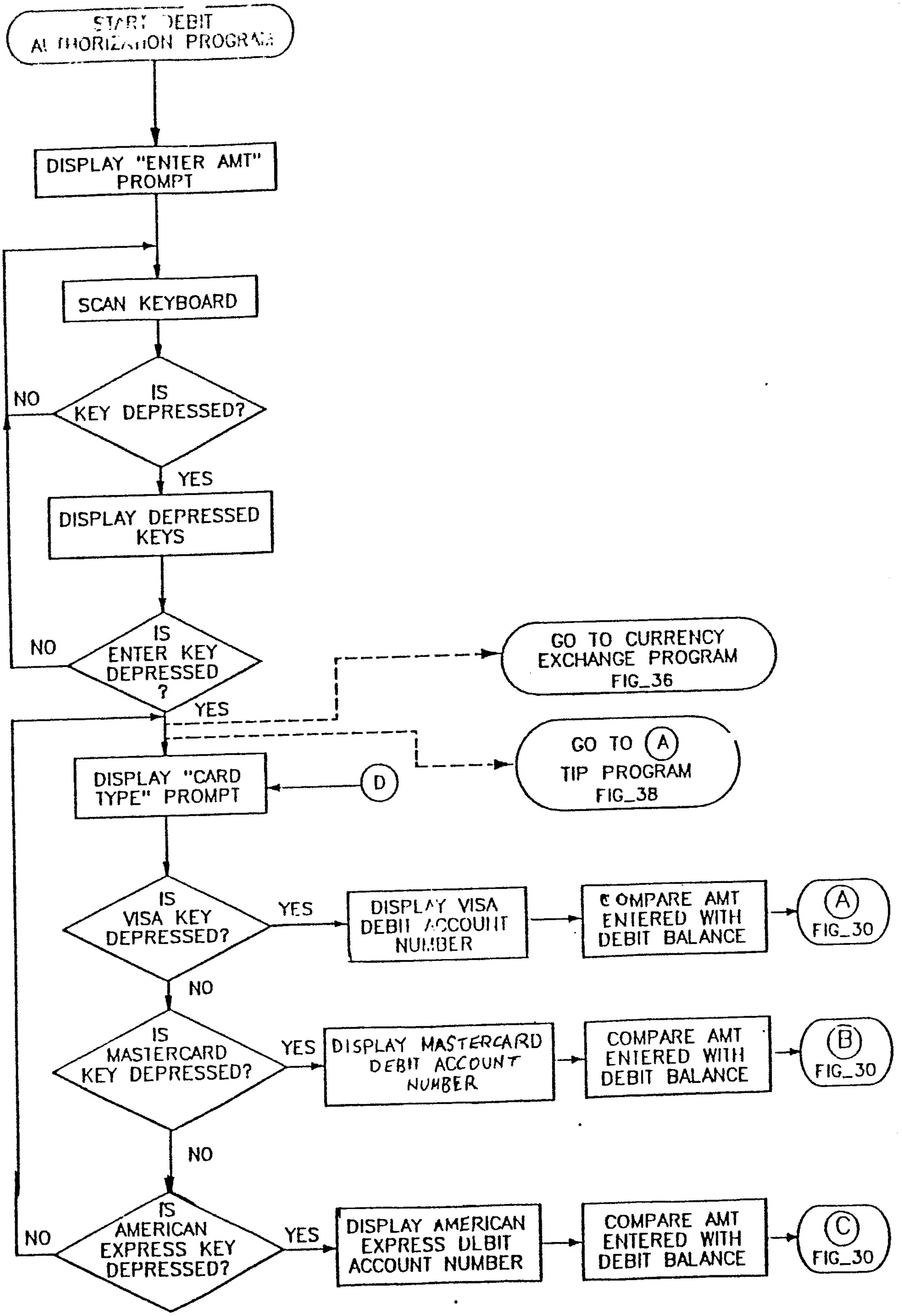

START DEBIT AUTHORIZATION PROGRAM
DISPLAY "ENTER AMT" PROMPT
SCAN KEYBOARD
IS KEY DEPRESSED?
NO
YES
DISPLAY DEPRESSED KEYS
IS ENTER KEY DEPRESSED ?
NO
YES
GO TO CURRENCY EXCHANGE PROGRAM FIG_36
GO TO A TIP PROGRAM FIG_38
DISPLAY "CARD TYPE" PROMPT
D
IS VISA KEY DEPRESSED?
YES
DISPLAY VISA DEBIT ACCOUNT NUMBER
COMPARE AMT ENTERED WITH DEBIT BALANCE
A FIG_30
NO
IS MASTERCARD KEY DEPRESSED?
YES
DISPLAY MASTERCARD DEBIT ACCOUNT NUMBER
COMPARE AMT ENTERED WITH DEBIT BALANCE
B FIG_30
NO
IS AMERICAN EXPRESS KEY DEPRESSED?
NO
YES
DISPLAY AMERICAN EXPRESS DEBIT ACCOUNT NUMBER
COMPARE AMT ENTERED WITH DEBIT BALANCE
C FIG_30


Fig_31

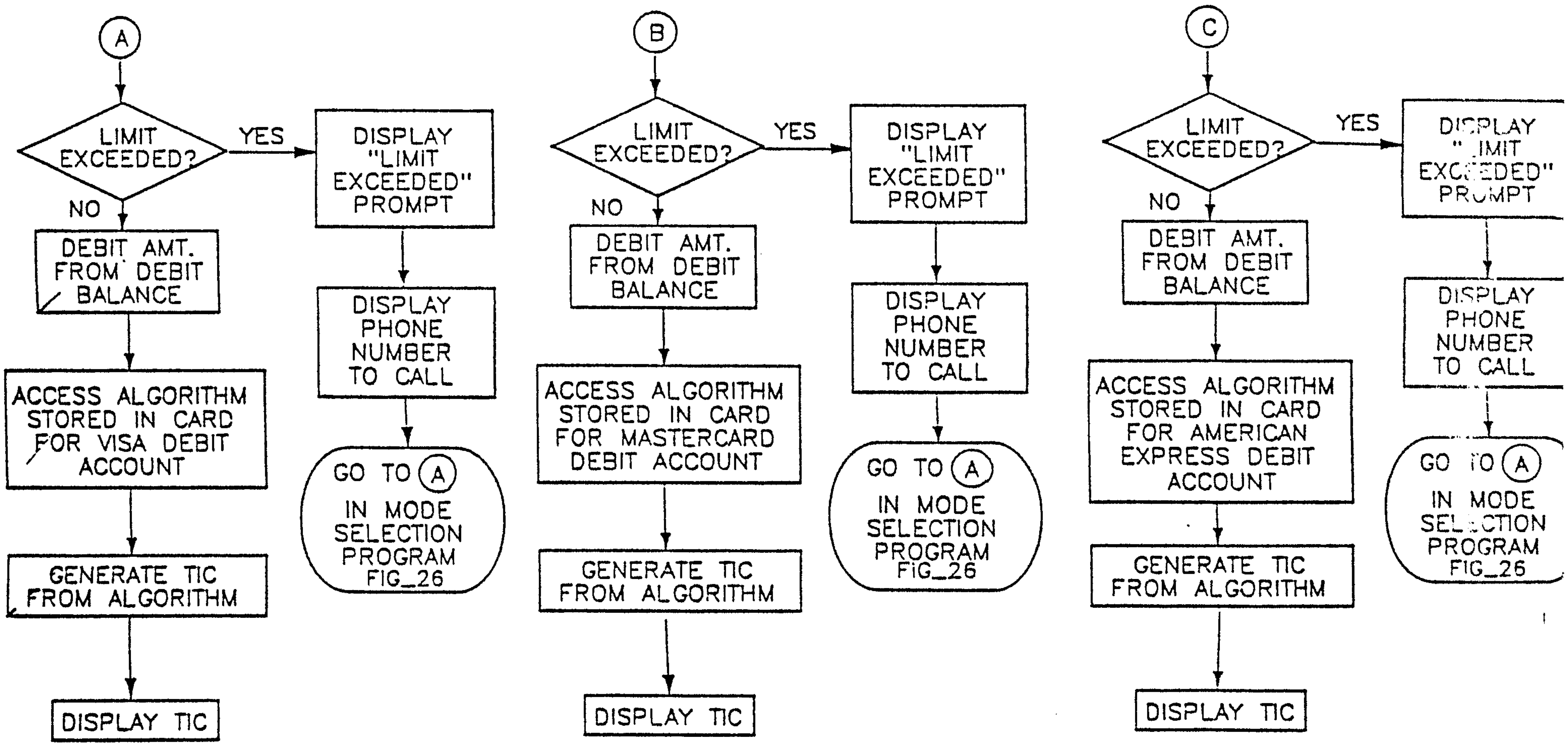
A
LIMIT EXCEEDED?
YES
NO
DISPLAY "LIMIT EXCEEDED" PROMPT
DISPLAY PHONE NUMBER TO CALL
GO TO A IN MODE SELECTION PROGRAM FIG_26
DEBIT AMT. FROM DEBIT BALANCE
ACCESS ALGORITHM STORED IN CARD FOR VISA DEBIT ACCOUNT
GENERATE TIC FROM ALGORITHM
DISPLAY TIC
B
LIMIT EXCEEDED?
YES
NO
DISPLAY "LIMIT EXCEEDED" PROMPT
DISPLAY PHONE NUMBER TO CALL
GO TO A IN MODE SELECTION PROGRAM FIG_26
DEBIT AMT. FROM DEBIT BALANCE
ACCESS ALGORITHM STORED IN CARD FOR MASTERCARD DEBIT ACCOUNT
GENERATE TIC FROM ALGORITHM
DISPLAY TIC
C
LIMIT EXCEEDED?
YES
NO
DISPLAY "LIMIT EXCEEDED" PROMPT
DISPLAY PHONE NUMBER TO CALL
GO TO A IN MODE SELECTION PROGRAM FIG_26
DEBIT AMT. FROM DEBIT BALANCE
ACCESS ALGORITHM STORED IN CARD FOR AMERICAN EXPRESS DEBIT ACCOUNT
GENERATE TIC FROM ALGORITHM
DISPLAY TIC

Fig_32

0234954

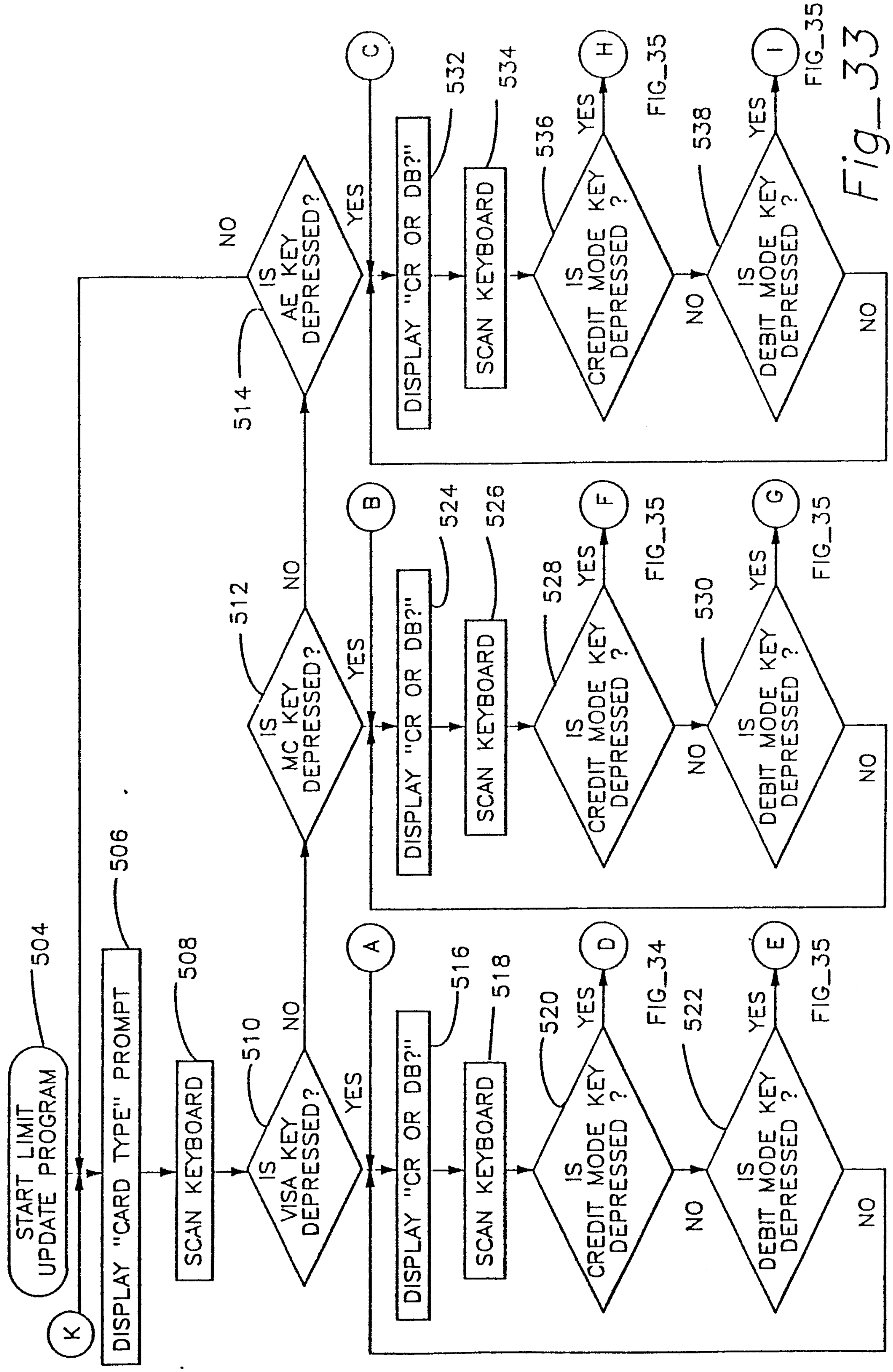


Fig_33

23|41

0234954

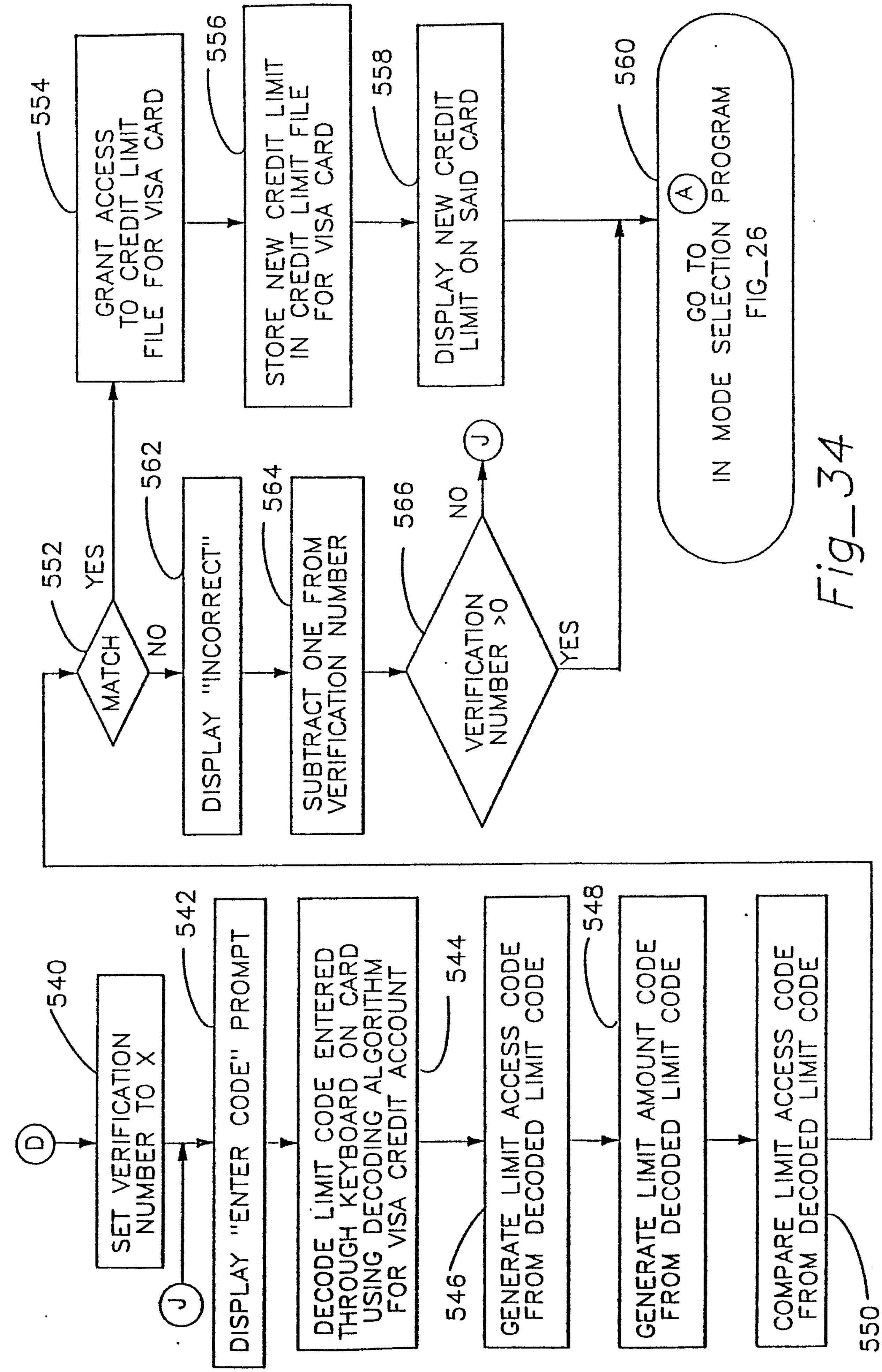


Fig_34

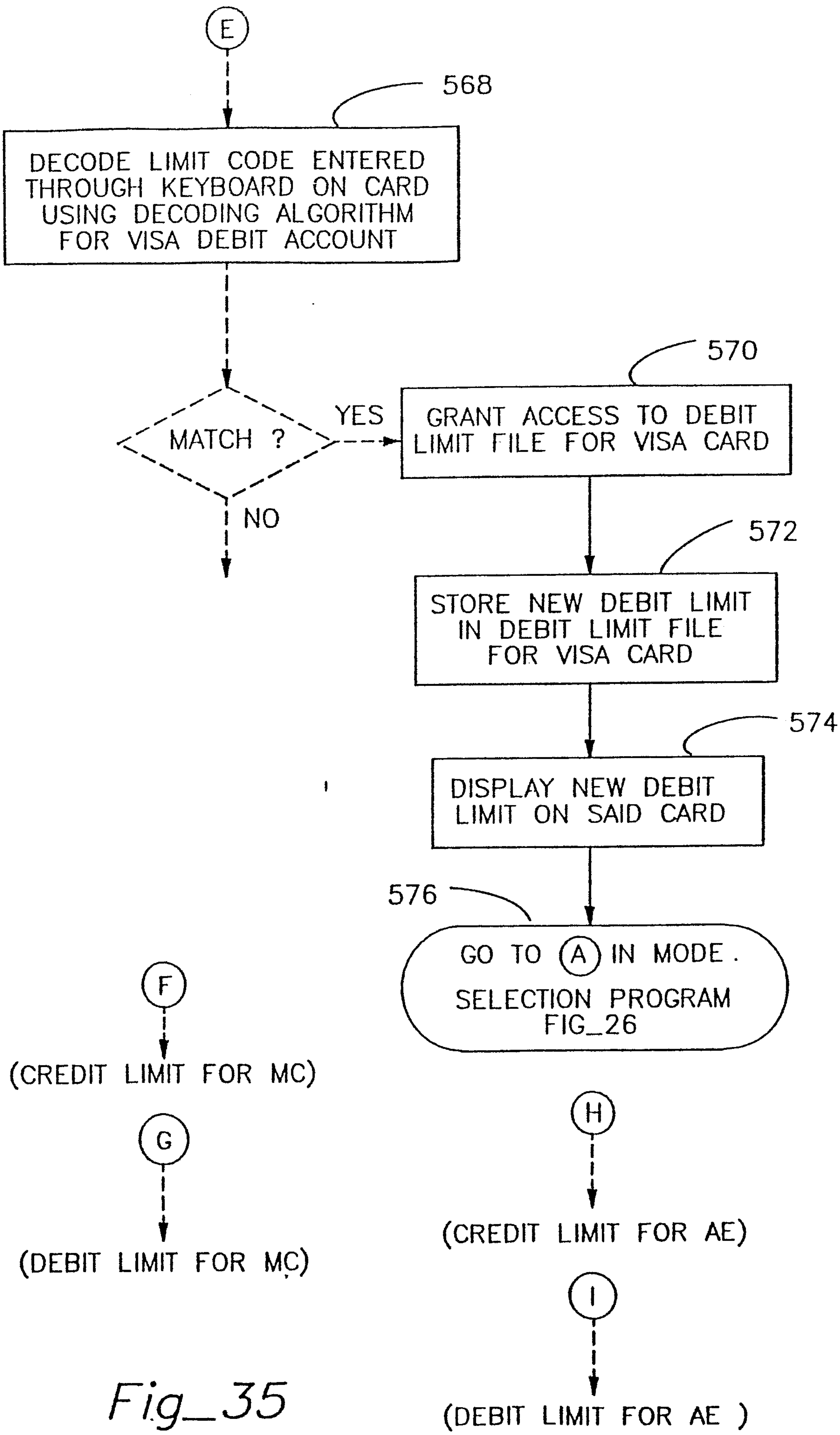
E
568
DECODE LIMIT CODE ENTERED THROUGH KEYBOARD ON CARD USING DECODING ALGORITHM FOR VISA DEBIT ACCOUNT
MATCH ?
YES
NO
570
GRANT ACCESS TO DEBIT LIMIT FILE FOR VISA CARD
572
STORE NEW DEBIT LIMIT IN DEBIT LIMIT FILE FOR VISA CARD
574
DISPLAY NEW DEBIT LIMIT ON SAID CARD
576
GO TO A IN MODE. SELECTION PROGRAM FIG_26
F
(CREDIT LIMIT FOR MC)
G
(DEBIT LIMIT FOR MC)
H
(CREDIT LIMIT FOR AE)
I
(DEBIT LIMIT FOR AE )

Fig_35

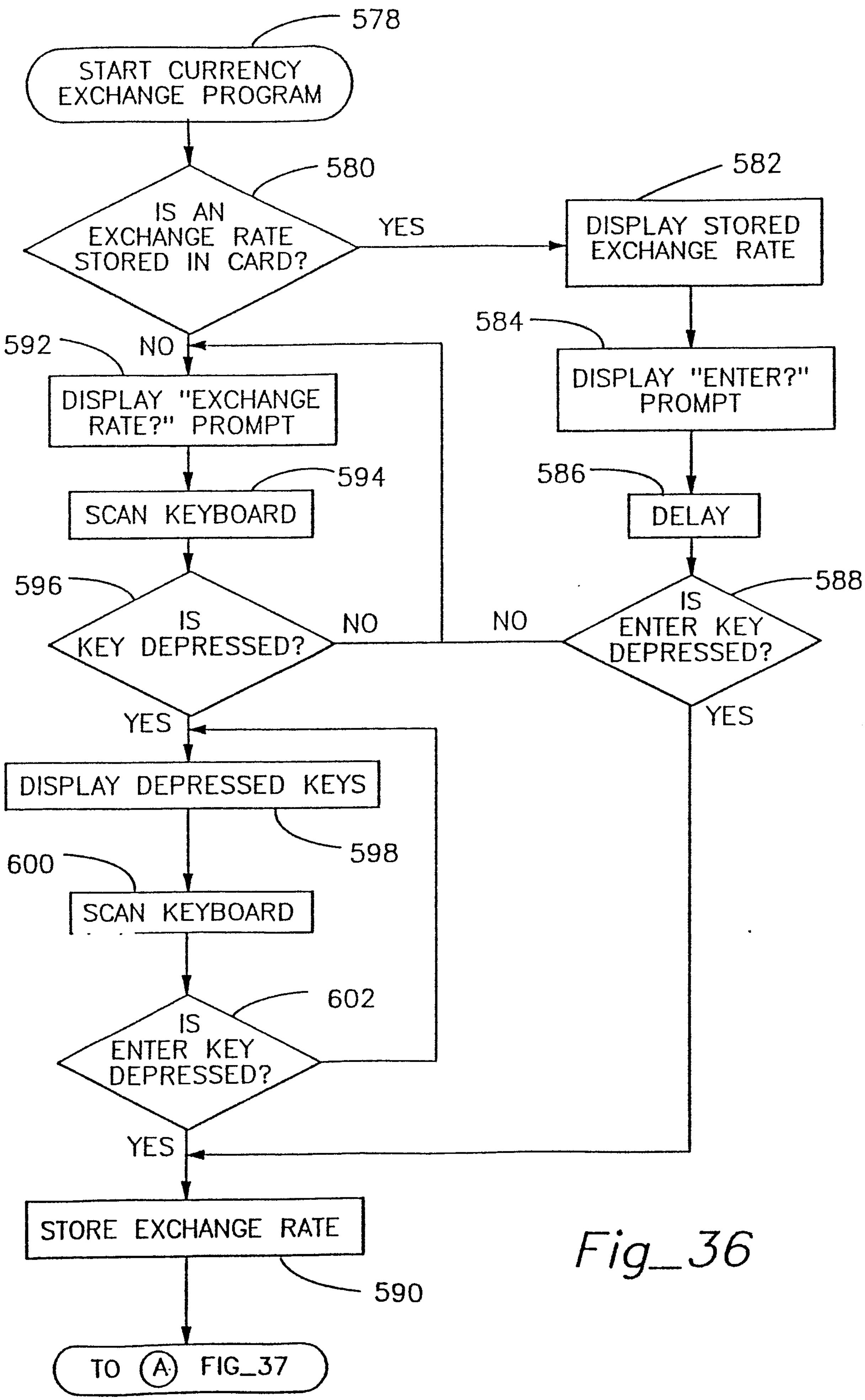
578
START CURRENCY EXCHANGE PROGRAM
580
IS AN EXCHANGE RATE STORED IN CARD?
YES
582
DISPLAY STORED EXCHANGE RATE
584
DISPLAY "ENTER?" PROMPT
586
DELAY
588
IS ENTER KEY DEPRESSED?
NO
YES
592
NO
DISPLAY "EXCHANGE RATE?" PROMPT
594
SCAN KEYBOARD
596
IS KEY DEPRESSED?
NO
YES
DISPLAY DEPRESSED KEYS
598
600
SCAN KEYBOARD
602
IS ENTER KEY DEPRESSED?
YES
STORE EXCHANGE RATE
590
TO (A) FIG_37

Fig_36

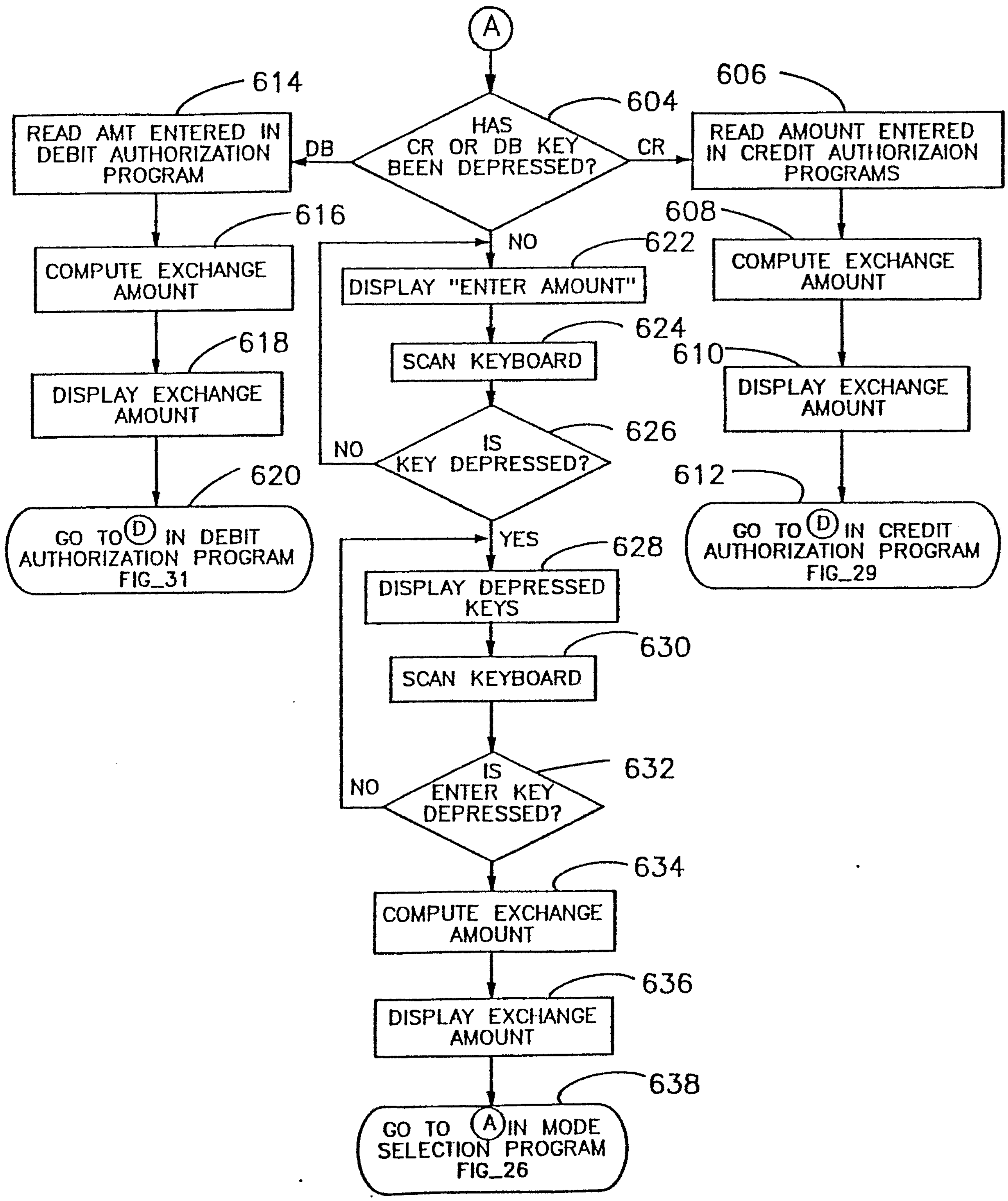
A
HAS CR OR DB KEY BEEN DEPRESSED?
604
DB
CR
614
READ AMT ENTERED IN DEBIT AUTHORIZATION PROGRAM
606
READ AMOUNT ENTERED IN CREDIT AUTHORIZAION PROGRAMS
616
COMPUTE EXCHANGE AMOUNT
618
DISPLAY EXCHANGE AMOUNT
620
GO TO D IN DEBIT AUTHORIZATION PROGRAM FIG_31
608
COMPUTE EXCHANGE AMOUNT
610
DISPLAY EXCHANGE AMOUNT
612
GO TO D IN CREDIT AUTHORIZATION PROGRAM FIG_29
NO
622
DISPLAY "ENTER AMOUNT"
624
SCAN KEYBOARD
626
IS KEY DEPRESSED?
NO
YES
628
DISPLAY DEPRESSED KEYS
630
SCAN KEYBOARD
632
IS ENTER KEY DEPRESSED?
NO
634
COMPUTE EXCHANGE AMOUNT
636
DISPLAY EXCHANGE AMOUNT
638
GO TO A IN MODE SELECTION PROGRAM FIG_26

Fig_37

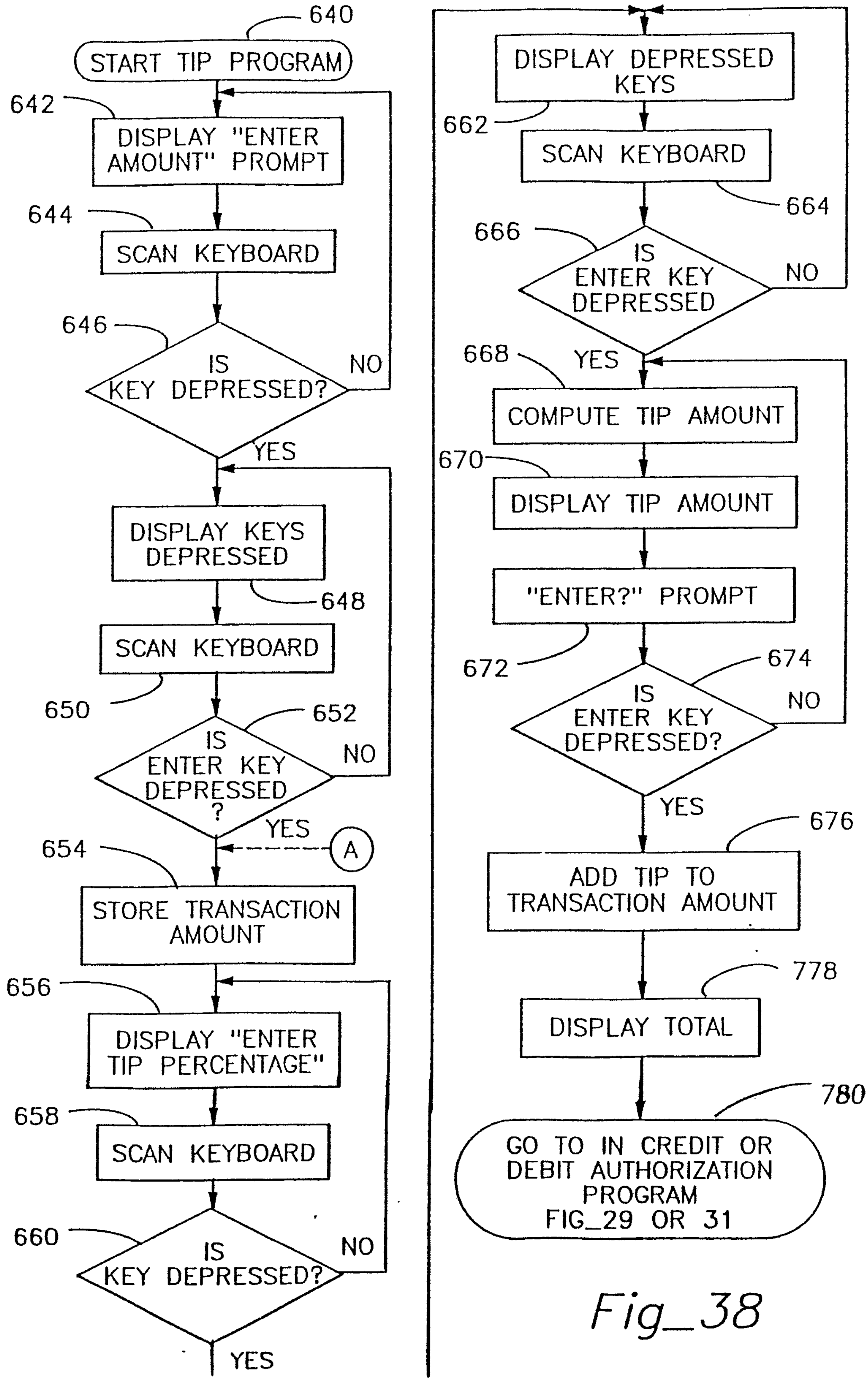
640
START TIP PROGRAM
642
DISPLAY "ENTER AMOUNT" PROMPT
644
SCAN KEYBOARD
646
IS KEY DEPRESSED?
NO
YES
DISPLAY KEYS DEPRESSED
648
SCAN KEYBOARD
650
652
IS ENTER KEY DEPRESSED ?
NO
YES
A
654
STORE TRANSACTION AMOUNT
656
DISPLAY "ENTER TIP PERCENTAGE"
658
SCAN KEYBOARD
660
IS KEY DEPRESSED?
NO
YES
DISPLAY DEPRESSED KEYS
662
SCAN KEYBOARD
664
666
IS ENTER KEY DEPRESSED
NO
668
YES
COMPUTE TIP AMOUNT
670
DISPLAY TIP AMOUNT
"ENTER?" PROMPT
672
674
IS ENTER KEY DEPRESSED?
NO
YES
676
ADD TIP TO TRANSACTION AMOUNT
778
DISPLAY TOTAL
780
GO TO IN CREDIT OR DEBIT AUTHORIZATION PROGRAM FIG_29 OR 31

Fig_38

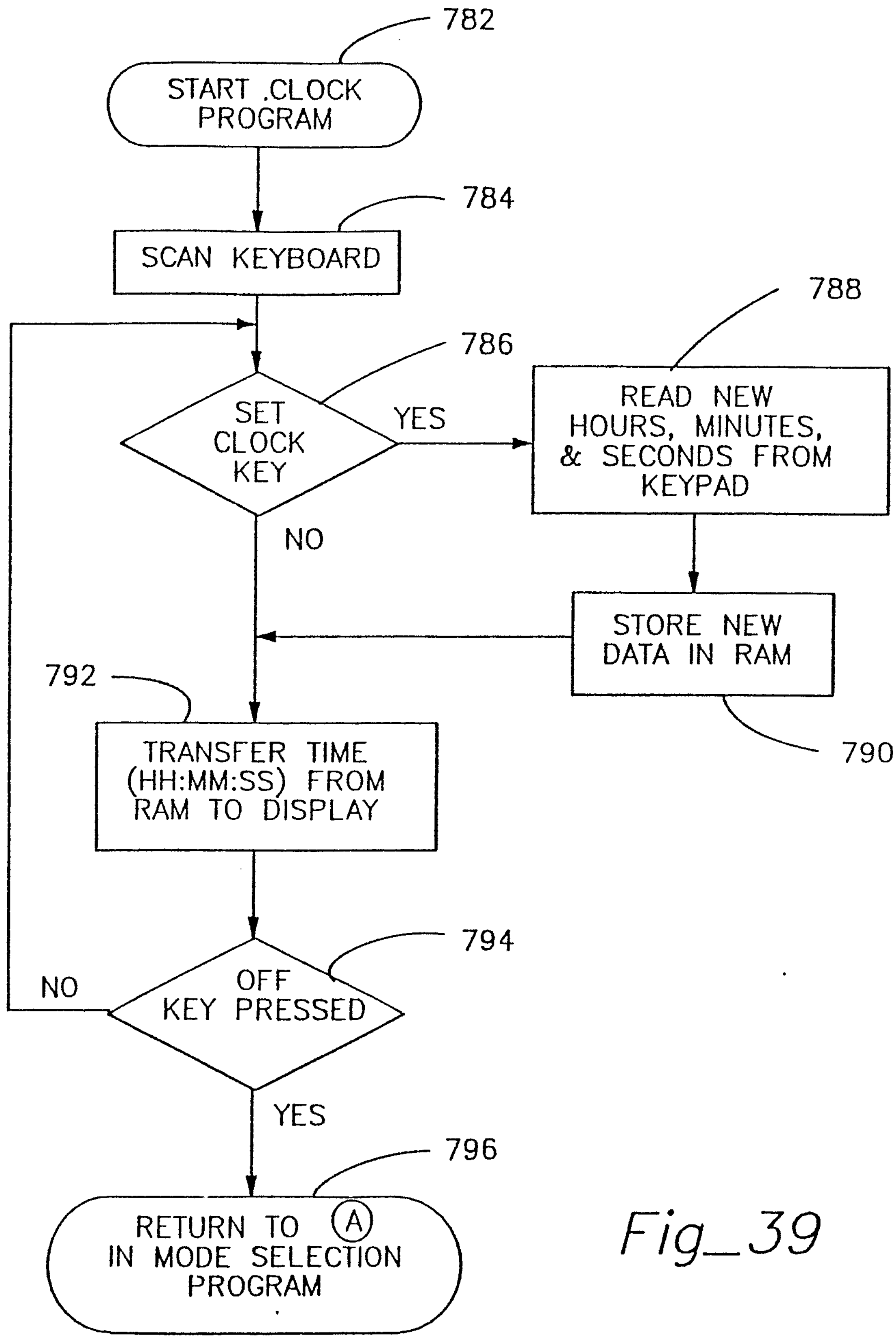
782
START CLOCK PROGRAM
784
SCAN KEYBOARD
788
786
SET CLOCK KEY
YES
READ NEW HOURS, MINUTES, & SECONDS FROM KEYPAD
NO
STORE NEW DATA IN RAM
792
790
TRANSFER TIME (HH:MM:SS) FROM RAM TO DISPLAY
794
NO
OFF KEY PRESSED
YES
796
RETURN TO (A) IN MODE SELECTION PROGRAM

Fig_39

29/41

0234954

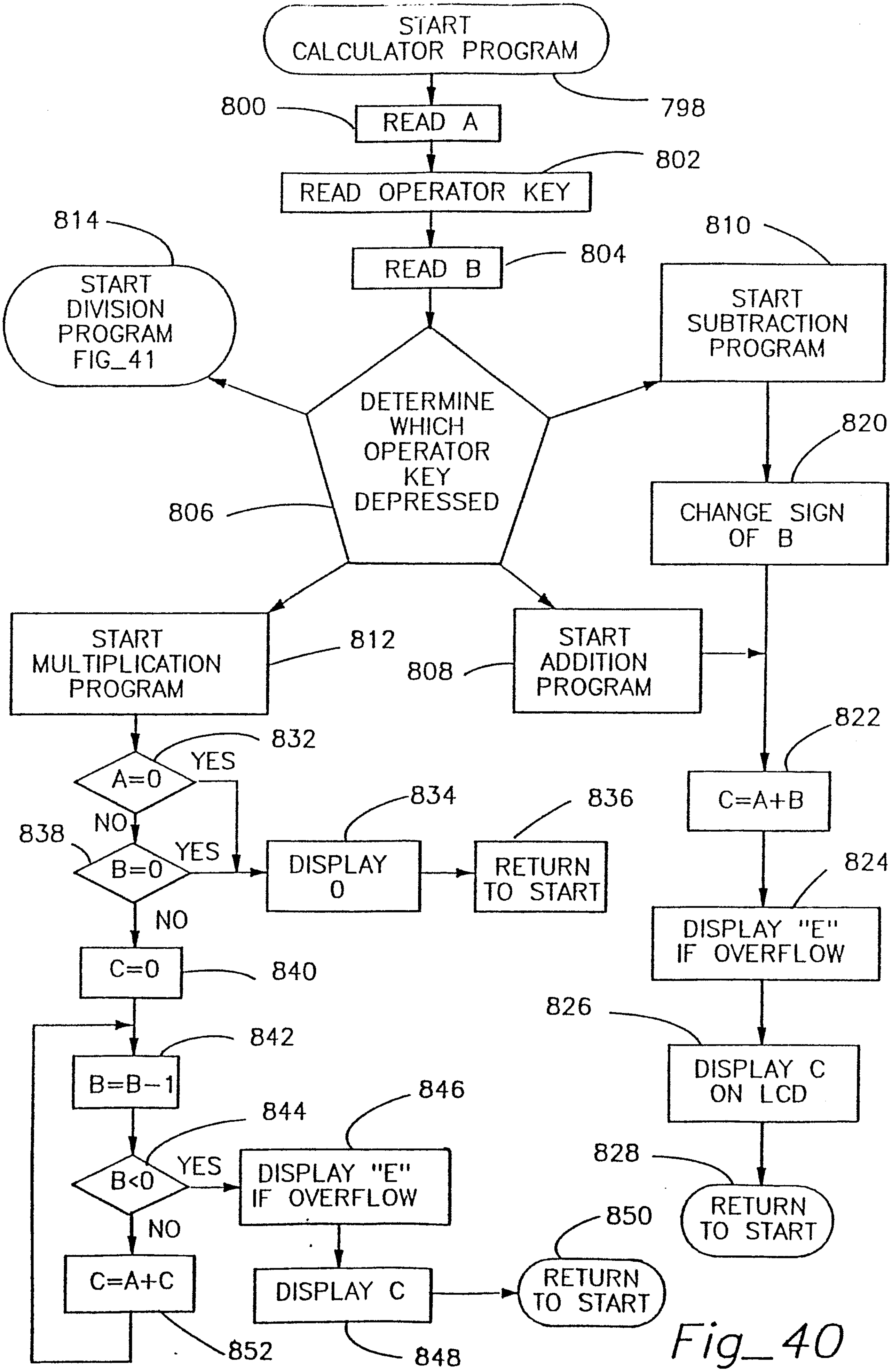


Fig_40

0234954

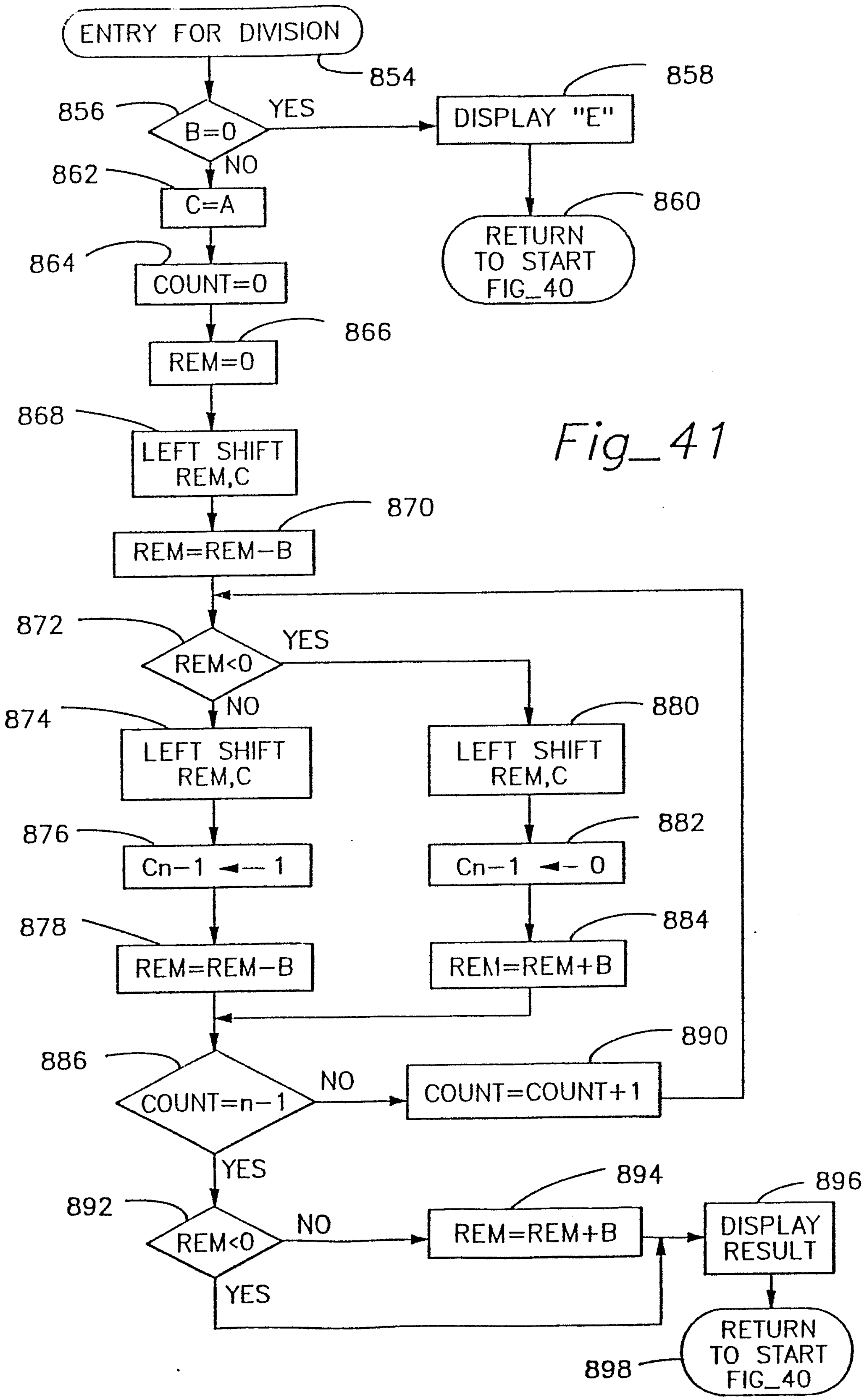


Fig_41

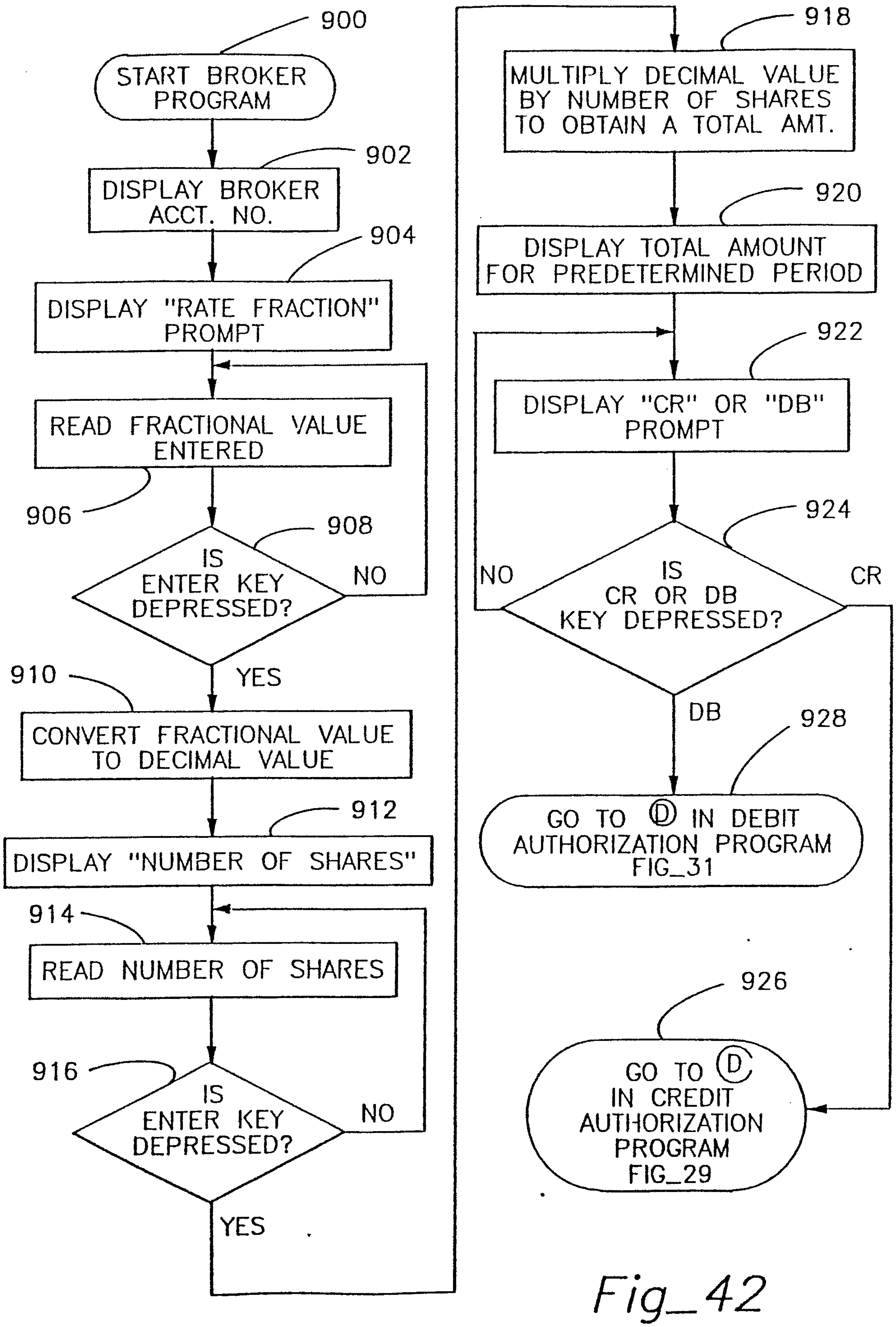
900
START BROKER PROGRAM
902
DISPLAY BROKER ACCT. NO.
904
DISPLAY "RATE FRACTION" PROMPT
READ FRACTIONAL VALUE ENTERED
906
908
IS ENTER KEY DEPRESSED?
NO
YES
910
CONVERT FRACTIONAL VALUE TO DECIMAL VALUE
912
DISPLAY "NUMBER OF SHARES"
914
READ NUMBER OF SHARES
916
IS ENTER KEY DEPRESSED?
NO
YES
918
MULTIPLY DECIMAL VALUE BY NUMBER OF SHARES TO OBTAIN A TOTAL AMT.
920
DISPLAY TOTAL AMOUNT FOR PREDETERMINED PERIOD
922
DISPLAY "CR" OR "DB" PROMPT
924
IS CR OR DB KEY DEPRESSED?
NO
CR
DB
928
GO TO D IN DEBIT AUTHORIZATION PROGRAM FIG_31
926
GO TO D IN CREDIT AUTHORIZATION PROGRAM FIG_29

Fig_42

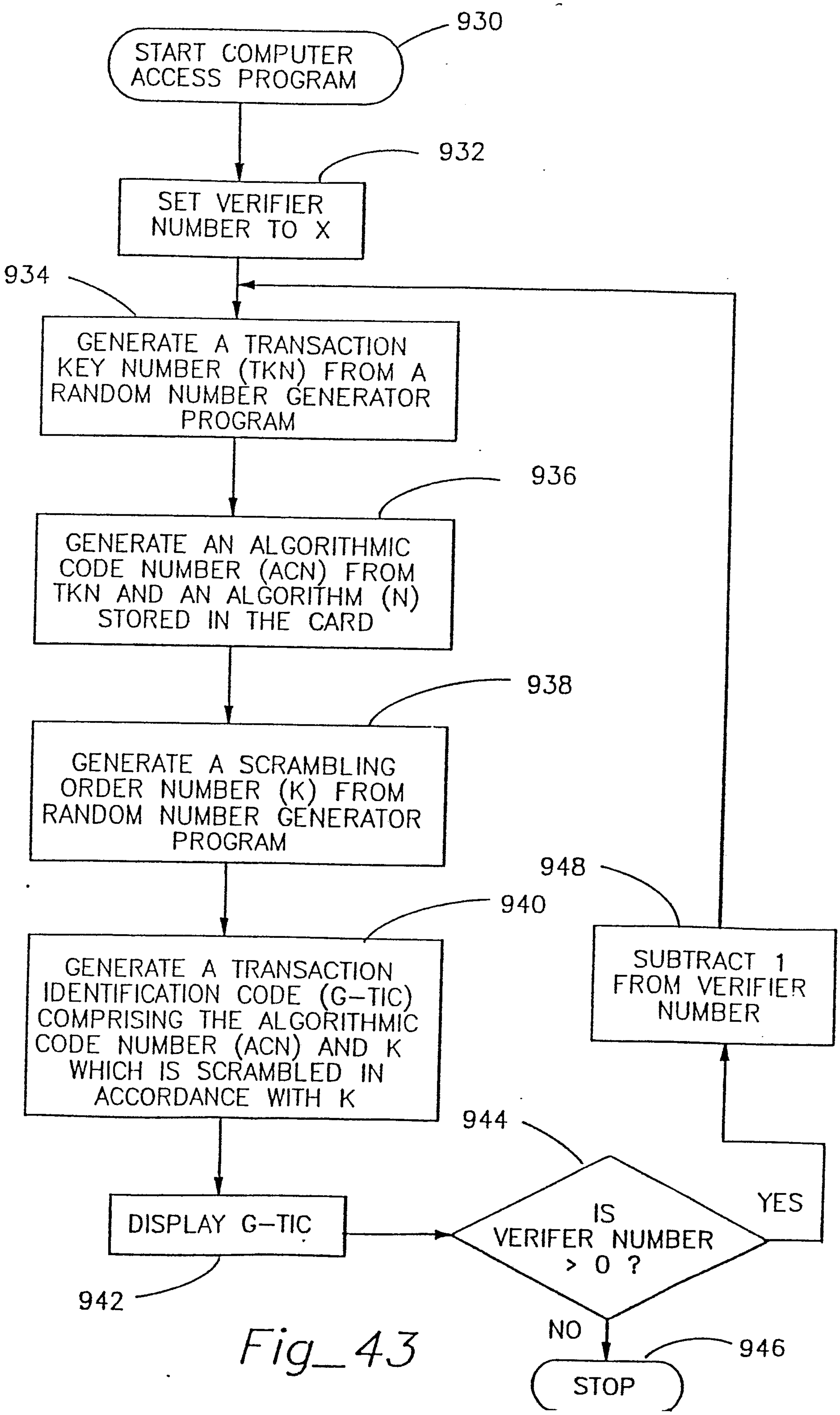
930
START COMPUTER ACCESS PROGRAM
932
SET VERIFIER NUMBER TO X
934
GENERATE A TRANSACTION KEY NUMBER (TKN) FROM A RANDOM NUMBER GENERATOR PROGRAM
936
GENERATE AN ALGORITHMIC CODE NUMBER (ACN) FROM TKN AND AN ALGORITHM (N) STORED IN THE CARD
938
GENERATE A SCRAMBLING ORDER NUMBER (K) FROM RANDOM NUMBER GENERATOR PROGRAM
940
GENERATE A TRANSACTION IDENTIFICATION CODE (G-TIC) COMPRISING THE ALGORITHMIC CODE NUMBER (ACN) AND K WHICH IS SCRAMBLED IN ACCORDANCE WITH K
942
DISPLAY G-TIC
944
IS VERIFER NUMBER > 0 ?
YES
NO
948
SUBTRACT 1 FROM VERIFIER NUMBER
946
STOP

Fig_43

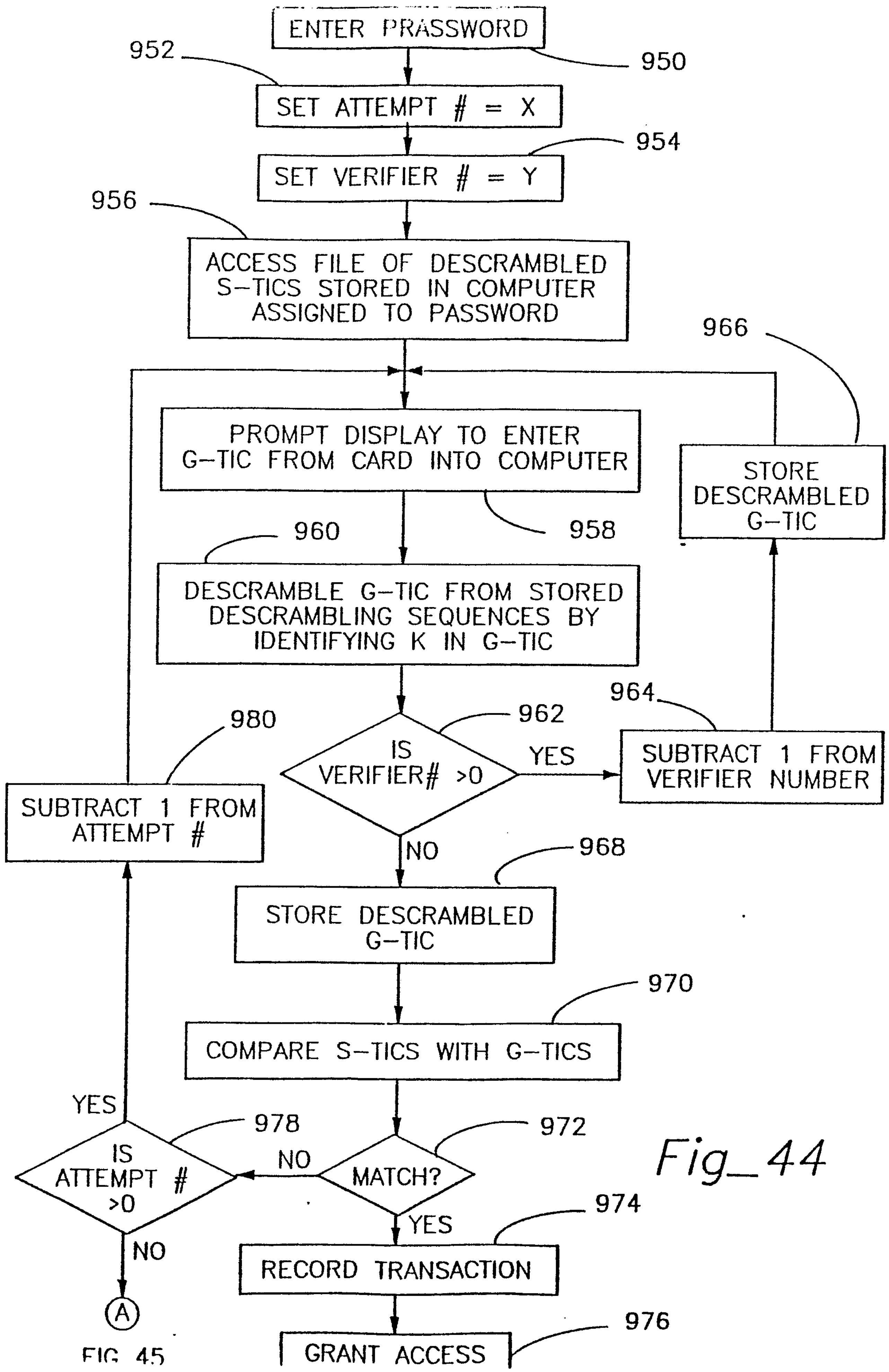
ENTER PRASSWORD
950
952
SET ATTEMPT # = X
954
SET VERIFIER # = Y
956
ACCESS FILE OF DESCRAMBLED S-TICS STORED IN COMPUTER ASSIGNED TO PASSWORD
966
PROMPT DISPLAY TO ENTER G-TIC FROM CARD INTO COMPUTER
STORE DESCRAMBLED G-TIC
958
960
DESCRAMBLE G-TIC FROM STORED DESCRAMBLING SEQUENCES BY IDENTIFYING K IN G-TIC
964
980
962
IS VERIFIER# >0
YES
SUBTRACT 1 FROM VERIFIER NUMBER
SUBTRACT 1 FROM ATTEMPT #
NO
968
STORE DESCRAMBLED G-TIC
970
COMPARE S-TICS WITH G-TICS
YES
978
972
IS ATTEMPT # >0
NO
MATCH?
974
YES
NO
RECORD TRANSACTION
A
976
FIG 45
GRANT ACCESS

Fig_44

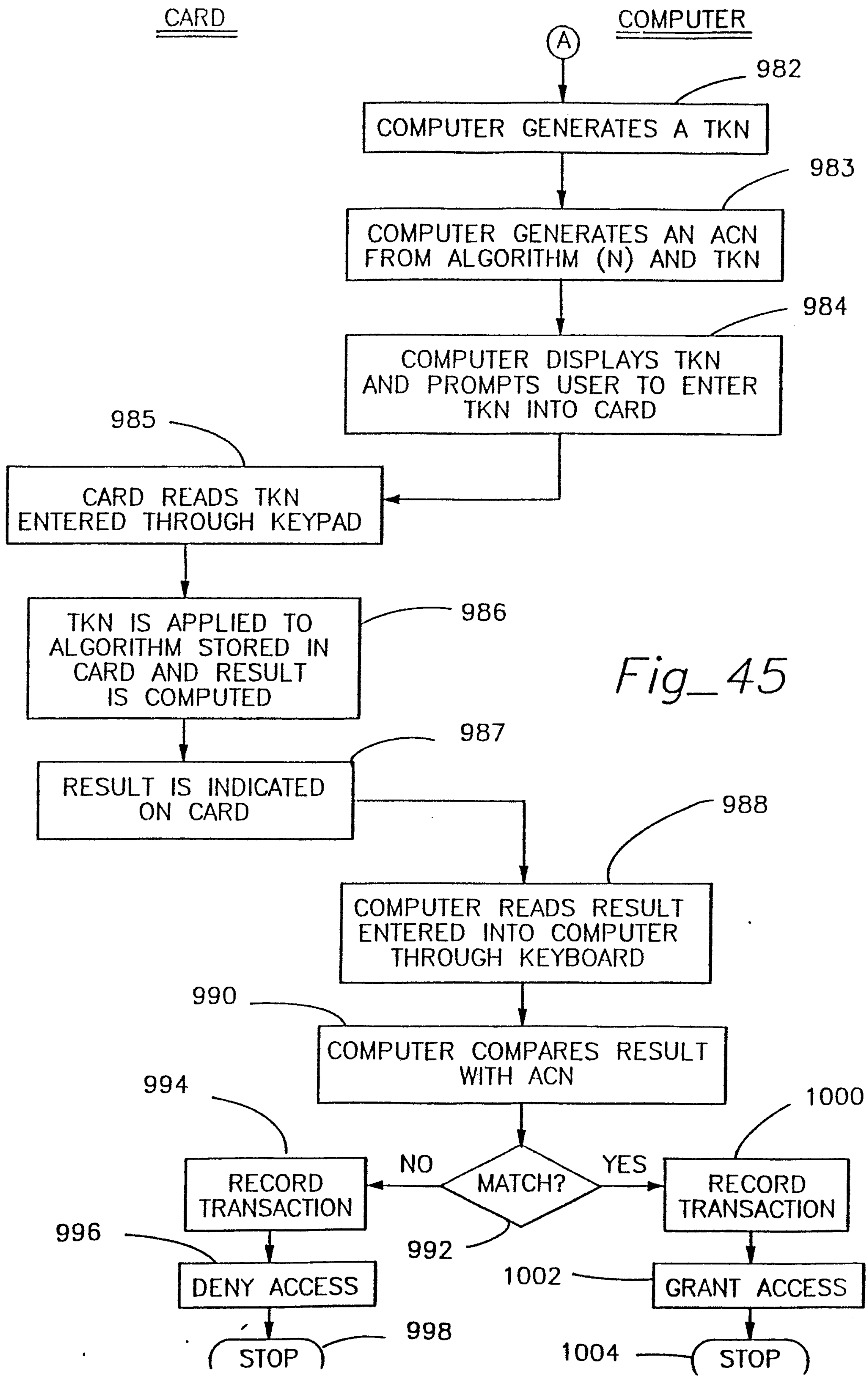
CARD
COMPUTER
A
982
COMPUTER GENERATES A TKN
983
COMPUTER GENERATES AN ACN FROM ALGORITHM (N) AND TKN
984
COMPUTER DISPLAYS TKN AND PROMPTS USER TO ENTER TKN INTO CARD
985
CARD READS TKN ENTERED THROUGH KEYPAD
986
TKN IS APPLIED TO ALGORITHM STORED IN CARD AND RESULT IS COMPUTED
987
RESULT IS INDICATED ON CARD
988
COMPUTER READS RESULT ENTERED INTO COMPUTER THROUGH KEYBOARD
990
COMPUTER COMPARES RESULT WITH ACN
994
NO
MATCH?
YES
1000
RECORD TRANSACTION
RECORD TRANSACTION
996
992
DENY ACCESS
1002
GRANT ACCESS
998
STOP
1004
STOP

Fig_45

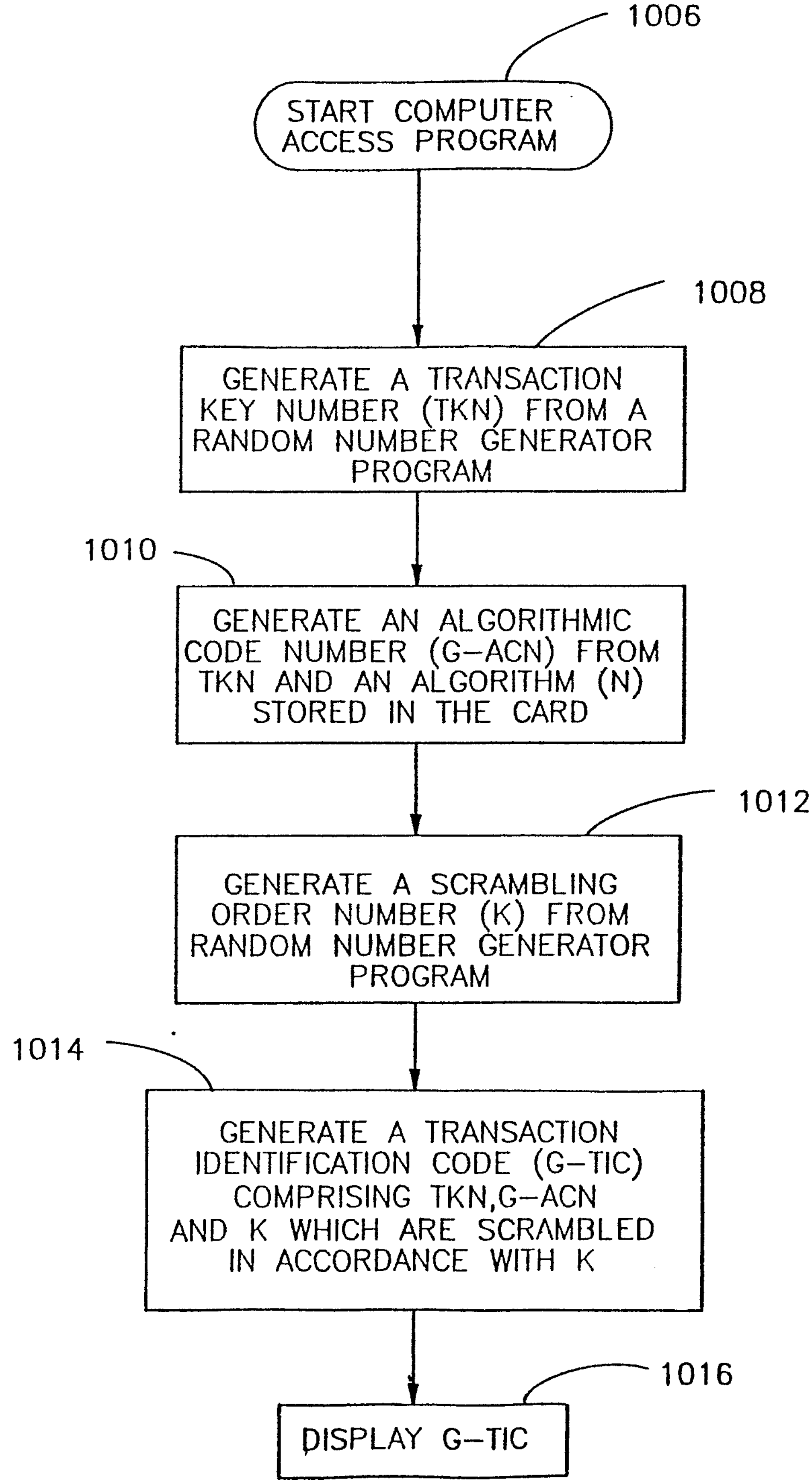
1006
START COMPUTER ACCESS PROGRAM
1008
GENERATE A TRANSACTION KEY NUMBER (TKN) FROM A RANDOM NUMBER GENERATOR PROGRAM
1010
GENERATE AN ALGORITHMIC CODE NUMBER (G-ACN) FROM TKN AND AN ALGORITHM (N) STORED IN THE CARD
1012
GENERATE A SCRAMBLING ORDER NUMBER (K) FROM RANDOM NUMBER GENERATOR PROGRAM
1014
GENERATE A TRANSACTION IDENTIFICATION CODE (G-TIC) COMPRISING TKN,G-ACN AND K WHICH ARE SCRAMBLED IN ACCORDANCE WITH K
1016
DISPLAY G-TIC

Fig_46

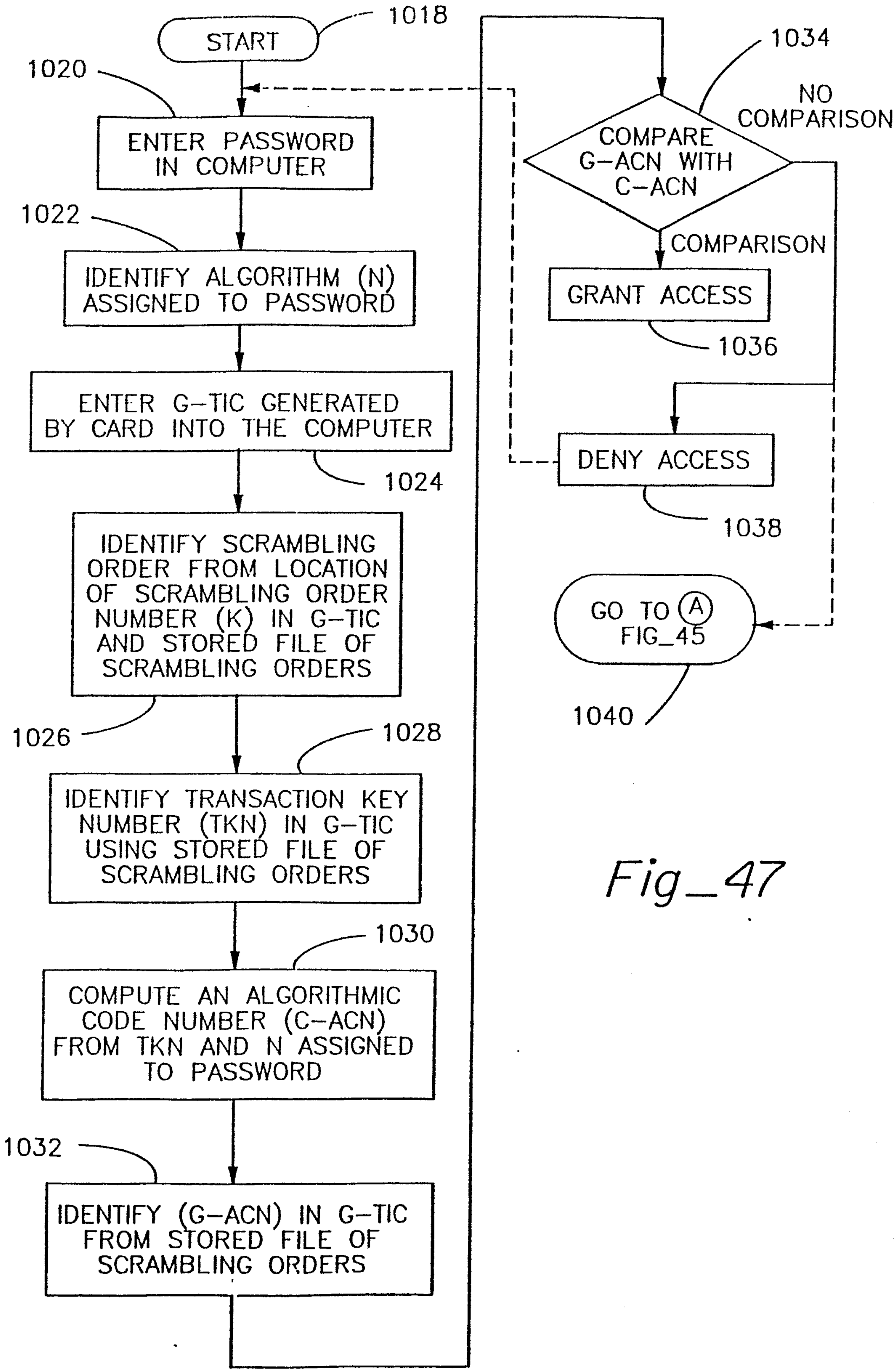
START
1018
1020
ENTER PASSWORD IN COMPUTER
1022
IDENTIFY ALGORITHM (N) ASSIGNED TO PASSWORD
ENTER G-TIC GENERATED BY CARD INTO THE COMPUTER
1024
IDENTIFY SCRAMBLING ORDER FROM LOCATION OF SCRAMBLING ORDER NUMBER (K) IN G-TIC AND STORED FILE OF SCRAMBLING ORDERS
1026
1028
IDENTIFY TRANSACTION KEY NUMBER (TKN) IN G-TIC USING STORED FILE OF SCRAMBLING ORDERS
1030
COMPUTE AN ALGORITHMIC CODE NUMBER (C-ACN) FROM TKN AND N ASSIGNED TO PASSWORD
1032
IDENTIFY (G-ACN) IN G-TIC FROM STORED FILE OF SCRAMBLING ORDERS
1034
COMPARE G-ACN WITH C-ACN
NO COMPARISON
COMPARISON
GRANT ACCESS
1036
DENY ACCESS
1038
GO TO (A) FIG_45
1040

Fig_47

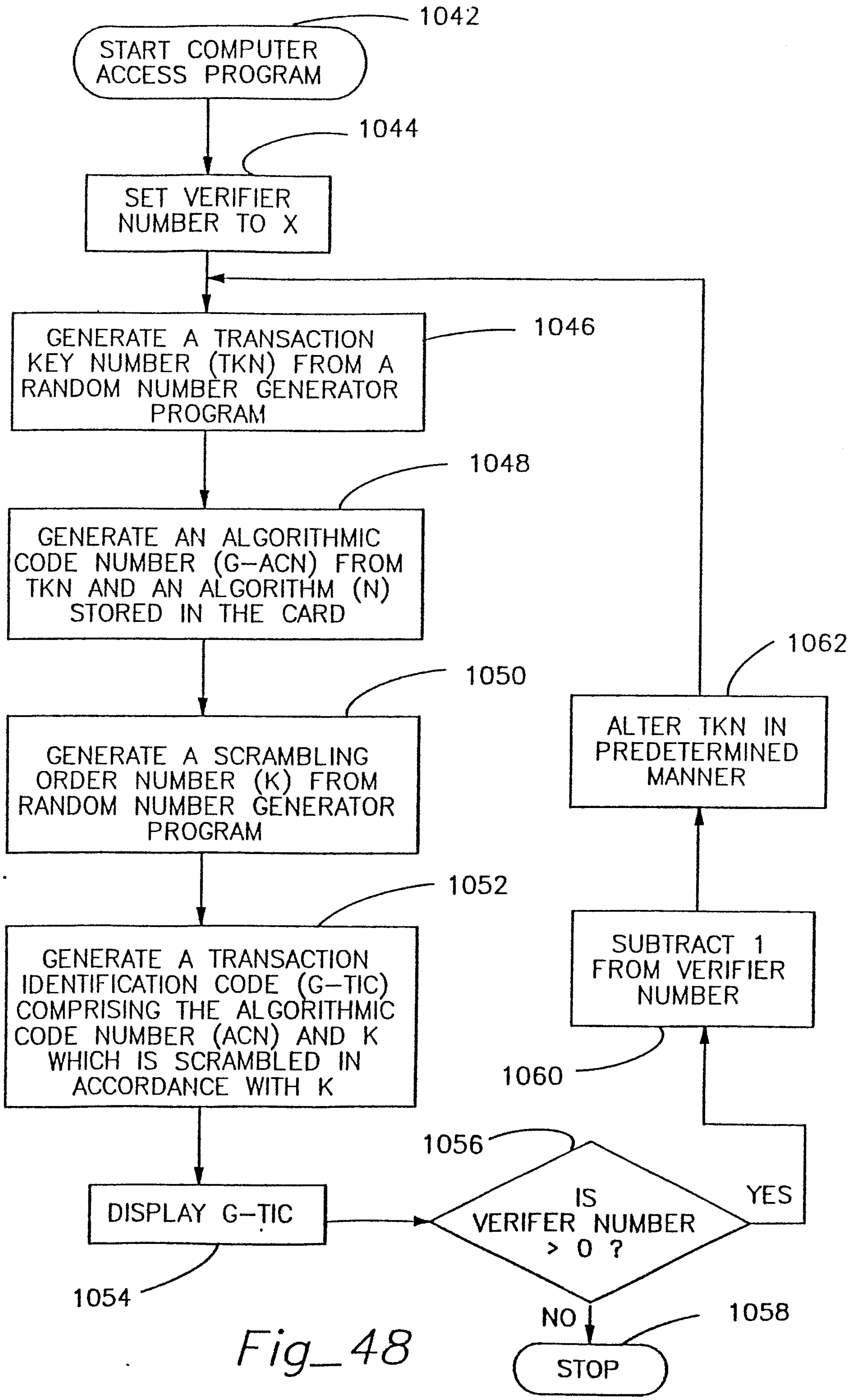
1042
START COMPUTER ACCESS PROGRAM
1044
SET VERIFIER NUMBER TO X
1046
GENERATE A TRANSACTION KEY NUMBER (TKN) FROM A RANDOM NUMBER GENERATOR PROGRAM
1048
GENERATE AN ALGORITHMIC CODE NUMBER (G-ACN) FROM TKN AND AN ALGORITHM (N) STORED IN THE CARD
1050
GENERATE A SCRAMBLING ORDER NUMBER (K) FROM RANDOM NUMBER GENERATOR PROGRAM
1052
GENERATE A TRANSACTION IDENTIFICATION CODE (G-TIC) COMPRISING THE ALGORITHMIC CODE NUMBER (ACN) AND K WHICH IS SCRAMBLED IN ACCORDANCE WITH K
DISPLAY G-TIC
1054
1056
IS VERIFER NUMBER > 0 ?
YES
NO
1058
STOP
1060
SUBTRACT 1 FROM VERIFIER NUMBER
1062
ALTER TKN IN PREDETERMINED MANNER

Fig_48

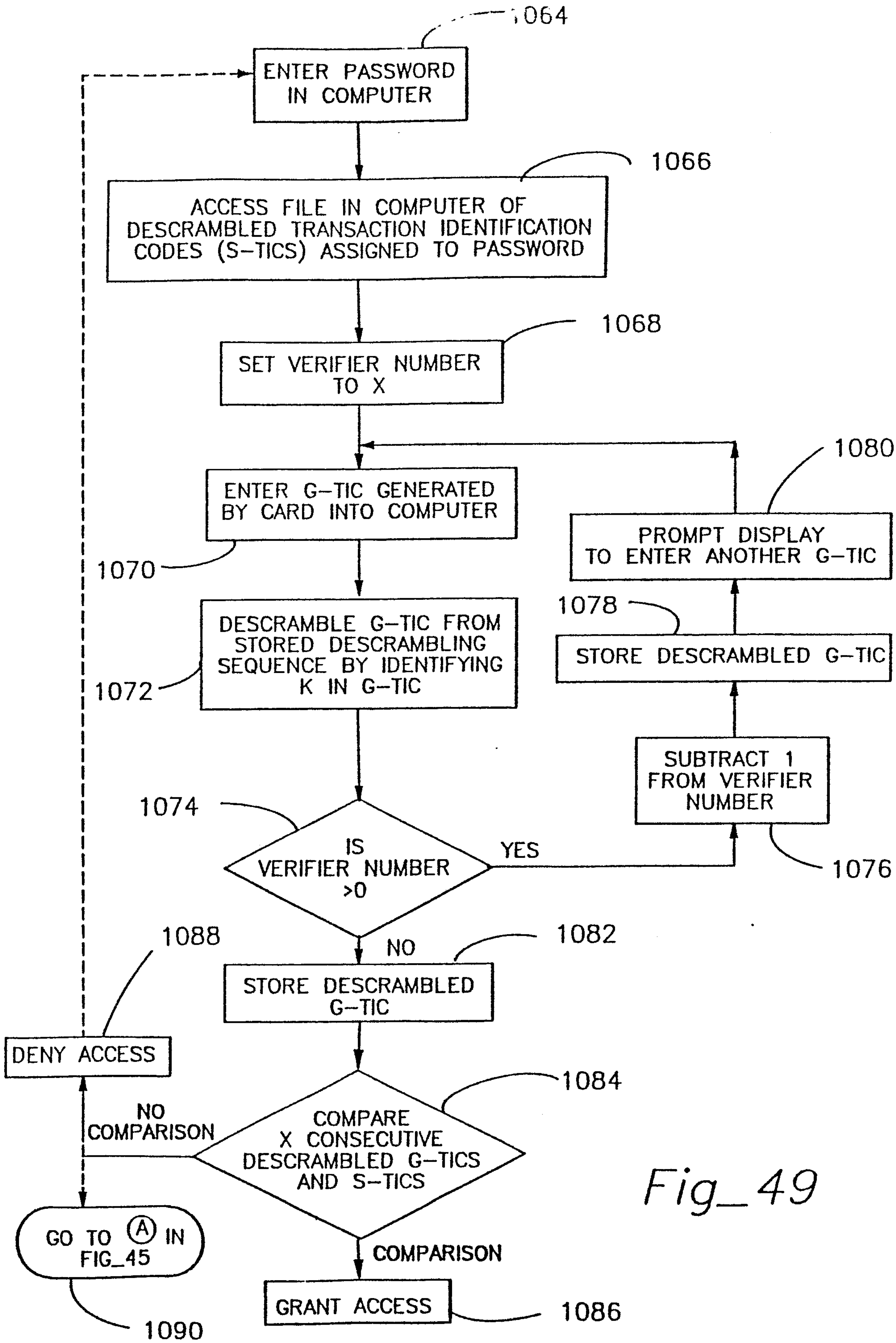
1064
ENTER PASSWORD IN COMPUTER
1066
ACCESS FILE IN COMPUTER OF DESCRAMBLED TRANSACTION IDENTIFICATION CODES (S-TICS) ASSIGNED TO PASSWORD
1068
SET VERIFIER NUMBER TO X
1080
ENTER G-TIC GENERATED BY CARD INTO COMPUTER
PROMPT DISPLAY TO ENTER ANOTHER G-TIC
1070
1078
DESCRAMBLE G-TIC FROM STORED DESCRAMBLING SEQUENCE BY IDENTIFYING K IN G-TIC
STORE DESCRAMBLED G-TIC
1072
SUBTRACT 1 FROM VERIFIER NUMBER
1074
IS VERIFIER NUMBER >0
YES
1076
1088
NO
1082
STORE DESCRAMBLED G-TIC
DENY ACCESS
1084
NO COMPARISON
COMPARE X CONSECUTIVE DESCRAMBLED G-TICS AND S-TICS
GO TO (A) IN FIG_45
COMPARISON
GRANT ACCESS
1086
1090

Fig_49

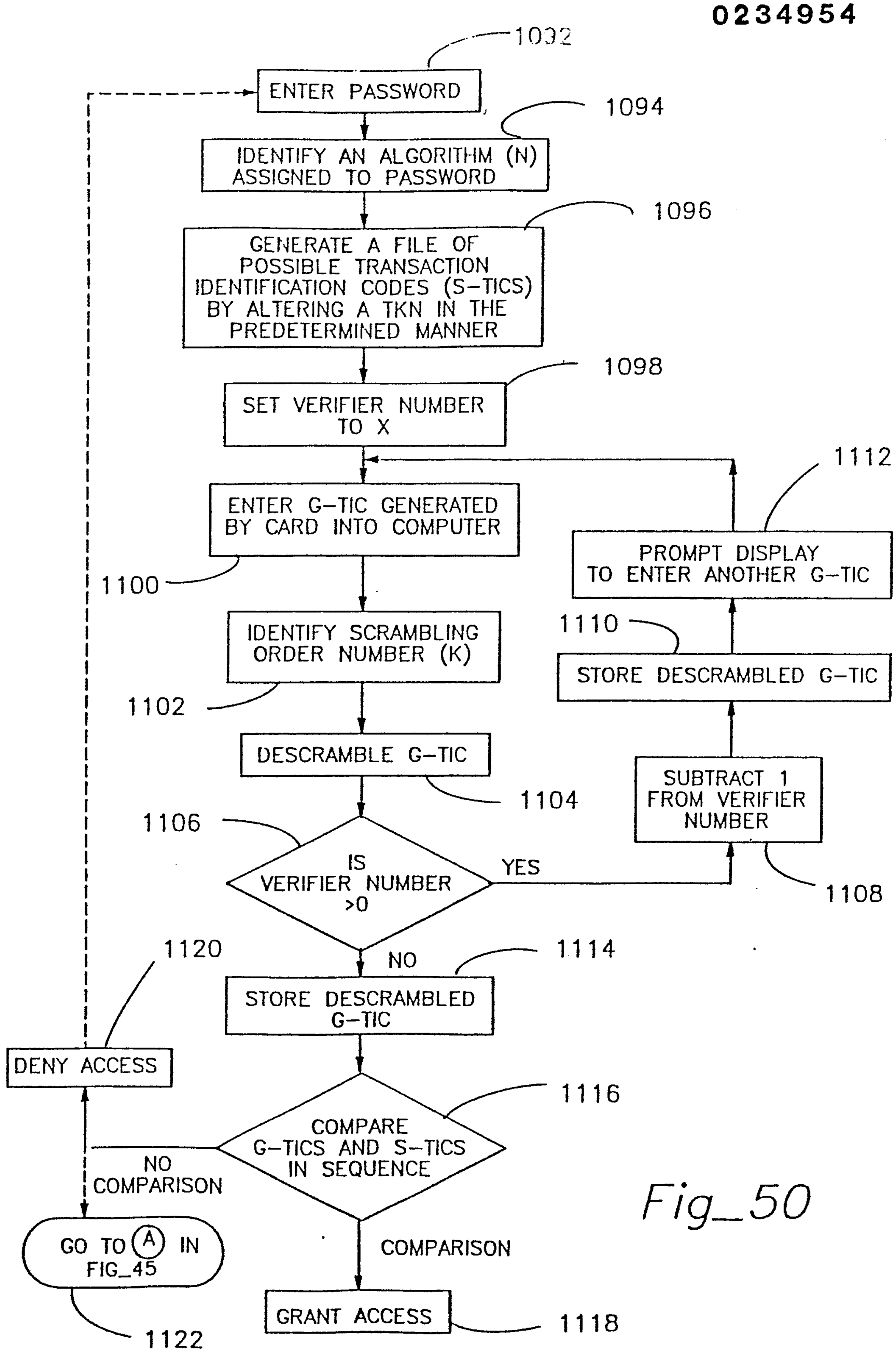
1092
ENTER PASSWORD
1094
IDENTIFY AN ALGORITHM (N) ASSIGNED TO PASSWORD
1096
GENERATE A FILE OF POSSIBLE TRANSACTION IDENTIFICATION CODES (S-TICS) BY ALTERING A TKN IN THE PREDETERMINED MANNER
1098
SET VERIFIER NUMBER TO X
1112
ENTER G-TIC GENERATED BY CARD INTO COMPUTER
1100
PROMPT DISPLAY TO ENTER ANOTHER G-TIC
1110
IDENTIFY SCRAMBLING ORDER NUMBER (K)
STORE DESCRAMBLED G-TIC
1102
DESCRAMBLE G-TIC
SUBTRACT 1 FROM VERIFIER NUMBER
1104
1106
IS VERIFIER NUMBER >0
YES
1108
1120
NO
1114
STORE DESCRAMBLED G-TIC
DENY ACCESS
1116
COMPARE G-TICS AND S-TICS IN SEQUENCE
NO COMPARISON
GO TO (A) IN FIG_45
COMPARISON
GRANT ACCESS
1122
1118

Fig_50

0234954

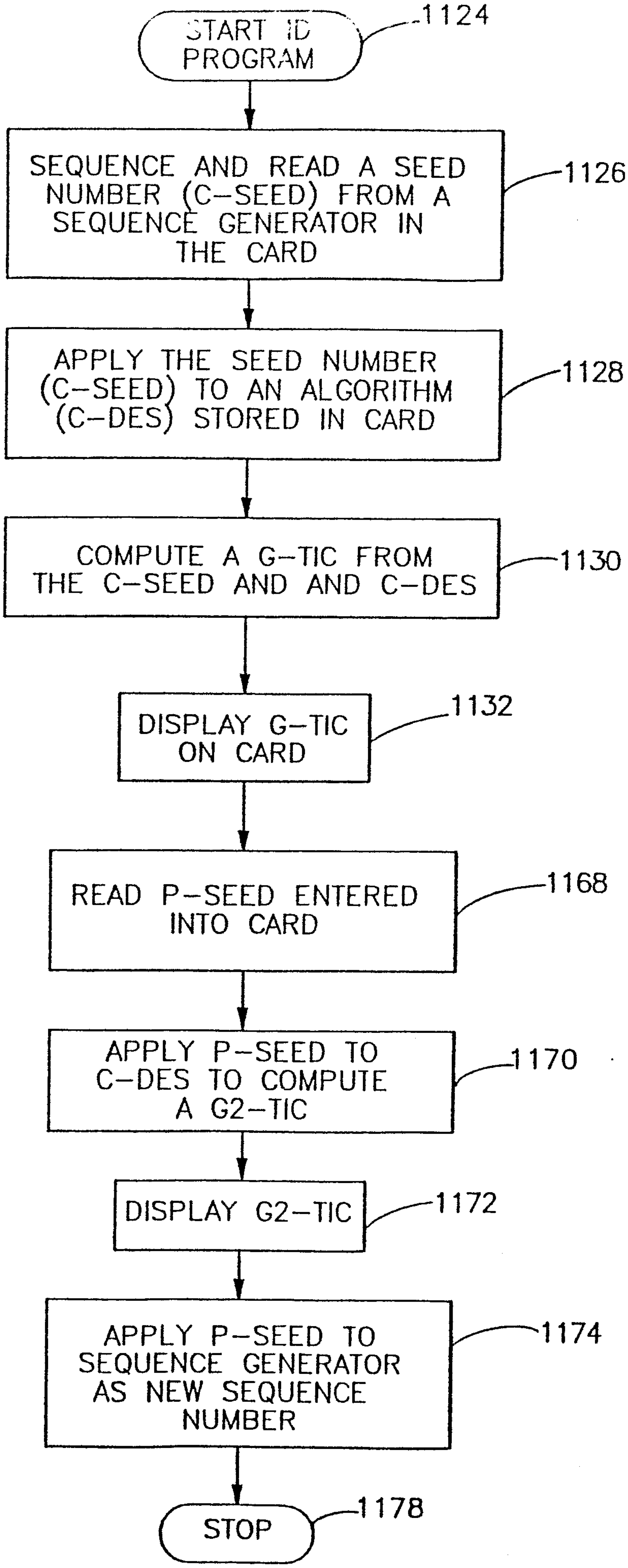


Fig_51

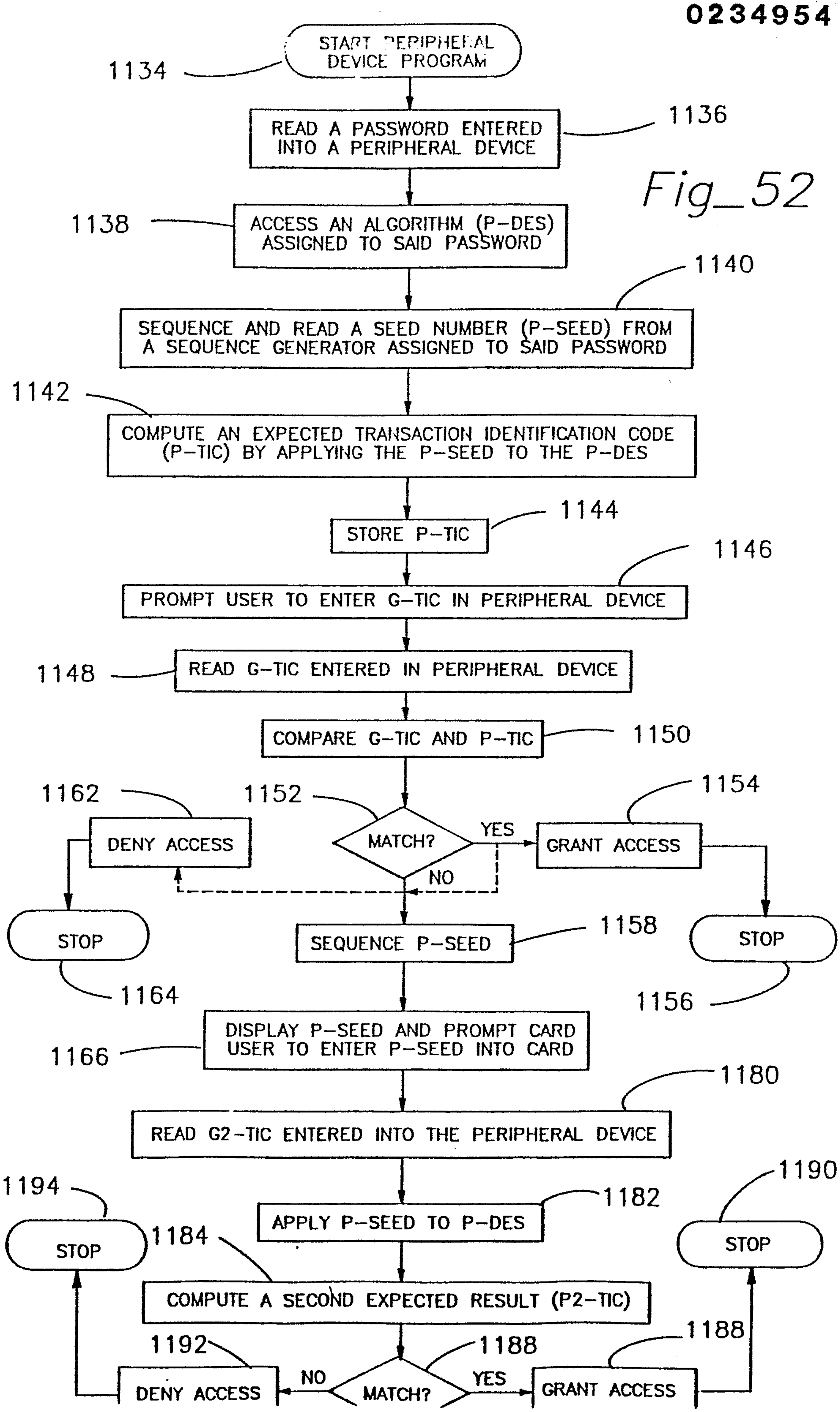
START PERIPHERAL DEVICE PROGRAM
1134
READ A PASSWORD ENTERED INTO A PERIPHERAL DEVICE
1136
ACCESS AN ALGORITHM (P-DES) ASSIGNED TO SAID PASSWORD
1138
SEQUENCE AND READ A SEED NUMBER (P-SEED) FROM A SEQUENCE GENERATOR ASSIGNED TO SAID PASSWORD
1140
COMPUTE AN EXPECTED TRANSACTION IDENTIFICATION CODE (P-TIC) BY APPLYING THE P-SEED TO THE P-DES
1142
STORE P-TIC
1144
PROMPT USER TO ENTER G-TIC IN PERIPHERAL DEVICE
1146
READ G-TIC ENTERED IN PERIPHERAL DEVICE
1148
COMPARE G-TIC AND P-TIC
1150
MATCH?
1152
YES
NO
GRANT ACCESS
1154
STOP
1156
DENY ACCESS
1162
STOP
1164
SEQUENCE P-SEED
1158
DISPLAY P-SEED AND PROMPT CARD USER TO ENTER P-SEED INTO CARD
1166
READ G2-TIC ENTERED INTO THE PERIPHERAL DEVICE
1180
APPLY P-SEED TO P-DES
1182
COMPUTE A SECOND EXPECTED RESULT (P2-TIC)
1184
MATCH?
1188
YES
GRANT ACCESS
1188
STOP
1190
NO
DENY ACCESS
1192
STOP
1194

Fig_52